# EUROPEAN PATENT APPLICATION

(11) **EP 4 818 918 A1**
(43) Date of publication of application: **07.10.2026**
(21) Application number: 26168901.2
(22) Date of filing: 30.03.2026
(51) Int. Cl.: G06F 15/173

(54) **USING A GPU TO PROCESS WORK REQUESTS ASSOCIATED WITH DATA FOR TRANSMISSION BY A NETWORK INTERFACE CONTROLLER**

(30) Priority: 31.03.2025 US 202519096309
(71) Applicant: Nvidia Corporation, Santa Clara, CA 95051 (US)
(72) Inventor: AGOSTINI, Elena, Santa Clara, 95051 (US)
(74) Representative: Mathys & Squire

(57) **Abstract**

Apparatuses, systems, methods, and techniques to process a work request (e.g., a Work Queue Element (WQE)) using graphics processing unit (GPU) resources. In at least one embodiment, the GPU detects one or more work requests to be processed, retreives the work request(s), and processes the work request(s) in parallel.

## Description

### TECHNICAL FIELD

At least one embodiment pertains to using a Graphics Processing Unit (GPU) to process work requests (e.g., work queue entries (WQEs)) associated with data for transmission by a network interface controller. For example, at least one embodiment, pertains to a processor or computing system that executes firmware that routes work requests to a GPU for processing according to various novel techniques described herein.

### BACKGROUND

A work request, such as a Work Queue Entry (WQE) (also referred to as a Work Queue Element), is a data structure used in computing systems to represent a unit of work that needs to be processed. For example, a work request may describe one or more operations to be performed by a network interface controller (NIC). The NIC includes hardware, such as a datapath accelerator (DPA), that the NIC uses to process work requests (e.g., WQEs). Unfortunately, the capabilities of the hardware of the NIC that processes work requests is limited, for example by the type of available processing, the number of processor cores, and/or an available amount of memory. Processing work requests (e.g., WQEs) can be improved.

### SUMMARY

The invention is defined by the claims. In order to illustrate the invention, aspects and embodiments which may or may not fall within the scope of the claims are described herein.

Apparatuses, systems, methods, and techniques to process a work request (e.g., a Work Queue Element (WQE)) using graphics processing unit (GPU) resources. In at least one embodiment, the GPU detects one or more work requests to be processed, retreives the work request(s), and processes the work request(s) in parallel.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates a block diagram illustrating a GPU application processing a WQE requesting that a network interface perform one or more operations, in accordance with at least one embodiment;
FIG. 2 illustrates a block diagram of an example system, in accordance with at least one embodiment;
FIG. 3 is a call flow diagram illustrating an example communication sequence between hardware components of the system of FIG. 2, according to at least one embodiment;
FIG. 4 illustrates a block diagram of an example system to generate and process WQE(s), in accordance with at least one embodiment;
FIG. 5 illustrates a block diagram of an example system to transfer data between client and server applications using GPU resources, in accordance with at least one embodiment;
FIG. 6 illustrates a block diagram of an example system processing unprocessed WQEs (UWQEs) 602-0 to 602-N, in accordance with at least one embodiment;
FIG. 7 illustrates a block diagram illustrating an example thread block processing one or more WQEs, in accordance with at least one embodiment;
FIG. 8 illustrates a block diagram of an example system to manage completion queue entries (CQEs) using GPU resources, in accordance with at least one embodiment;
FIG. 9 illustrates a block diagram of an example system to implement one or more network transport protocols to send and/or receive data using WQE(s), in accordance with at least one embodiment;
FIG. 10 illustrates a block diagram illustrating an example network transport protocol to process WQEs using GPU resources, in accordance with at least one embodiment;
FIG. 11 illustrates a block diagram of an example network transport protocol for receiving and processing data, in accordance with at least one embodiment;
FIG. 12 is a flowchart illustrating a method to be performed, for example, by the system of FIG. 2, in accordance with at least one embodiment;
FIG. 13 is a flowchart illustrating a method to be performed at least in part by a GPU, in accordance with at least one embodiment;
FIG. 14A illustrates an example of a system that includes a driver and/or runtime including one or more libraries to provide one or more application programming interfaces (APIs), in accordance with at least one embodiment;
FIG. 14B is block diagram illustrating an example of a processor and modules, according to at least one embodiment;
FIG. 15A illustrates logic, according to at least one embodiment;
FIG. 15B illustrates logic, according to at least one embodiment;
FIG. 16 illustrates an example data center system, according to at least one embodiment; and
FIG. 17 is a block diagram illustrating a computer system, according to at least one embodiment.

### DETAILED DESCRIPTION

In the following description, numerous specific details are set forth to provide a more thorough understanding of at least one embodiment. However, it will be apparent to one skilled in the art that the inventive concepts may be practiced without one or more of these specific details.

As mentioned herein, a work request (e.g., a WQE) is a data structure used to represent a unit of work that needs to be processed by at least one component of a computing system. A network interface (e.g., a NIC) may include hardware, such as a DPA, that the NIC may use to process work requests. But, such hardware may limit the processing capabilities of the network interface. For example, a DPA is a hardware component tailored to perform specific tasks, such as arithmetic operations, signal processing operations, cryptographic functions, and/or others. While a DPA may perform such tasks faster than a general-purpose processor (e.g., a central processing unit), the DPA includes a limited number of cores and/or a limited amount of memory, which may restrict the processing capabilities of the NIC. Further, the DPA can handle only a single work request (e.g., WQE) at a time.

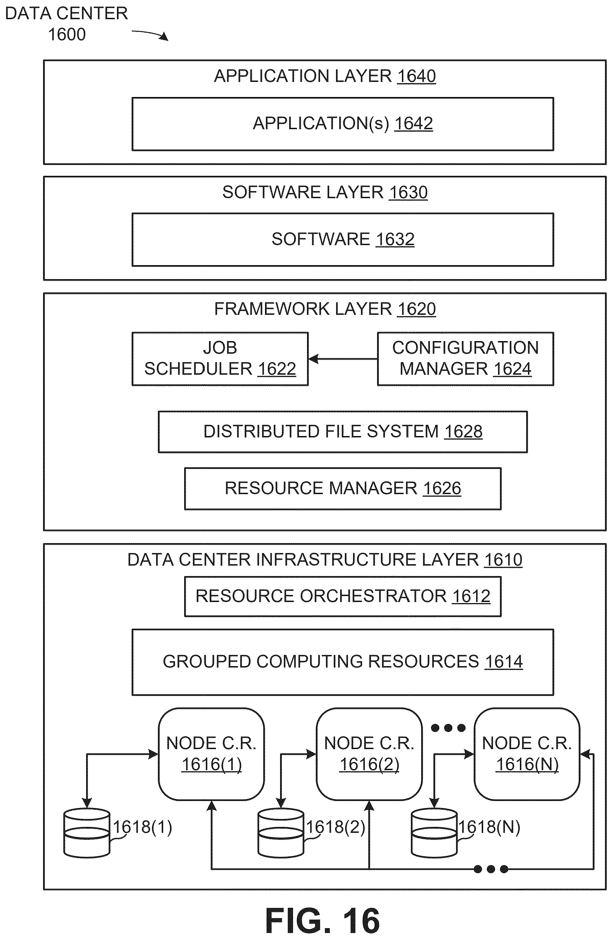

Instead, of using hardware local to the network interface (e.g., a DPA), one or more graphics processing units (GPU(s)) outside the network interface may be used to process one or more work requests (e.g., WQEs) that describe one or more operations to be performed by the network interface. Non-limiting examples of such operations may include sending data, receiving data, performing Remote Direct Memory Access (RDMA) read operation(s), performing RDMA write operation(s), performing Remote Direct Memory Intercept (RDMI) read operation(s), performing RDMI send operation(s), one or more data transfer tasks, and/or other network tasks. A work requests (e.g., WQE) may include information such as type(s) of operation(s) to be performed, memory address(es) involved, amount(s) of data involved, and/or other parameter values used to perform the operation(s). In at least one embodiment, the work request (e.g., WQE) specifies a send operation to transmit data to a second computing system in a network (e.g., within a data center, such as data center 1600 depicted in FIG. 16).

A computing system may include instructions that when performed by GPU(s) of the computing system cause the GPU(s) to process one or more work requests (e.g., WQE(s)) describing operation(s) to be performed by the network interface (e.g., the NIC) of the computing system. Such GPU(s) may be described as implementing one or more GPU datapaths. The instructions may implement at least one GPU application (e.g., at least one Compute Unified Device Architecture (CUDA) kernels) that processes WQE(s) describing operation(s) to be performed by the network interface.

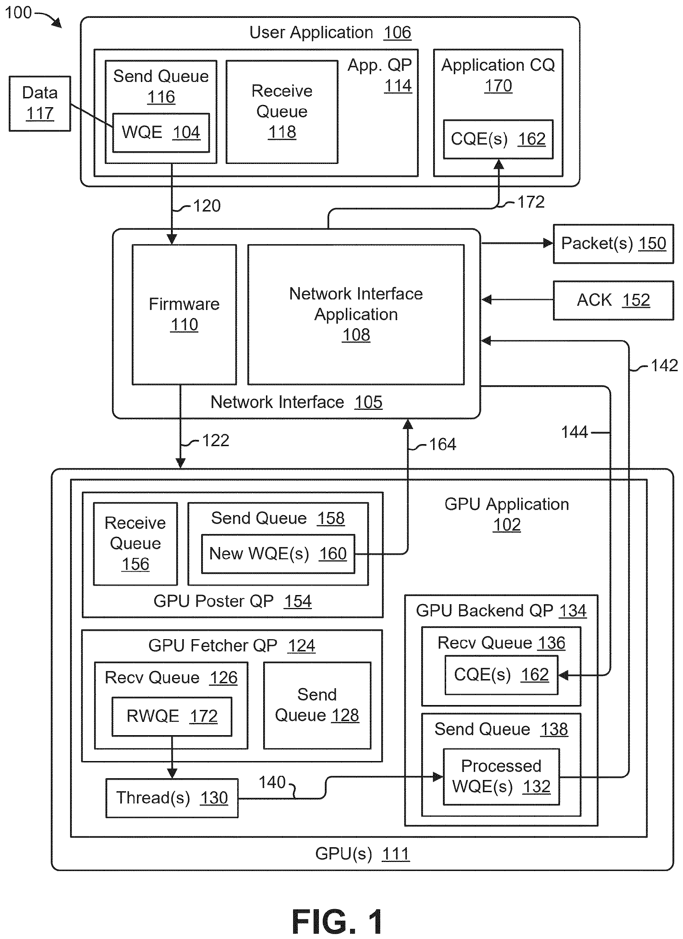

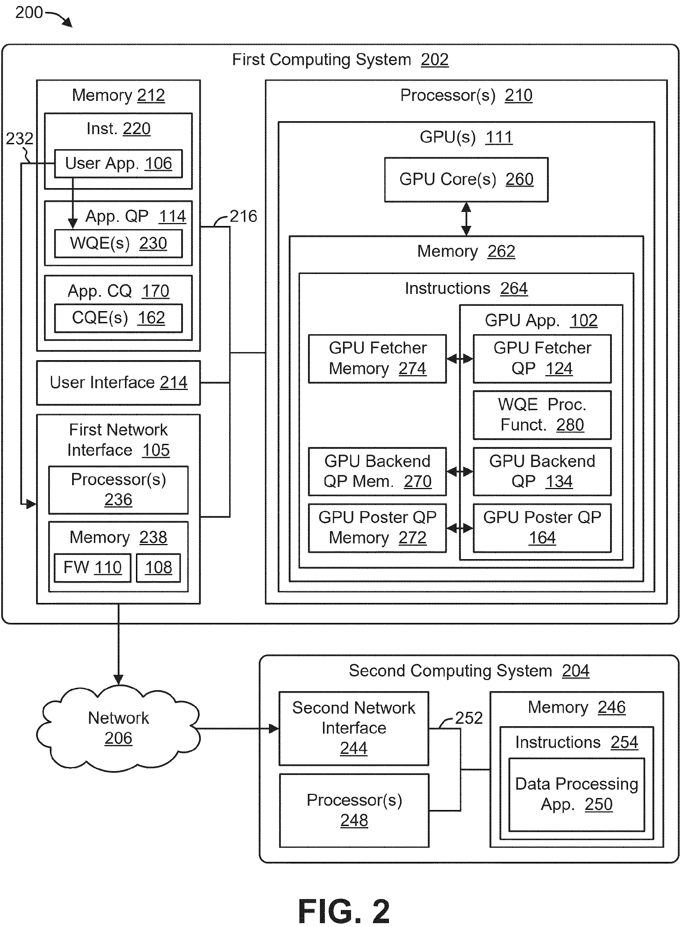

FIG. 1 illustrates a block diagram 100 illustrating a GPU application 102 processing a WQE 104 requesting that a network interface 105 perform one or more operations, in accordance with at least one embodiment. FIG. 1 illustrates one or more GPUs 111 that perform the GPU application 102, a client or user application 106, a network interface that performs a network interface application 108 and firmware 110. The GPU(s) 111, the network interface 105, and/or one or more processors, such as a central processing unit, that perform the user application 106 may all be components of a common computing system (e.g., a first computing system 202 illustrated in FIG. 2). The GPU application 102, the user application 106, the network interface application 108, and/or the firmware 110 may each be stored in a non-transitory machine readable medium as machine executable instructions that when executed by one or more processors implement the GPU application 102, the user application 106, the network interface application 108, and/or the firmware 110. The network interface application 108 and/or the firmware 110 may be performed by one or more processors of the network interface 105 (e.g., a NIC).

A work request (e.g., a WQE 104) may be created within the user application 106 performed by processor(s) of a first computing system. For ease of illustration, the work request will be described as being the WQE 104. The WQE 104 may be associated with data 117 (the WQE 104 may point to the data 117 and/or the data 117 may be attached to the WQE 104). By way of non-limiting examples, the WQE 104 may include an operation type (e.g., send or receive), a starting address of the data 117 (e.g., a data buffer) in memory, length of the data 117, a Local Key (L Key), a remote address (e.g., for RDMA Read/Write and/or RDMI Read/Send), a Remote Key (R_Key) (for RDMA Read/Write and/or RDMI Read/Send), Immediate Data, flags, Completion Queue (CQ) information, Scatter/Gather list (SGL), inline data, and/or other types of data. For example, the WQE 104 may identify one or more operations to be performed by the network interface 105 (e.g., a NIC) with respect to the data 117.

The user application 106 may store the WQE 104 in a queue pair (QP) 114. A QP is a software construct that manages memory (e.g., buffers) that stores the work requests (e.g., WQEs). Each QP includes a send queue associated with a send buffer, and a receive queue associated with a receive buffer. The send and receive queues are software constructs that manage the send and receive buffers, respectively. The user application 106 may generate the QP 114 and use a send queue 116 (and its associated send buffer) of the QP 114 to store one or more work requests to be processed by other components (e.g., hardware and/or software) of the computing system. The user application 106 may use the send queue 116 of the QP 114 to store the WQE 104 in the send buffer. For example, the user application 106 may use a RDMA write operation to write the WQE 104 to the send buffer, and/or may request that the send queue 116 perform the RDMA write operation to write the WQE 104 to the send buffer. The QP 114 will be referred to as an application QP 114 because of its association with the user application 106. While FIG. 1 depicts only the application QP 114, the user application 106 may generate one or more application QPs that the user application 106 may use to communicate WQEs to the network interface 105.

The user application 106 may send/or use the application QP 114 (e.g., the send queue 116) to send a notification 120 to (e.g., ring the doorbell of) the network interface 105 (e.g., a NIC) to alert the network interface 105 that the WQE 104 is available in the send buffer of the application QP 114 for processing. Ringing a doorbell of the network interface 105 (e.g., a NIC) refers to writing a value to a predetermined memory location (e.g., a register or memory address) of the network interface 105. The processor(s) of the network interface 105 perform(s) the firmware 110, which detects the doorbell ring and routes the WQE 104 to the GPU(s) 111 for processing. Consistent with other QPs described herein, the firmware 110 includes and/or implements an internal send queue (referred to as the firmware send queue) and a receive queue. The firmware 110 reads the WQE 104 and posts a send WQE (SWQE) to the firmware send queue upon detecting the doorbell ring. The SWQE carries the WQE 104 information intercepted by the firmware 110. For example, the firmware 110 may poll the predetermined memory location to determine when the doorbell has been rung, and may reset the value stored in the predetermined memory location after detecting that the doorbell has been rung. The notification 120 may identify the application QP 114 and indicate that the WQE 104 is awaiting processing. The firmware 110 executes the SWQE, which includes instructions to perform a send operation 122 (e.g., an RDMA send operation). The send operation 122 sends the WQE 104 to a memory address specified by a receive WQE (RWQE) 172 of the GPU(s) 111. The firmware 110 may be characterized as intercepting the notification 120, intended for the network interface 105, and routing the WQE 104 to the GPU(s) 111, instead of to hardware (e.g., the DPA) of the network interface 105. The GPU(s) 111 may be operating outside the network interface 105 (e.g., the NIC).

The GPU(s) 111 may execute at least one GPU application (e.g., at least one CUDA kernel) that processes WQEs. For example, the GPU(s) may execute a different GPU application for each application QP or may execute a single GPU application that processes WQEs in two or more application QPs. For ease of illustration, the GPU(s) 111 will be described as performing the GPU application 102 to process the WQE 104 waiting in the application send buffer of the application QP 114 associated with the user application 106. The GPU application 102 implements a QP 124 (e.g., using DOCA RDMI), referred to as a GPU fetcher QP 124, that is associated with the application QP 114. Consistent with other QPs described herein, the GPU fetcher QP 124 includes and/or implements a receive queue 126 and a send queue 128. The GPU application 102 prepares the receive queue 126 by posting one or more RWQEs (e.g., the RWQE 172) before the firmware 110 detects the notification 120. For example, the GPU(s) 111 may prepare the RWQE(s) after loading the GPU application 102. The one or more RWQE(s) include memory addresses indicating where to store incoming data in memory of the GPU(s) 111 (e.g., a GPU memory 262 illustrated in FIG. 2). For example, when the firmware 110 executes the send operation 122, the firmware 110 reads a first available RWQE, such as the RWQE 172, to obtain the memory address, allowing the firmware 110 to send the WQE 104 directly to the GPU memory 262 (see FIG. 2). After completing the send operation 122, the firmware 110 generates one or more completion queue entries (CQEs) and posts the one or more CQEs to the completion queue associated with the GPU fetcher QP 124, referred to as the GPU fetcher CQ (not shown). The CQEs posted to the GPU fetcher CQ may notify the GPU that one or more RWQEs have been used.

The GPU application 102 implements one or more threads 130 to process the WQE 104. A particular one of the thread(s) will be referred to as an initial or lead thread. The lead thread polls the GPU fetcher CQ(associated with the GPU fetcher QP 124 and/or the GPU fetcher memory to determine when new WQEs are available for processing. When the lead thread detects the WQE 104 is awaiting processing, the lead thread obtains the WQE 104 (e.g., using an atomic fetch operation) from the GPU memory. Then, the thread(s) 130 process(es) the WQE 104 and/or the data 117 associated with the WQE 104 to obtain one or more processed WQEs 132. Processing the WQE 104 may involve modifying the data 117 (e.g., compressing, encrypting, performing byte operations on the data, and/or performing one or more other operations on the data 117), and/or splitting the data 117 into smaller segments. If the data 117 is split, the thread(s) 130 may generate one or more new WQE(s) associated with the smaller segments. For example, the data 117 may include 16KB of data, the thread(s) 130 may split the data 117 into four 4 KB data segments, and generate a new WQE for each of the four 4 KB data segments (e.g., indicating the 4 KB data length). The thread(s) 130 may associate header information (e.g., to enable a particular transport protocol) with each of the processed WQE(s) 132.

The GPU application 102 implements at least one QP referred to as a GPU backend QP 134. Consistent with other QPs described herein, the GPU backend QP 134 includes and/or implements a receive queue 136 and a send queue 138. The GPU application 102 (e.g., the thread(s) 130) stores the processed WQE(s) 132 in the send buffer of the GPU backend QP 134 (represented by an arrow 140), and notifies the network interface 105 (represented by an arrow 142). The network interface 105 detects the notification, fetches the processed WQE(s) 132 from the send queue 138 of the GPU backend QP 134 (e.g., using a read operation), and performs the operation(s) indicated in the processed WQE(s) 132. For example, the network interface 105 may transmit the data 117 associated with the processed WQE(s) 132 as one or more packets 150 (e.g., that include header information associated with the processed WQE(s) 132 by the thread(s) 130) to another device, such as a different second computing system.

The network interface 105 may receive an acknowledgement (ACK) 152 from the second computing system in response to sending the data 117, for example, as the packet(s) 150. In response to receiving the ACK 152, the network interface 105 may generate one or more completion queue entries (CQEs) 162, and may store the CQE(s) 162 in the receive buffer (e.g., stored in GPU memory) of the GPU backend QP 134 (represented by an arrow 144). The lead thread implemented by the GPU application 102 may poll the receive queue 136 and/or the receive buffer of the GPU backend QP 134 to determine when the CQE(s) 162 is/are available for processing. When the lead thread detects the CQE(s) 162 is/are awaiting processing, the lead thread obtains the CQE(s) 162 from the GPU backend QP 134 and the thread(s) 130 process the CQE(s) 162. The GPU application 102 implements a QP referred to as a GPU poster QP 154. Consistent with other QPs described herein, the GPU poster QP 154 includes and/or implements a receive queue 156 and a send queue 158. After the thread(s) 130 has/have processed the CQE(s) 162, the thread(s) 130 generate(s) one or more new WQE(s) 160, store(s) the new WQE(s) 160 in a send buffer of the GPU poster QP 154 (e.g., using a write operation), and ring(s) the doorbell of the network interface 105 (represented by an arrow 164).

The network interface 105 detects the doorbell ring, reads the new WQE(s) 160 in the send queue 158 (e.g., using one or more read operations), and perform any operations identified by the new WQE(s) 160. The new WQE(s) 160 instruct the network interface 105 to obtain the CQE(s) 162 (e.g., from the GPU memory), and post them to the CQ 170. The network interface 105 performs these tasks by reading the CQE(s) 162 from the GPU memory, writing the CQE(s) 162 (e.g., using one or more RDMA write operations) to the CQ 170 (represented as an arrow 172), and, in at least some embodiments, ringing the doorbell of the user application 106 and/or the CQ 170 associated with the user application 106. After the CQE(s) is/are posted to the CQ 170 (e.g., to a buffer managed by the CQ 170), the user application 106 may detect the CQE(s) 162, which notify the user application 106 that the task(s) identified by the WQE 104 has/have been completed.

In at least one embodiment, the GPU(s) may include a greater number of cores and/or more memory than the hardware of the network interface (e.g., the DPA). In at least one embodiment, the GPU(s) may handle Programmable Remote Direct Memory Access (PRDMA) more effectively than the hardware of the network interface. For example, at least some GPUs can handle up to 32 WQEs originating from the same application QP at a time in parallel. GPU(s) can also perform more extensive WQE modification with minimal impact to overall performance. In at least one embodiment, GPU(s) may modify data more effectively in artificial intelligence (AI) applications because the data resides in GPU memory. This includes a wide range of data modifications besides modifications related to processing a WQE. In at least one embodiment, the WQE and associated data may be generated by a first (e.g., client) computing device in a computer network and transferred to a second (e.g., server) computing device in the computer network for further processing.

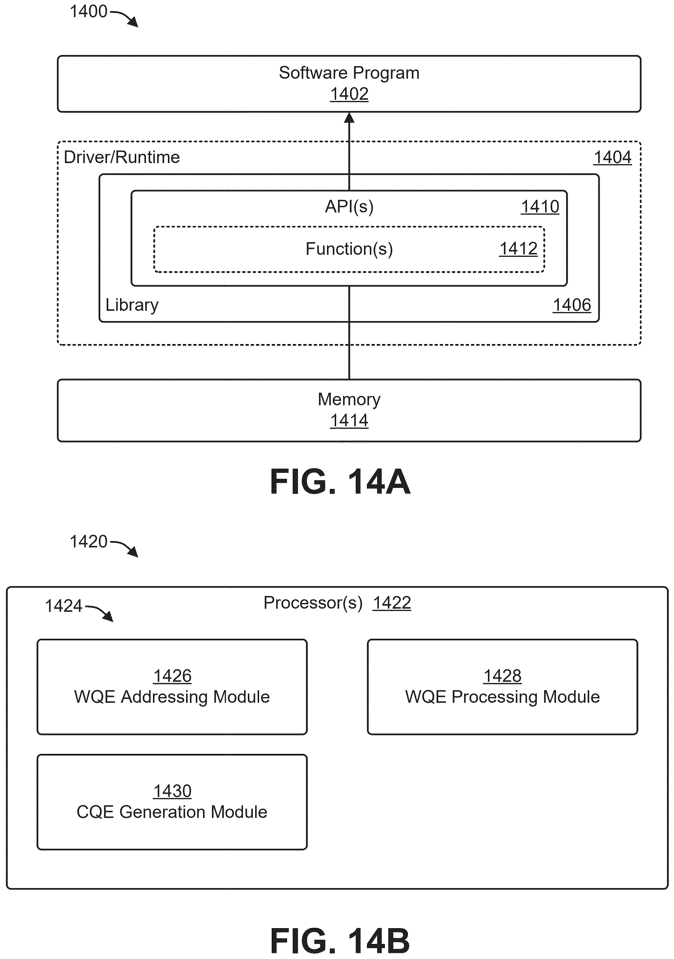

FIG. 2 illustrates a block diagram of an example system 200, in accordance with at least one embodiment. The system 200 may implement one or more GPU applications (e.g., one or more CUDA kernels) that implement a GPU datapath to process one or more WQEs. For example, the system 200 may implement one or more instances of the GPU application 102 (see FIG. 1). The system 200 may implement a data center (e.g., the data center 1600 depicted in FIG. 16), a cloud computing system, and/or the like. The system 200 may perform various tasks in various environments, such as factories, healthcare facilities (e.g., hospitals), offices, households, vehicles, robots, warehouses, and/or any suitable context or environment. In at least one embodiment, at least a portion of the system 200 is implemented using at least a portion of any system(s) depicted in and/or described with respect to FIGS. 14A-17. In at least one embodiment, at least a portion of the system 200 is used to implement at least a portion of any system(s) depicted in and/or described with respect to FIGS. 14A-17.

In at least one embodiment, the system 200 includes a first computing system 202 that communicates with at least one second computing system 204, for example, over a network 206. The first computing system 202 may include one or more processors 210, memory 212, a user interface 214, and the network interface 105 (referred to as the first network interface 105) connected to one another by one or more connections 216. The processor(s) 210 may be implemented, for example, using the GPU(s) 111, a main central processing unit ("CPU") complex, one or more microprocessors, one or more microcontrollers, one or more data processing units ("DPU(s)"), one or more arithmetic logic units ("ALU(s)"), one or more accelerators, one or more parallel processing units, one or more field programmable gate arrays (FPGA(s)), one or more application specific integrated circuits (ASIC(s)), one or more neural processing units (NPU(s)), and/or one or more other suitable devices. In at least one embodiment, at least a portion of the processor(s) 210 (e.g., at least a portion of the GPU(s) 111) is implemented using at least a portion of any system(s) depicted in and/or described with respect to FIGS. 14A-17. In at least one embodiment, at least a portion of the processor(s) 210 (e.g., at least a portion of the GPU(s) 111) is used to implement at least a portion of any system(s) depicted in and/or described with respect to FIGS. 14A-17.

The memory 212 (e.g., one or more non-transitory processor-readable medium) may store processor executable instructions 220 that when executed by the processor(s) 210 implement the client or user application 106, the GPU application 102, and/or other functionality such as that described herein. The processor(s) 210 may include one or more circuits that perform at least a portion of the instructions 220 stored in the memory 212. By way of additional non-limiting examples, the memory 212 (e.g., one or more non-transitory machine-readable medium) may be implemented, for example, using volatile memory (e.g., dynamic random-access memory ("DRAM")) and/or nonvolatile memory (e.g., a hard drive, a solid-state device ("SSD"), and/or the like). In at least one embodiment, at least a portion of the memory 212 is implemented using at least a portion of any system(s) depicted in and/or described with respect to FIGS. 14A-17. In at least one embodiment, at least a portion of the memory 212 is used to implement at least a portion of any system(s) depicted in and/or described with respect to FIGS. 14A-17.

The user application 106 may generate and/or use one or more application queue pairs (QPs), such as the application QP 114, and/or one or more application completion queues (CQs), such as the CQ 170, which may be stored, for example, by the user application 106 in the memory 212. In at least one embodiment, the application QP 114 and/or the application CQ 170 is/are stored in memory that is a component of or separate from the memory 212. The user application 106 may perform any functionality that involves generating one or more WQEs 230 (e.g., the WQE 104) identifying one or more tasks to be performed by another device, such as the first network interface 105. For example, the user application 106 may generate the WQE(s) 230 and store the WQE(s) 230 in the application QP 114 in memory (e.g., the memory 212) accessible to both the processor(s) 210 and the first network interface 105. Then, the user application 106 may send a notification 232 (e.g., the notification 120), such as a doorbell ring, to another device, such as the first network interface 105, indicating that the user application 106 has one or more tasks to be performed by that device. The device may be implemented in hardware and/or may include at least one virtual device. The device may fetch the WQE(s) 230 and perform the task(s). After completing the task(s) associated with one of the WQE(s) 230, the device may store one or more CQEs 336 (e.g., the CQE(s) 162) in the CQ 170 to notify the user application 106 that the task(s) identified in the WQE have been completed.

The user interface 214 may include a display device (not shown) that a user may use to view information generated and/or displayed by the first computing system 202. The user may use the user interface 214 to enter user input into the first computing system 202. The user interface 214 may communicate (e.g., wirelessly) with a user device (e.g., a cellular telephone, a laptop computer, a tablet, and/or the like) and may receive user input from the user device. For example, the user interface 214 may receive values from the user device input by a user into the user device, and/or may provide information to the user device (e.g., for display by the user device). In at least one embodiment, at least a portion of the user interface 214 is implemented using at least a portion of any system(s) depicted in and/or described with respect to FIGS. 14A-17. In at least one embodiment, at least a portion of the user interface 214 is used to implement at least a portion of any system(s) depicted in and/or described with respect to FIGS. 14A-17.

The first network interface 105 may include a network interface controller, a network interface card, an Ethernet card, a Local Area Network (LAN) card, a network adapter, a network card, a network interface device, a network controller, a wireless network adapter, a virtual network interface, and/or one or more other types of network interfaces. In at least one embodiment, at least a portion of the first network interface 105 is implemented using at least a portion of any system(s) depicted in and/or described with respect to FIGS. 14A-17. In at least one embodiment, at least a portion of the first network interface 105 is used to implement at least a portion of any system(s) depicted in and/or described with respect to FIGS. 14A-17.

The first network interface 105 includes one or more processors 236 connected to memory 238 by one or more connections (not shown) that may be implemented using any suitable connection(s), such as one or more of any of the connections described as being suitable for implementing the connection(s) 216. The memory 238 stores the network interface application 108 and/or the firmware 110. When performed by the processor(s) 236, the firmware 110 causes the processor(s) 236 to manage notifications of WQEs to be processed by the first network interface 105, such as doorbell rings, received by the first network interface 105. When such as a notification is received by the first network interface 105, the firmware 110 processes the notification. The firmware 110 may be characterized as intercepting notifications, such as doorbell rings, received by the first network interface 105. The first network interface 105 interacts with one or more other network interfaces (e.g., the second network interface 244) over the network 206 to process one or more WQEs.

The processor(s) 210, the user interface 214, the memory 212, and/or the first network interface 105 may communicate with one another over the connection(s) 216, which may be implemented using a bus, a Peripheral Component Interconnect Express ("PCIe") connection (or bus), and/or the like. In at least one embodiment, at least a portion of the connection(s) 216 is implemented using at least a portion of any system(s) depicted in and/or described with respect to FIGS. 14A-17. In at least one embodiment, at least a portion of the connection(s) 216 is used to implement at least a portion of any system(s) depicted in and/or described with respect to FIGS. 14A-17.

The first network interface 105 (e.g., a NIC) communicates with at least one another network interface (e.g., a NIC) (e.g., a second network interface 244 of the second computing system 204) over the network 206. The network 206 may be implemented using a LAN, a Wide Area Network, an internal network within a data center, the Internet, a Storage Area Network (SAN), a Data Center Interconnect (DCI), a Virtual Local Area Network (VLAN), a Cloud Network, a High-Performance Computing (HPC) Network, a Converged Network, and/or one or more other types of networks. In at least one embodiment, at least a portion of the network 206 is implemented using at least a portion of any system(s) depicted in and/or described with respect to FIGS. 14A-17. In at least one embodiment, at least a portion of the network 206 is used to implement at least a portion of any system(s) depicted in and/or described with respect to FIGS. 14A-17.

The second computing system 204 includes the second network interface 244, processor(s) 248 (e.g., a CPU, one or more accelerators, one or more GPUs, one or more FPGAs, one or more ASICs, one or more NPUs, and/or one or more other suitable devices), and/or memory 246 (e.g., main memory used by at least a portion of the processor(s) 248). The second network interface 244 may be implemented using device(s) suitable for implementing the first network interface 105. The second network interface 244 may include processor(s) like the processor(s) 236 that perform instructions stored in memory like the memory 238. For example, the second network interface 244 may perform firmware like the firmware 110 and/or a network interface application like the network interface application 108. In at least one embodiment, the second network interface 244 performs at least one instance of the firmware 110 and/or at least one instance of the network interface application 108. The processor(s) 248 may be implemented using device(s) suitable for implementing the processor(s) 210. For example, the processor(s) 248 may include GPU(s) associated with GPU memory that stores instructions that may include the GPU application 102. The memory 246 may be implemented using device(s) suitable for implementing the memory 212. The memory 246 (e.g., one or more non-transitory processor-readable medium) may store processor executable instructions 254 that when executed by the processor(s) 248 implement a data processing application 250. The data processing application 250 (e.g., performed by the processor(s) 248) may process data received from the first computing system 202 (e.g., via the first and second network interfaces 105 and 244). The second network interface 244, the memory 246, and/or the processor(s) 248 may communicate with one another over connection(s) 252, which may be implemented using a bus, a PCIe connection (or bus), and/or the like. The connection(s) 252 may be implemented using device(s) suitable for implementing the connection(s) 216. The second computing system 204 may include a user interface that includes any user interface components, such as one or more of those described herein as suitable for implementing the user interface 214. In at least one embodiment, the first computing system 202, and/or the second computing system 204 includes one or more other components, not shown for clarity, such as one or more backend QPs, one or more storage devices, one or more user interface components, and/or one or more networking components.

The GPU(s) 111 each include one or more GPU cores 260 and associated GPU memory 262. The GPU memory 262 (e.g., one or more non-transitory machine-readable medium) may store GPU core executable instructions 264 that when executed by the GPU core(s) 260 implement the GPU application 102, and/or other functionality such as that described herein. In at least one embodiment, the instructions 264 are stored in the GPU memory 262, which may be a component of or separate from the memory 212. In at least one embodiment, the instructions 264 are stored in the memory 212 (e.g., a portion of the main memory used by the GPU(s) 111).

The GPU application 102 (e.g., performed by the GPU core(s) 260) includes functionality to allocate one or more portions of the GPU memory 262 to buffers used by one or more QPs. For example, the GPU application 102 may allocate one or more portions of the GPU memory 262 to GPU fetcher memory 274 to be used by GPU fetcher QP 124 (e.g., to store the send and receive buffers), GPU backend QP memory 270 to be used by the GPU backend QP 134 (e.g., to store the send and receive buffers), and/or GPU poster QP memory 272 to be used by the GPU poster QP 154 (e.g., to store the send and receive buffers). The GPU application 102 (e.g., performed by the GPU core(s) 260) includes functionality to manage QP(s) and/or buffer(s) associated therewith. For example, the GPU fetcher QP 124 may store a RWQE (e.g., the RWQE 172 illustrated in FIG. 1), which indicates a memory address in the GPU fetcher memory 274. The RWQE communicates with the firmware 110, to instruct the firmware 110 to store the WQE(s) 230 at the specified address in the GPU fetcher memory 274. The GPU application 102 uses the GPU backend QP 134 to communicate one or more processed WQEs (e.g., the processed WQE(s) 132) to the first network interface 105. The GPU application 102 uses the GPU poster QP 154 to communicate one or more CQEs (e.g., the CQE(s) 162) with the first network interface 105.

The GPU application 102 (e.g., performed by the GPU core(s) 260) may include the GPU fetcher QP 124, WQE processing functionality 280, the GPU backend QP 134, and/or the GPU poster QP 154. The firmware 110 communicates with the GPU fetcher QP 124 over the connection(s) 216. The firmware 110 executes a send operation (e.g., the send operation 122) and reads a first RWQE (e.g., RWQE 172) from the GPU fetcher QP 124 to obtain the GPU fetcher 274 memory address. The firmware 110 sends the WQE(s) 230 to the GPU fetcher 274 memory address. The firmware 110 generates one or more CQEs and posts the one or more CQEs to a completion queue associated with the GPU fetcher QP 124 (referred to as the GPU fetcher completion queue), not shown for clarity. A CUDA kernel executing threads (e.g., threads 130) from the GPU core 260 continuously polls the GPU fetcher completion queue to detect the one or more CQEs. The one or more CQEs may be characterized as a notification signaling to the GPU application 102 that a WQE (e.g., WQE 230) is ready for processing at the memory address specified by the associated RWQE (e.g., RWQE 172). The threads (e.g., threads 130) and/or the WQE processing functionality 280 fetches (e.g., using an atomic fetch operation) the WQE(s) 230 from the GPU fetcher memory 274 to be processed by the WQE processing functionality 280. The WQE processing functionality 280 performs operations on the WQE(s) 230 themselves and/or data (e.g., the data 117) associated with the WQE(s) 230 (e.g., pointed to by or attached to the WQE(s) 230). For example, the WQE processing functionality 280 may modify, process, and/or split the data associated with the WQE(s) 230. By way of another non-limiting example, the WQE processing functionality 280 may packetize data associated with (e.g., pointed to by or attached to) the WQE(s) 230 for transport to the second network interface 244.

The GPU application 102 may include synchronization functionality to help ensure that all of the WQE(s) 230 are processed before performing one or more next steps, such as performing one or more additional instructions and/or preparing the processed WQE(s) (e.g., the processed WQE(s) 132) for transmission to the second computing system 204. By way of non-limiting examples, the GPU memory 262 (e.g., one or more non-transitory GPU core-readable medium) may be implemented using device(s) suitable for implementing the memory 212. By way of further non-limiting examples, the GPU core(s) 260 may be implemented using one or more CUDA cores, one or more stream processors, one or more tensor cores, one or more shader cores, one or more ray tracing cores, one or more artificial intelligence (AI) cores, and/or one or more other type of processing unit.

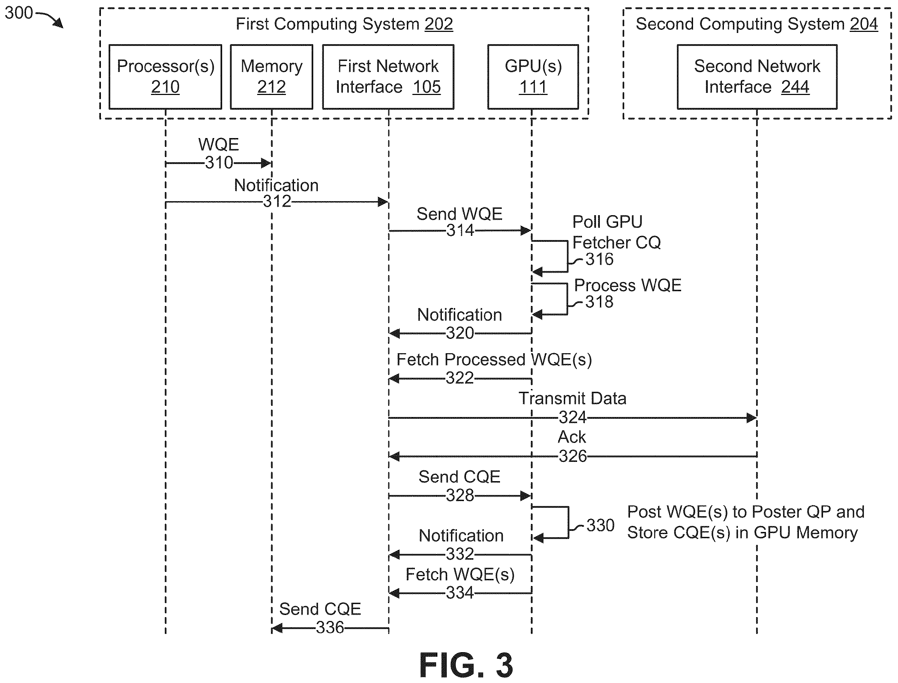

FIG. 3 is a call flow diagram illustrating an example communication sequence 300 between hardware components of the system 200, according to at least one embodiment. Referring to FIG. 3, the processor(s) 210 (e.g., as a result of performing the user application 106) store(s) a WQE 310 (e.g., the WQE 104) in the memory 212 (e.g., in the send buffer of the application QP 114). Then the processor(s) 210 (e.g., as a result of performing the user application 106) send(s) a notification 312 (e.g., the notification 120 illustrated in FIG. 1) to the first network interface 105 to notify (ring the doorbell of) the first network interface 105 that the WQE 310 is ready for processing. In at least one embodiment, the firmware 110 (see FIGS. 1 and 2) and/or other instructions being executed by the system 200 (e.g., the network interface application 108) receives and/or intercepts the notification 312. The firmware 110 may be a specialized software program embedded within the hardware of the first network interface 105. The firmware 110 may manage operations of the first network interface 105 and/or communication between the first computing system 202 and the network 206 (see FIG. 2). In at least one embodiment, the firmware 110 embedded within the hardware of the first network interface 105 sends 314 (e.g., executes the send operation 122) the WQE 310 to the GPU(s) 111 (e.g., redirects the WQE 310 to the GPU(s) 111, instead of and in place of hardware local to the first network interface 105, such as a DPA). For example, the firmware 110 and/or the network interface application 108 may cause the processor(s) 236 (see FIG. 2) performing the firmware 110 to send 314 the WQE 310.

In at least one embodiment, the GPU(s) 111 receive(s) the WQE 310 from the first network interface 105 (e.g., from the processor(s) 236 performing the firmware 110 and/or the network interface application 108). For example, the firmware 110 and/or the network interface application 108 may cause the processor(s) 236 to store the WQE 310 in a predetermined memory location communicated to the firmware by the GPU fetcher QP 124, for example, in the GPU fetcher memory 274. The firmware 110 sends a CQE to the GPU fetcher CQ, as described in connection with FIGS. 1 and 2, after storing the WQE 310 in the predetermined memory location. The GPU application 102 and/or another application executed by the GPU(s) 111 may poll the GPU fetcher CQ 316, as described in connection with FIGS. 1 and 2, to detect when the WQE 310 has been received. After the WQE 310 is received, if the GPU application 102 is not running, the GPU(s) 111 may launch the GPU application 102. After the WQE 310 is received, the GPU application 102 may cause the GPU(s) 111 to launch one or more threads (e.g., the thread(s) 130) that obtain the WQE 310 and/or process the WQE 310.

After the GPU detects a CQE (e.g., by polling GPU fetcher CQ 316), then the GPU(s) 111 process(es) and store(s) the processed WQE 310 (represented by an arrow 318). For example, the GPU application 102 may cause the GPU core(s) 260 performing the GPU application 102 to use the WQE processing functionality 280 to process the WQE 310. The GPU application 102 may cause the GPU core(s) 260 to store processed WQE(s) (e.g., the processed WQE(s) 132) in the GPU backend QP 134 (e.g., in the send buffer of the send queue 138) in the GPU memory 262.

In at least one embodiment, the GPU backend QP 134 stores the processed WQE(s) (e.g., the processed WQE(s) 132) for transmission to the second computing system 204. The processed WQE(s) are communicated between the first computing system 202 and the second computing system 204 through backend QPs via the network 206. The GPU backend QP 134 storage ensures that the first network interface 105 can retrieve and transmit data associated with the processed WQEs. The GPU(s) 111 send(s) a notification 320 to the first network interface 105 to notify the first network interface 105 that the processed WQE(s) (e.g., the processed WQE(s) 132) are ready for processing. For example, the GPU application 102 may cause the GPU core(s) 260 performing the GPU application 102 to send the notification 320 to the first network interface 105.

The first network interface 105 reads or fetches the processed WQE(s) (e.g., the processed WQE(s) 132) from the GPU backend QP 134 (represented by an arrow 322). For example, the firmware 110 and/or other instructions in the memory 238 may cause the processor(s) 236 performing the firmware 110 and/or the other instructions to fetch the processed WQE(s) from the GPU backend QP 134.

At this point, the first network interface 105 transmits data 324 associated with the processed WQE(s) (e.g., the processed WQE(s) 132) to the second network interface 244 associated with the second computing system 204. After the second network interface 244 receives the data 324, the second network interface 244 transmits one or more acknowledgements (ack(s)) 326 (e.g., the ACK 152) to the first network interface 105. For example, instructions stored in memory of the second network interface 244 may cause processor(s) of the second network interface 244 to send the ack(s) 326 to the first network interface 105. The processor(s) of the second network interface 244 may be implemented using any processor(s) suitable for implementing the processor(s) 236 of the first network interface 105. The memory of the second network interface 244 may be implemented using any memory suitable for implementing the memory 238 of the first network interface 105. Then, the data processing application 250 may cause the processor(s) 248 to process the data 324.

After receiving the ack(s) 326, the first network interface 105 generates one or more CQE(s) 328 (e.g., the CQE(s) 162) and sends the CQE(s) 328 to the GPU(s) 111 indicating that the data 324 associated with the processed WQE(s) has been successfully transmitted. For example, the firmware 110 and/or other instructions in the memory 238 (e.g., the network interface application 108) may cause the processor(s) 236 performing the firmware 110 and/or the other instructions to generate and send the CQE(s) 328 to the GPU(s) 111.

After receiving the CQE(s) 328, the GPU(s) 111 generate(s) new WQE(s) 330 and post(s) the WQE(s) 330 to the GPU poster QP 154. For example, the GPU application 102 may cause the GPU core(s) 260 performing the GPU application 102 to generate the WQE(s) 330 and post the WQE(s) 330 to the GPU poster QP 154. The WQE(s) 330 may instruct the first network interface 105 to send CQE(s) the application QP 114. These CQE(s) may be based at least in part on the CQE(s) 328. For example, the GPU(s) 111 may use the CQE(s) 328 and/or generate new CQE(s) in response to the WQE(s) 330. In at least one embodiment, in response to the WQE(s) 330, the GPU application 102 may cause the GPU core(s) 260 performing the GPU application 102 to use the CQE(s) 328 or generate new CQE(s). The CQE(s) are stored in the GPU memory 262, and the WQE(s) 330 may point to the CQE(s) and/or the CQE(s) may be attached to the WQE(s) 330.

Then, the GPU(s) 111 send(s) a notification 332 to the first network interface 105 to notify the first network interface 105 that the WQE(s) 330 are waiting in the GPU poster QP 154 and are ready for processing. For example, the GPU application 102 may cause the GPU core(s) 260 performing the GPU application 102 to send the notification 332 to the first network interface 105.

The first network interface 105 reads or fetches the WQE(s) 330 from the GPU poster QP 154 (represented by an arrow 334). For example, the firmware 110 and/or other instructions in the memory 238 (e.g., the network interface application 108) may cause the processor(s) 236 performing the firmware 110 and/or the other instructions (e.g., the network interface application 108) to fetch the WQE(s) 330 from the GPU poster QP 154.

In at least one embodiment, the first network interface 105 processes the WQE(s) 330, accesses the CQE(s) stored in the GPU memory 262, and writes the CQE(s) 336 to a CQ (e.g., the CQ 170) in the memory 212 of the first computing system 202. For example, the firmware 110 and/or other instructions in the memory 238 (e.g., the network interface application 108) may cause the processor(s) 236 performing the firmware 110 and/or the other instructions (e.g., the network interface application 108) to send the CQE(s) 336 to the CQ (e.g., the CQ 170). The first network interface 105 may use the CQE(s) stored in the GPU memory 262 as the CQE(s) 336, and/or may generate new CQE(s) based at least in part on the CQE(s) stored in the GPU memory 262. In at least one embodiment, the CQ 170 is stored in memory accessible to both the second computing system 204 and the first network interface 105. In at least one embodiment, the CQ 170 is stored in memory, which may be a component of or separate from the memory 212.

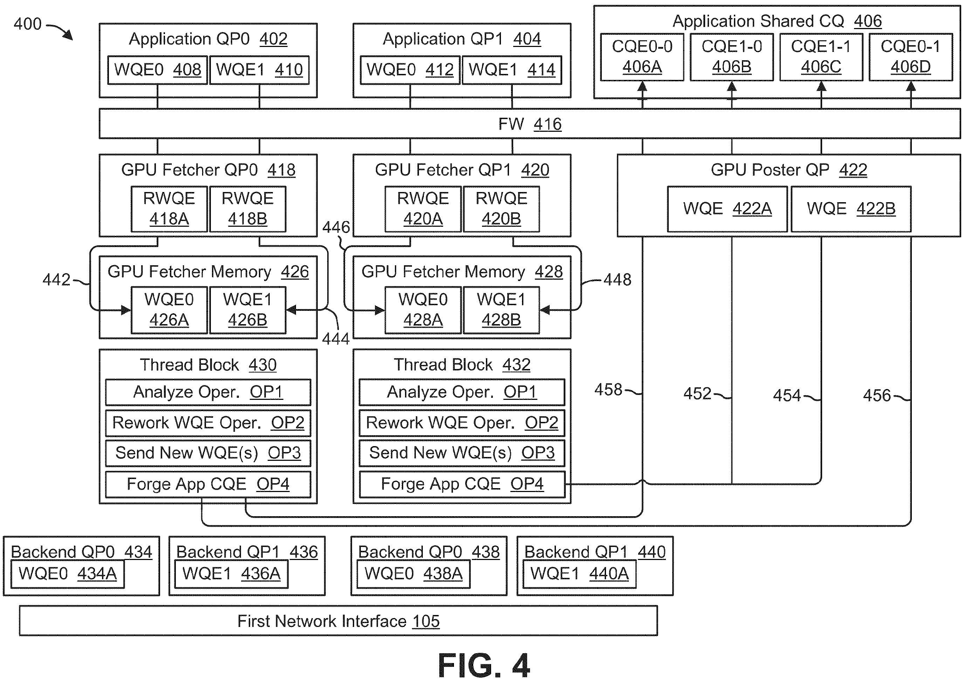

FIG. 4 illustrates a block diagram of an example system 400 to generate and process WQE(s), in accordance with at least one embodiment. The system 400 may be implemented using the system 200 (see FIG. 2). The system 400 may be used to implement the user application 106 (see FIGS. 1 and 2) to generate the WQE 104 and/or the WQE(s) 230 (see FIGS. 1 and 2). The user application 106 (see FIG. 1) generates one or more application QPs for each operation the user application 106 requests that the first network interface 105 perform, such as an application queue pair 0 (QP0) 402 and an application queue pair 1 (QP1) 404. In at least one embodiment, the one or more application QPs are implemented as queue(s) (e.g., the send and receive queues 116 and 118) that the user application 106 may use to store one or more WQEs requesting performance of tasks by the first network interface 105, such as sending data, receiving data, performing Remote Direct Memory Access (RDMA) read operation(s), performing RDMA write operation(s), and/or other network tasks. In at least one embodiment, WQE(s) generated by the system 400 is/are intercepted by the firmware (FW) 416 performed by the first network interface 105, and redirected to the GPU(s) 111 for processing instead of by the first network interface 105 (e.g., a NIC). The FW 416 may be implemented using the firmware 110 (see FIG. 1).

In at least one embodiment, illustrated in FIG. 4, the system 400 represents components of a client side application (e.g., the user application 106) running on a computing device, such as the first computing system 202 (see FIG. 2), that creates two QPs, the application QP0 402 and the application QP1 404, and posts one or more WQE(s), such as a WQEO 408 and a WQE1 410, in the application QP0 402, and a WQEO 412 and a WQE1414 in the application QP1 404. Notifications of one or more WQE(s) are intercepted by the FW 416 and processing the WQE(s) is redirected by the FW 416 to the GPU(s) 111 instead of to the first network interface 105.

In at least one embodiment, the GPU(s) 111 implement one or more instances of the GPU application 102 (e.g., one or more CUDA kernels) that each implement one or more instances of the GPU fetcher QP 124. For example, in FIG. 4, the GPU(s) 111 perform(s) a different instance of the GPU application 102 for each application QP generated by the user application 106, and each instance of the GPU application 102 implements an instance of the GPU fetcher QP 124. In the example illustrated, the user application 106 has generated the two QPs, the application QP0 402 and the application QP1 404, and the GPU(s) 111 is/are performing two corresponding instances of the GPU application 102 that have generated two instances of the GPU fetcher QP 124, namely a GPU fetcher QP0 418, and a GPU fetcher QP1 420. The GPU fetcher QP0 418 and the GPU fetcher QP1 420 are associated with a GPU fetcher memory 426, and a GPU fetcher memory 428, respectively. The instances of the GPU application 102 may implement a different thread block for each application QP generated by the user application 106. For example, in FIG. 4, the two instances of the GPU application 102 have implemented a thread block 430, and a thread block 432 for the application QP0 402 and the application QP1 404, respectively. The GPU(s) 111 may implement a GPU poster QP 422 (e.g., one or more CUDA kernels) associated with GPU poster QP memory (e.g., the GPU poster QP memory 272).

The instances of the GPU application 102 may implement a different instance of the GPU backend QP 134 for each of the WQE(s). For example, in FIG. 4, four WQEs are depicted, the WQEO 408, the WQE1 410, the WQEO 412 and the WQE1 414, and the instances of the GPU application 102 have generated four corresponding GPU backend QPs, namely a backend QP0, a backend QP1 436, a backend QP0 438, and a backend QP1 440, respectively. In at least one embodiment, the GPU(s) 111 perform(s) parallel processing of the WQE(s). In at least one embodiment, the GPU(s) 111 can process a minimum of 32 WQE(s) at a time. The GPU(s) 111 launches a warp (e.g., the thread block 430, and the thread block 432) including 32 threads (for each of the application QP(s)) capable of processing 32 WQE(s) (e.g., created by splitting a WQE). In at least one embodiment, the GPU(s) 111 can launch a single thread per WQE or launch a thread block with multiple threads to process multiple WQEs in parallel.

The firmware 416 intercepts one or more notifications (e.g., one or more doorbell rings) notifying the first network interface 105 that the WQEO 408, WQE1 410, WQEO 412, and WQE1 414 stored in the application QP0 402 and the application QP1 404 are available for processing, and redirects (shown are arrows 442, 444, 446, and 448) the WQEO 408, WQE1 410, WQEO 412, and WQE1414 to the GPU(s) 111 for processing. For example, the firmware 416 may execute an RDMA send operation (e.g., the send operation 122) to store the WQEO 408, WQE1 410, WQEO 412, and WQE1 414 in the GPU memory 262.. The GPU fetcher QP 124 implemented by the instance of the GPU application 102 associated with the particular application QP may be pre-prepared with RWQEs that include memory address(es) pointing to a location in the associated GPU fetcher memory 274. The firmware 416 executing the RDMA send operation retrieves the memory address from a first available RWQE to determine the location in the associated GPU fetcher memory 274 for storing the data associated with the WQEO 408, WQE1 410, WQEO 412, and WQE1 414 being sent in the RDMA send operation. In FIG. 4, the GPU application 102 associated with the application QP0 402 prepares the GPU fetcher QP0 418 with a RWQE 418A that includes a memory address in the GPU fetcher memory 426 and a RWQE 418B that includes a memory address in the GPU fetcher memory 426. The firmware 416 executing the RDMA send operation to send the WQEO 408 and the WQE1410 to the GPU(s) 111, retrieves the GPU fetcher memory address from RWQE 418A and RWQE 418B, respectively, and writes the WQEO 408 and WQE1410 from the application QP0 402, as WQE 426A and the WQE 426B in the GPU fetcher memory 426, respectively. In FIG. 4, the GPU application 102 associated with the application QP1 404 prepares the GPU fetcher QP1 420 with a RWQE 420A that includes a memory address in the GPU fetcher memory 428 and a RWQE 420B that includes a memory address in the GPU fetcher memory 428. The firmware 416 executing the RDMA send operation to send the WQEO 412 and the WQE1414 to the GPU(s) 111, retrieves the GPU fetcher memory address from RWQE 420A and RWQE 420B, respectively, and writes the WQEO 412 and WQE1414 from the application QP1 404, as WQE 428A and the WQE 428B in the GPU fetcher memory 428, respectively.

The GPU(s) 111 launch(es) the thread block 430 and the thread block 432 corresponding to the application QP0 402 and the application QP1 404, respectively, to process the WQE(s) fetched from the application QP0 402 and the application QP1 404. In at least one embodiment, the WQE processing functionality 280 may be implemented by one or more CUDA kernels, which may each be implemented by a different thread block (e.g., a warp). In FIG. 4, the WQE processing functionality 280 implemented by the instances of the GPU application 102 associated with the application QP0 402 and application QP1 404 may be implemented at least in part by the thread block 430 and the thread block 432, respectively. The thread block 430 processes WQE(s) stored in the GPU fetcher memory 426, and the thread block 432 processes WQE(s) stored in the GPU fetcher memory 428.

In at least one embodiment, the thread blocks 430 and 432 may each be characterized as performing four operations, an analyze operation OP1, a rework WQE and/or data operation OP2, a send new WQE(s) operation OP3, and a forge application CQE(s) operation OP4. The analyze operation OP1 analyzes the WQE(s) to determine which action(s) to perform. The rework WQE and/or data operation OP2 modifies and/or reworks the WQE(s) or associated data, if appropriate. The send new WQEs operation OP3 posts the newly processed WQE(s) or causes the newly processed WQE(s) to be posted to the appropriate GPU backend QP to be fetched by the first network interface 105. The forge application CQE(s) operation OP4 generates the CQE(s) and causes them to be posted (e.g., by generating the new WQE(s) 160) to the appropriate CQ (e.g., an application shared CQ 406) to signal the completion of tasks to the user application 106 (see FIG. 1). In at least one embodiment, the thread blocks 430 and 432 perform one or more other processing operations, not shown for clarity, such as one or more additional synchronization operations, one or more additional processing operations, and one or more modification operations.

In FIG. 4, the processed set of WQE(s) includes a WQEO 434A, WQE1 436A, WQEO 438A, and WQE1 440A. The processed set of WQE(s) are produced by the thread block 430 and 432. In at least on embodiment, the processed set of WQE(s) are stored in one or more GPU backend QPs. In at least one embodiment, the GPU backend QP(s) are QP(s) for sending data, such as the one or more WQEs, over a network, such as via the first network interface 105 (e.g., a NIC) on the client side. In FIG. 4, the GPU backend QP(s) include a backend QP0 434, backend QP1 436, backend QP0 438, and backend QP1 440. The GPU backend QP0 434 stores WQEO 434A, and the GPU backend QP1 436 stores WQE1 436A. The WQEO 434A and WQE1 436A are processed WQEs generated based at least in part on the WQEO 408 and WQE1 410 that originated from the application QP0 402. The GPU backend QP0 438 stores WQEO 438A and the GPU backend QP1 440 stores WQE1 440A. The WQEO 438A and WQE1 440A are processed WQEs generated based at least in part on the WQEO 412 and WQE1414 that originated from the application QP1 404. Before being stored in the backend QP0 434, the backend QP1 436, the backend QP0 438, and the backend QP1 440, the processed WQE(s) WQEO 434A, WQE1 436A, WQEO 438A, and WQE1 440A may await one or more synchronization tasks to ensure that processing of all of the WQE(s) has completed before the WQEs are made available to the first network interface 105 via the backend QP0 434, the backend QP1 436, the backend QP0 438, and the backend QP1 440.

After the first network interface 105 receives an acknowledgement from the second network interface 244 indicating the data associated with the processed WQE(s) (e.g., the processed WQE(s) 132) have been received, the first network interface 105 transmits one or more CQEs (e.g., the CQE(s) 162) to the GPU(s) 111. The GPU(s) 111 store(s) the CQE(s) in the GPU memory 262, and generate(s) (e.g., via the forge application CQE(s) operation OP4) one or more new WQE(s) corresponding to each original WQE (e.g., the WQEO 408, the WQE1 410, the WQEO 412, and the WQE1 414) and/or each processed WQE (e.g., the WQEO 434A, the WQE1 436A, the WQEO 438A, and the WQE1 440A) to notify the user application 106 (see FIG. 1) that the original WQE(s) have been processed. The GPU(s) 111 generate(s) one or more new WQEs 422A and 422B instructing the first network interface 105 to send the CQE(s) stored in the GPU memory 262 to the application CQ 170. The GPU(s) 111 post(s) the new WQE(s) 422A and 422B to the GPU poster QP 422. The GPU(s) 111 sends a notification to the first network interface 105 to notify the first network interface 105 that the WQE(s) 422A and 422B are waiting in the GPU poster QP 422.

In at least one embodiment, in response to this notification, the first network interface 105 performs the requests included in the WQE 422A and the WQE 422B, which includes posting (represented by arrows 456, 458, 452, and 454) the CQE(s) to an application shared CQ 406 (e.g., the application CQ 170). In FIG. 4, the CQE(s) posted include(s) CQE0-0 406A, CQE1-0 406B, CQE1-1 406C, and CQE0-1 406D. In at least one embodiment, the CQE0-0 406A, CQE1-0 406B, CQE1-1 406C, and CQE0-1 406D correspond to the processed WQEO 434A, WQEO 438A, WQE1 440A, and WQE1 436A, respectively. In at least one embodiment, the user application 106 (see FIG. 1) polls the application shared CQ 406 to detect that the CQE(s) have been posted to the application shared CQ 406.

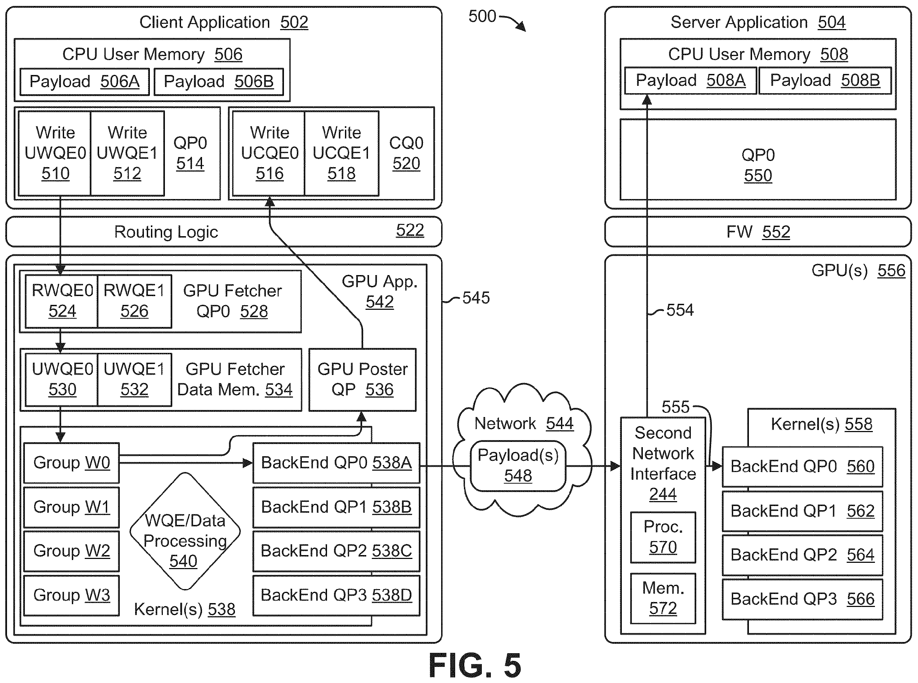

FIG. 5 illustrates a block diagram of an example system 500 to transfer data between client and server applications using GPU resources, in accordance with at least one embodiment. The system 500 may be implemented using the system 200 (see FIG. 2). In at least one embodiment, illustrated in FIG. 5, the system 500 includes a client application 502 that communicates with a server application 504 via a network 544. The network 544 may include and/or be implemented using the network 206 (see FIG. 2). The network 544 facilitates communication between the client application 502 and the server application 504, such as transmitting one or more payloads 548. In at least one embodiment, the client application 502 corresponds to the user application 106 as depicted in FIG. 1, and/or may correspond to and/or be used to generate the application QP0 402, the application QP1 404, and/or the application shared CQ 406 as depicted in FIG. 4. In at least one embodiment, the server application 504 corresponds to the data processing application 250 as depicted in FIG. 2.

Referring to FIG. 5, a client side of the system 500 includes the client application 502, routing logic 522 (e.g., firmware, software, and/or other types of instructions), and a GPU application 542. In at least one embodiment, the GPU application 542 corresponds to the GPU application 102 (see FIG. 1). The GPU application 542 is performed by a GPU 545. The GPU 545 may be implemented by at least one of the GPU(s) 111.

In at least one embodiment, the client application 502 accesses CPU user memory 506 that stores one or more payloads, such as payload 506A and payload 506B. The payload(s) are data associated with one or more WQEs to be processed by the first network interface 105 (see FIGS. 1-3), such as information to be sent and/or received as part of the network operations described by the WQE(s). In at least one embodiment, data included in the payload(s) (e.g., the payloads 506A and 506B) is generated by the first computing system 202 (see FIG. 2). In at least one embodiment, the client application 502 generates one or more unprocessed work queue entries (UWQE(s)) based on one or more operations to be performed with respect to the payload(s), such as sending the payload(s) to a different device (e.g., the second computing system 204 of FIG. 2). In FIG. 5, the client application 502 generates a set of UWQEs that includes UWQEO 510 and UWQE1 512. The client application 502 writes the set of UWQEs to an application QP, namely to QP0 514, to wait for processing. In at least one embodiment, the QP0 514 manages a send buffer in which the UWQE(s) await processing.

The client application 502 sends a notification to (e.g., rings the doorbell of) the first network interface 105 (see FIG. 1) that is intercepted by the routing logic 522 (e.g., implemented by the firmware 110). The routing logic 522 intercepts the notification from the client application 502 and diverts the UWQE(s) that has/have been created to the GPU 545 for processing. In at least one embodiment, the GPU 545 can execute one or more GPU applications (e.g., one or more instances of the GPU application 542) and/or functions, such as kernel(s) 538, to process the set of UWQEs. The kernel(s) 538 may schedule one or more groups of threads for processing one or more WQEs. In at least one embodiment, the kernel(s) 538 may schedule as many groups of threads as needed to process the WQE(s) in parallel. In at least one embodiment, a group of threads may be a set of 32 threads (e.g., a warp). In the example illustrated in FIG. 5, the kernel(s) 538 launch(es) a group W0, a group W1, a group W2, and a group W3. In at least one embodiment, each of the groups W0, W1, W2, and W3 processes a different WQE. In such embodiments, different warps can process WQEs from different QPs in parallel and, at the same time, a group of threads can process WQEs from the same QP or generate new WQEs based on a single original WQE in parallel.

The kernel(s) 538 associated with the QP0 514 has and/or establishes (e.g., using software, such as DOCA RDMI, and/or other functionality) a GPU fetcher QP0 528 to communicate with the routing logic 522 (e.g., to instruct routing logic 522 where to store WQEs from the QP0 514, for example, using one or more instances of a RWQ or RWQE operation). The kernel(s) 538 associated with the QP0 514 may associate GPU fetcher data memory 534 with the GPU fetcher QP0 528. The kernel(s) 538 associated with the QP0 514 may generate one or more GPU backend QPs (e.g., backend QP0 538A, backend QP1 538B, backend QP2 538C, and backend QP3 538D) associated with each UWQE to communicate one or more processed WQEs to the first network interface 105 (e.g., using a NIC QP). The kernel(s) 538 associated with the QP0 514 may generate a GPU poster QP 536 to communicate one or more CQEs with the first network interface 105.

The routing logic 522 (e.g., the firmware 110) executes an RDMA send operation (e.g., the send operation 122) to route the set of UWQEs to the GPU 545. The kernel(s) 538 post RWQEO 524 and RWQE1 526 to the GPU fetcher QP0 528 to tell the routing logic 522 where to store the set of UWQEs from the QP0 514. In at least one embodiment, the RWQEO operation 524 tells the routing logic 522 to store the UWQEO 510 as UWQEO 530 in the GPU fetcher data memory 534. In at least one embodiment, the RWQE1 operation 526 tells the routing logic 522 to store the UWQE1 512 as UWQE1 532 in the GPU fetcher data memory 534. In at least one embodiment, the routing logic 522 generates a CQE associated with RWQEO operation 524, indicating that the RWQEO operation 524 has been used and stores the associated CQE in a GPU fetcher CQ, not shown for clarity. In at least one embodiment, the routing logic 522 generates a CQE associated with RWQE1 operation 526, indicating that the RWQE1 operation 526 has been used and stores the associated CQE in the GPU fetcher CQ, not shown for clarity. The kernel(s) 538 polls the GPU fetcher CQ to detect the UWQEO 530 and the UWQE1 532 are ready for processing. In at least one embodiment, the GPU fetcher data memory 534 is accessible by the kernel(s) 538.

The kernel(s) 538 process(es) the set of UWQEs, such as the UWQEO 530 and the UWQE1 532, using one or more group, one or more blocks, and/or one or more warps. In at least one embodiment, the kernel(s) 538 includes WQE and/or data processing instructions 540 (e.g., the WQE processing functionality 280) to perform one or more operations on the set of UWQEs and/or data associated therewith. In at least one embodiment, the WQE and/or data processing instructions 540 may include instructions that when performed by the GPU 545 cause the GPU 545 to split one or more original WQEs into multiple WQEs each identifying a portion of the data identified by the original WQE(s), to modify data included in the original WQE(s) (e.g., compression, byte manipulation, etc.), attach additional information (e.g., a transport specific header) to the user data of the original WQE(s), for example, to generate transport specific packets, and/or perform other operations with respect to the original WQE(s) and/or data associated therewith. In at least one embodiment, the WQE and/or data processing instructions 540 include one or more other instructions, not shown for clarity, such as one or more additional synchronization instructions, one or more additional processing instructions, and one or more modification instructions.

In at least one embodiment, the kernel(s) 538 generate(s) one or more processed WQEs (e.g., the processed WQE(s) 132) after the one or more groups (e.g., the groups W0-W3), blocks, or warps complete the WQE and/or data processing instructions 540. In at least one embodiment, one or more synchronization barriers can be included in the kernel(s) 538 to help ensure that processing of all of the WQEs is completed before the processed WQE(s) produced by the groups W0-W3 are stored in the GPU backend QP(s), and the first network interface 105 (e.g., NIC) is notified that data is ready for transmission to a second computer (e.g., to the second computing system 204 illustrated in FIG. 2). In at least one embodiment, after one or more synchronization instructions are performed, the processed WQE(s) produced by each of the groups W0-W3, are ready to transfer to the first network interface 105 via the GPU backend QP(s), such as backend QP0 538A, backend QP1 538B, backend QP2 538C, and backend QP3 538D.

In at least one embodiment, the GPU backend QP(s) need not have a one-to-one correspondence with the processed WQE(s). For example, a first group, such as the group W0, may output one or more data transfer requests to a first GPU backend QP (e.g., the backend QP0 538A) with a number of processed WQEs (e.g., 5 WQEs) while a second group, such as group W1, may output a different number of processed WQEs (e.g., 12 WQEs) to a second GPU backend QP (e.g., the backend QP1 538B). In at least one embodiment, the first network interface 105 may send multiple processed WQEs stored in one of the GPU backend QP(s) serially and/or the groups can aggregate the processed WQEs in each set (e.g., concatenate them together) into a single WQE that is provided to the GPU backend QP(s). In at least one embodiment, transmissions from the GPU backend QP(s) for a particular application QP (e.g., the application QP0 514) can occur in parallel or in series. The parallel transmission process can be repeated for one or more other application QPs (e.g., an application QP-1, QP-2, ..., QP-N).

In at least one embodiment, upon forwarding one or more sets of processed WQEs generated by the groups W0-W3 to the GPU backend QP(s), the GPU 545 sends a CQE for each processed WQE to an appropriate CQ (e.g., CQ0 520) of the client application 502 to indicate that the processed WQE and/or its associated original WQE has been successfully processed. For example, in FIG. 5, the group W0 posts a new WQE in the GPU poster QP 536, which results in a CQE being posted to the CQ0 520 that indicates that the UWQEO 530 has been processed (e.g., data pointed to and/or associate with the UWQEO 530 has been sent to and acknowledged by the second network interface 244 of the second computing system 204). By way of a non-limiting example, the first network interface 105 and/or the GPU poster QP 536 may use a write operation to write the CQE(s) to the CQ0 520. In the embodiment illustrated, a first write operation 516 is used to write UCQE0 to the CQ0 520, and a second write operation 518 is used to write UCQE1 to the CQ0 520.

In at least one embodiment, the GPU poster QP 536 is associated with local poster QP memory in which a new WQE and/or a CQE for each fetched and successfully processed WQE may be stored. In at least one embodiment, the local poster QP memory associated with the GPU poster QP 536 is managed by the kernel(s) 538. In at least one embodiment, the kernel(s) 538 receives(s) a CQE from the first network interface 105 for each fetched and successfully processed WQE, and stores that CQE or new CQE generated based at least in part on that CQE in the local poster QP memory. In at least one embodiment, the GPU application 542 generates a CQE corresponding to each WQE to notify the client application 502 that the WQEs have been processed and sent by the first network interface 105 to a second computing device, such as the second computing system 204 (see FIG. 2).

As mentioned above, each of the group(s) (e.g., groups W0-W3) may add additional information, such as header information (e.g., a transport specific header), to each of the processed WQE(s). The header information may be used to implement a transportation protocol. Thus, the second computing device, such as the second computing system 204 (see FIG. 2), which receives the processed WQE(s), for example, as one or more packets (e.g., the packet(s) 150), includes one or more kernel(s) 558 (e.g., a component of the data processing application 250) performed by one or more server-side GPUs 556 to process the header information added to the processed WQE(s). In at least one embodiment, illustrated in FIG. 5, a server side application running on the second computing system 204 (see FIG. 2) includes the server application 504 (e.g., at least a portion of the data processing application 250), firmware (FW) 552, the server-side GPU(s) 556 (e.g., one or more of the processor(s) 248), and the second network interface 244. In at least one embodiment, the server-side GPU(s) 556 launch(es) the kernel(s) 558, which implement and/or access one or more backend QPs, such as a backend QP0 560, a backend QP1 562, a backend QP2 564, and a backend QP3 566. In at least one embodiment, the GPU(s) 556 include(s) one or more other components, not shown for clarity, such as a storage device, one or more networking components, one or more additional CPUs, and/or one or more additional PPUs.

In at least one embodiment, the server side receives data associated with the processed WQE(s) (e.g., the processed WQE(s) 132) via the network 544 as the payload(s) 548. In at least one embodiment, the payload(s) 548 is/are transmitted over the network 544 to the server application 504. The payload(s) 548 may include processed data associated with the processed WQE(s) (e.g., the processed WQE(s) 132). The second network interface 244 receives the payload(s) 548 (e.g., in one or more packets) and stores the payload(s) 548 in memory accessible to the GPU(s) 556, such as CPU user memory 508, GPU memory, and/or other GPU accessible memory. The second network interface 244 may include one or more processors 570, for example, like the processor(s) 236, and memory 572, for example, like the memory 238. The processor(s) 570 may perform instructions stored in the memory 572 that when performed, cause the processor(s) 570 to determine the payload(s) 548 are addressed to the server application 504, perform one or more write operations to write the payload(s) to the CPU user memory 508 (represented by an arrow 554), and perform one or more write operations to post WQE(s) to one or more GPU backend QPs of the GPU(s) 556 (represented by an arrow 555). For example, the processor(s) 570 may perform instructions stored in the memory 572 that when performed, cause the processor(s) 570 to generate one or more server-side WQEs, store the server-side WQE(s) in the GPU backend QP(s) of the GPU(s) 556, and store the header information in the GPU memory of the second computing system 204 in receive buffer(s) of the GPU backend QP(s). The second network interface 244 may store the server-side WQE(s) in the GPU backend QP(s), such as the GPU backend QP0 560, the GPU backend QP1 562, the GPU backend QP2 564, and the GPU backend QP3 566. The server-side WQE(s) may instruct the GPU(s) 556 to process the payload(s) 548 (stored as payloads 508A and 508B), process the header information, and/or send a communication (e.g., the ACK 152 or another message indicating less than all of the data was received and/or processed) to the first network interface 105 indicating whether the transmission was complete.

At least one of the kernel(s) 558 may poll the GPU backend QP(s) of the GPU(s) 556 (e.g., the receive buffer) to detect new WQEs. When WQE(s) are detected, the kernel(s) 558 may fetch the WQE(s) from the GPU backend QP(s) of the GPU(s) 556. Then, the kernel(s) 558 may process the WQE(s) and/or data in the payload(s) 548 stored in the memory accessible to the GPU(s) 556. For example, the kernel(s) 558 may implement the WQE processing functionality 280, and the kernel(s) 558 may use the WQE processing functionality 280 to process the WQE(s) and/or data in the payload(s) 548 stored in the memory accessible to the GPU(s) 556. The server-side WQE(s) may instruct the GPU(s) 556 to interpret the header information added to the data and included in the packet(s) (e.g., the packet(s) 150), and/or perform processing with respect to the payload(s) 548, such as ordering the data if, for example, one or more packets were received out of order, performing decompression, performing decryption, and/or the like. The kernel(s) 558 may generate a communication (e.g., an ACK or CQE(s)), and send the communication to the second network interface 244 to notify the second network interface 244 that the WQE(s) have been fetched and/or processed and to indicate if all of the data was received and/or successfully processed.

The kernel(s) 558 may generate one or more application WQEs, store these application WQE(s) in the GPU backend QP(s), and notify the second network interface 244. For example, the kernel(s) 558 may cause GPU core(s) of the GPU(s) 556 performing the kernel(s) 558 to generate the application WQE(s), post them in the GPU backend QP(s), and notify the second network interface 244. The application WQE(s) may instruct the second network interface 244 to post WQE(s) and/or other information to the QP0 550. The WQE(s) and/or other information posted to the QP0 550 may notify the server application 504 that the payloads 508A and 508B are ready for processing by the server application 504. The second network interface 244 may send a notification to the QP0 550 and/or the server application 504 to notify the server application 504 that the WQE(s) and/or other information has/have been posted in the QP0 550 and await processing.

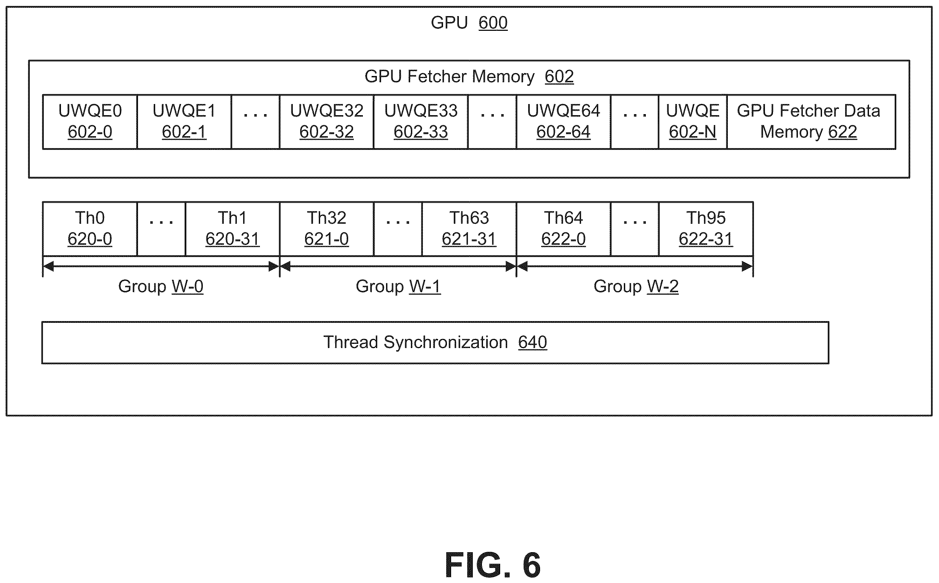

FIG. 6 illustrates a block diagram illustrating an example GPU 600 processing unprocessed WQEs (UWQEs) 602-0 to 602-N, in accordance with at least one embodiment. The GPU 600 may be implemented using one or more of the GPU(s) 111 of the system 200 (see FIG. 2) and/or at least one of the GPU 545 or the GPU(s) 556 of the system 500 (see FIG. 5). The GPU 600 may perform the GPU application 102, which implements the GPU fetcher QP 124. For example, the GPU 600 may implement a GPU fetcher memory 602 associated with the GPU fetcher QQ, such as the GPU fetcher QP0 528 (see FIG. 5), to receive one or more UWQEs from an application QP associated with the user application 106, such as the application QP0 514 (see FIG. 5), and/or prepare the UWQE(s) for processing. The GPU fetcher memory 602, is associated with GPU fetcher data memory 622. The GPU 600 may implement a kernel that includes one or more blocks of threads or groups (e.g., a group W-0, a group W-1, and a group W-2). By way of non-limiting examples, the groups W-0, W-1, and W-2 are illustrated as comprising 32 threads, however, it may be understood that the groups may include any number of threads. In at least one embodiment, the groups W-0, W-1, and W-2 perform one or more thread synchronization operations 640, and one or more other processing operations, not shown for clarity. The GPU fetcher memory 602 receives one or more WQEs, such as the UWQE 510 and UWQE 512 (see FIG. 5), sequentially, in an order in which the WQE(s) are placed in the application QP0 514 (see FIG. 5), as a result of an RDMA send operation executed by routing logic, such as routing logic 522 (see FIG. 5). In at least one embodiment, the UWQE(s) includes a UWQEO 602-0, UWQE1 602-1, UWQE32 602-32, UWQE33 602-33, UWQE64 602-64, and UWQE64 602-N. The UWQEs 602-0 to 602-N include information about one or more operations to be performed, such as sending or receiving data. The GPU fetcher data memory 622 stores the UQWEs 602-0 to 602-N for processing by the GPU 600.

In at least one embodiment, illustrated in FIG. 6, the WQE(s) is/are not restricted to a specific number of WQEs and may include any number of WQEs (e.g., up to 32) per warp. In at least one embodiment, the GPU 600 launches at least one kernel (e.g., the kernel(s) 538 illustrated in FIG. 5) to process the UWQEs 602-0 to 602-N. In at least one embodiment, the kernel may schedule as many blocks or warps as desired to process the UWQEs 602-0 to 602-N in parallel. The kernel launches the groups W-0, W-1, and W-2. In at least one embodiment, each of the groups W-0, W-1, and W-2 processes a different WQE. In at least one embodiment, the group W-0 may include up to 32 threads, such as threads 620-0 to 620-31. In at least one embodiment, group W-1 may include up to 32 threads, such as a threads 621-0 to 621-31. In at least one embodiment, group W-2 may include up to 32 threads, such as threads 722-0 to 722-31. In such embodiments, a group can process WQEs from different QP in parallel and, at the same time, a group of threads within a group can process WQEs from the same QP in parallel and/or portions of data associated with a single common WQE in parallel. For example, the group W-0 may process WQEs related to data transmission from a QP0 (e.g., the application QP0 402 (see FIG. 4)), while the group W-1 handles WQEs for RDMA write operations from a QP1 (e.g., the application QP1 404 illustrated in FIG. 4). In at least one embodiment, the groups(s) are not restricted to processing the WQE(s) from a specific QP. Instead, the groups(s) may process one or more WQEs from any of one or more QPs. For example, the GPU 600 can execute one or more kernels that can be associated with one or more different QPs. By way of another non-limiting example, the group W-0 may process WQEs from the QP1 while the group W-1 processes WQEs from a different QP2, etc.

The GPU 600 performs thread synchronization 640 for maintaining data integrity and ensuring correct execution order of one or more operations across the group(s). In at least one embodiment, the thread synchronization 640 uses one or more synchronization barriers to ensure that all threads in a group reach specific execution points before proceeding with a next operation. For example, an initial synchronization barrier ensures that an atomic fetch operation, where a lead thread of each group (e.g., the threads 620-0, 621-0, and 622-0 of the groups W-0, W-1, and W-2, respectively) retrieves an UWQE (e.g., the UWQEO 602-0, UWQE32 602-32, and UWQE64 602-64) from the GPU fetcher data memory 622, is completed by each group before proceeding with one or more subsequent operations, which prevents any thread from modifying shared data prematurely. In at least one embodiment, the atomic fetch operation is a type of operation that retrieves data from a memory location in a single, indivisible step. For example, performing the atomic fetch operation means that an operation cannot be interrupted or modified by other threads until the operation is complete, which means that the leader thread within a group of threads (e.g., a warp) can safely retrieve a WQE from the GPU fetcher data memory 622 without interference from one or more other threads within the same thread group (or another thread group).

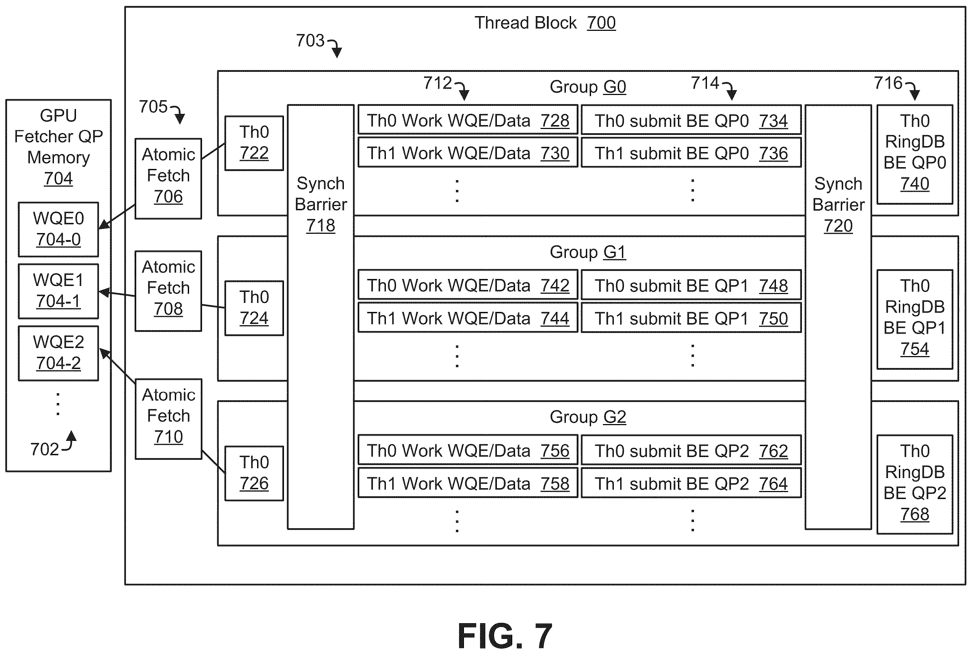

FIG. 7 illustrates a block diagram illustrating an example thread block 700 processing one or more WQEs 702, in accordance with at least one embodiment. The thread block 700 may be implemented by at least one of the GPU(s) 111 (see FIG. 1), the GPU 545 (see FIG. 5), at least one of the GPU(s) 556, the GPU 600 (see FIG. 6), and/or one or more other GPUs or PPUs, such as those described herein. In FIG. 7, a GPU fetcher QP (e.g., the GPU fetcher QP0 528) instructs routing logic (e.g., the routing logic 522) to store one or more WQEs from one or more QPs implemented by an application, such as the client application 502 (see FIG. 5), as a WQEO 704-0, a WQE1 704-1, and a WQE2 704-2, in GPU fetcher QP memory 704 (e.g., the GPU fetcher data memory 534 (see FIG. 5)) for processing. While FIG. 7 illustrates the WQE(s) 702 stored in the GPU fetcher QP memory 704 as including the WQEO 704-0, the WQE1 704-1, and the WQE2 704-2, the WQE(s) 702 may include any number of WQEs, including a single WQE.

At least one kernel, such as the kernel(s) 538 (see FIG. 5), polls a completion queue associated with the GPU fetcher QP (e.g., the GPU fetcher QP0 528) and detects the one or more WQEs 702 are ready for processing. The at least one kernel implements the thread block 700, which is divided into one or more groups 703 of threads, such as groups G0-G2. In at least one embodiment, each of the group(s) 703 of threads is responsible for processing the WQE(s) 702. In FIG. 7, each of the group(s) 703 is illustrated as including threads identified as "Th0" and "Th1." Each of the threads depicted in FIG. 7 is a member of only one of the groups(s) 703. In other words, while the threads are numbered identically in the groups(s) 703, the threads labeled "Th0" in different ones of the groups(s) 703 are different threads. Other similarly labeled threads (e.g., "Th1") in different ones of the groups(s) 703 are also different threads. Each of the group(s) 703 may include any number of threads (e.g., 32 threads), including a single thread. In each of the group(s) 703, the thread identified as "Th0" is considered a lead thread or an initial thread. By way of a non-limiting example, the initial threads in the groups G0-G2 have been identified using reference numerals 722, 724, and 726.

The thread block 700 coordinates execution of the group(s) 703 of threads for parallel processing while maintaining synchronization, such as by using one or more atomic fetch operations 705. In at least one embodiment, illustrated in FIG. 7, the atomic fetch operation(s) 705 include a different atomic fetch operation for each of the group(s) 703. For example, the groups G0-G2 may perform atomic fetch operations 706, 708, and 710, respectively. In at least one embodiment, the initial thread (Th0) 722, 724, and 726 within each of the groups G0-G2, respectively, performs the atomic fetch operations 706, 708, and 710, respectively, to retrieve at least one of the WQE(s) 702 from the GPU fetcher QP memory 704. In at least one embodiment, the atomic fetch operations 706, 708, and 710 may each perform one or more other operations before retrieving one or more of the WQE(s) 702, such as initializing memory buffers, setting up data structures for efficient access, and/or verifying the integrity of the retrieved WQE(s). These other operations may help ensure that one or more of the fetched WQE(s) is/are ready for processing and that data associated with the fetched WQE(s) is consistent and accessible to all of the threads within the group that is processing the fetched WQE(s). A synchronization (e.g., synch) barrier 718 allows the fetched WQE(s) to pass the synch barrier 718 after confirming the atomic fetch operations 706, 708, and 710 are complete.

Then, the threads in each of the group(s) 703 process those WQE(s) fetched into the group by the initial thread (Th0) (e.g., by performing one of the atomic fetch operation(s) 705). This processing includes performing one or more operations on each of the fetched WQE(s) itself and/or on data associated with the fetched WQE(s). For example, each of the group(s) 703 may perform at least one instance of a first operation 712 with respect to each of the WQE(s) 702 fetched by the group. The first operation 712 may involve modifying data associated with the fetched WQE(s), attaching headers, preparing the data for transmission, and/or performing one or more other operations. The threads (e.g., threads Th0, Th1, etc.) of each of the group(s) 703 may perform instances of the first operation 712 in parallel. The threads of different ones of the group(s) 703 may perform instances of the first operation 712 in parallel. By way of non-limiting examples, in FIG. 7, two of the threads (e.g., the threads Th0 and Th1) of the group G0 are depicted performing instances of the first operation 712 in parallel as a first operation 728 (labeled "Th0 work WQE/data"), and a first operation 730 (labeled "Th1 work WQE/data"), but may include one or more additional threads performing one or more additional instances of the first operation 712 in parallel. By way of other non-limiting examples, in FIG. 7, two of the threads (e.g., the threads Th0 and Th1) of the group G1 are depicted performing instances of the first operation 712 in parallel as a first operation 742 (labeled "Th0 work WQE/data"), and a first operation 744 (labeled "Th1 work WQE/data"), but may include one or more additional threads performing one or more additional instances of the first operation 712 in parallel. By way of yet other non-limiting examples, in FIG. 7, two of the threads (e.g., the threads Th0 and Th1) of the group G2 are depicted performing instances of the first operation 712 in parallel as a first operation 756 (labeled "Th0 work WQE/data"), and a first operation 758 (labeled "Th1 work WQE/data"), but may include one or more additional threads performing one or more additional instances of the first operation 712 in parallel. The instances of the first operation 712 performed by the group(s) 703 (e.g., the first operations 728, 730, 742, 744, 756, and 758) may be performed in parallel with one another.

After the threads of the group(s) 703 have completed the first operation 712, the threads of the group(s) 703 perform a second operation 714 that submits the WQE(s) processed by the first operation 712 to one or more GPU backend QPs. The threads (e.g., threads Th0, Th1, etc.) of each of the group(s) 703 may perform instances of the second operation 714 in parallel. The threads of different ones of the group(s) 703 may perform instances of the second operation 714 in parallel. By way of non-limiting examples, in FIG. 7, two of the threads (e.g., the threads Th0 and Th1) of the group G0 are depicted performing instances of the second operation 714 in parallel as a second operation 734 (labeled "Th0 submit BE QP0"), and a second operation 736 (labeled "Th1 submit BE QP0"), but may include one or more additional threads performing one or more additional instances of the second operation 714 in parallel. By way of other non-limiting examples, in FIG. 7, two of the threads (e.g., the threads Th0 and Th1) of the group G1 are depicted performing instances of the second operation 714 in parallel as a second operation 748 (labeled "Th0 submit BE QP1"), and a second operation 750 (labeled "Th1 submit BE QP1"), but may include one or more additional threads performing one or more additional instances of the second operation 714 in parallel. By way of yet other non-limiting examples, in FIG. 7, two of the threads (e.g., the threads Th0 and Th1) of the group G2 are depicted performing instances of the second operation 714 in parallel as a second operation 762 (labeled "Th0 submit BE QP2"), and a second operation 764 (labeled "Th1 submit BE QP2"), but may include one or more additional threads performing one or more additional instances of the second operation 714 in parallel. The instances of the second operation 714 performed by the group(s) 703 (e.g., the second operations 734, 736, 748, 750, 762, and 764) may be performed in parallel with one another.

A second synch barrier 720 checks to confirm that the processed WQE(s) have posted to the GPU backend QP(s) by the instances of the second operation 714 performed by the threads in the group(s) 703. In at least one embodiment, the second synch barrier 720 helps prevent corrupted data, sending partial data, and/or sending one or more WQEs not intended for transmission. In at least one embodiment, the second synch barrier 720 allows the WQE(s) posted in the GPU backend QP(s) to be sent to a second computing device, such as the second computing system 204 (see FIG. 2).

The initial thread (Th0) of each of the group(s) 703 performs a third operation 716 that notifies (e.g., rings the doorbell of) a NIC (e.g., the first network interface 105) that data is ready for transmission. The third operation 716 may involve the initial thread (Th0) updating a register value of a doorbell register associated with the NIC, and the NIC detecting (e.g., using polling) that the doorbell register has been updated to indicate that WQE(s) are awaiting processing by the NIC. By way of non-limiting examples, in FIG. 7, the initial thread (Th0) 722 of the group G0 is depicted performing an instance of the third operation 716 as a third operation 740 (labeled "Th0 ringDB BE QP0"), the initial thread (Th0) 724 of the group G1 is depicted performing an instance of the third operation 716 as a third operation 754 (labeled "Th0 ringDB BE QP1"), and the initial thread (Th0) 726 of the group G2 is depicted performing an instance of the third operation 716 as a third operation 768 (labeled "Th0 ringDB BE QP2"). The instances of the third operation 716 performed by the group(s) 703 (e.g., the third operations 740, 754, and 768) may be performed in parallel with one another.

In at least one embodiment, each of the thread group(s) 703, such as the groups G0-G2, may use any of the GPU backend QP(s), allowing for flexible resource utilization. For example, if the GPU(s) have implemented the following three backend QPs, BE QP0, BE QP1, and BE QP2, the group G2 can submit a processed WQE to the BE QP2, the BE QP1, and/or the BE QP0. In other words, in at least one embodiment, each of the GPU backend QP(s) does not have to match or correspond to a particular one of the thread group(s) 703.

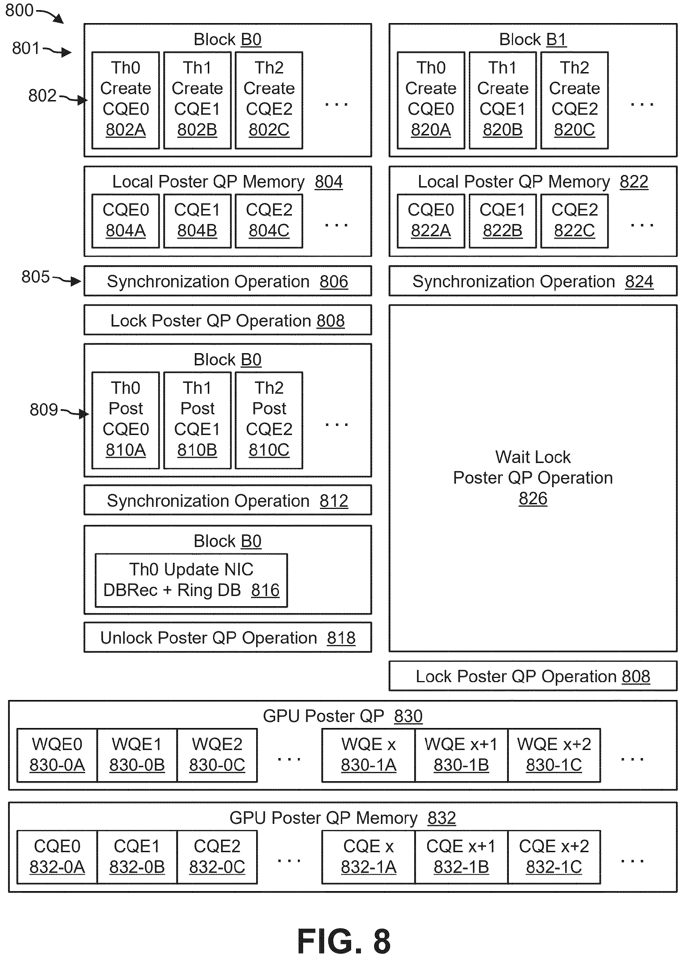

FIG. 8 illustrates a block diagram of an example system 800 to manage completion queue entries (CQEs) using GPU resources, in accordance with at least one embodiment. The system 800 may be implemented using the system 100 (see FIG. 1), the system 200 (see FIG. 2), the system 300 (see FIG. 3), the system 400 (see FIG. 4), and/or the system 500 (see FIG. 5)). The system 800 may be used to generate one or more CQEs, such as the CQE(s) 162 (see FIGS. 1 and 2), the CQEs 406A-406D (see FIG. 4), and/or one or more CQEs stored in the CQ0 520 (see FIG. 5). The system 800 includes one or more thread blocks 801 (e.g., the thread block 700 (see FIG. 7)), such as blocks B0 and B1, each responsible for creating and managing the CQE(s). The each of the block(s) 801 (e.g., the blocks B0 and B1) may simulate sending a CQE to a CQ of an application (e.g., the user application 106 (see FIG. 1), and/or the client application 502 (see FIG. 5)). In at least one embodiment, the block(s) 801 are one or more groups of threads launched by at least one kernel, such as one or more of the kernel(s) 538 (see FIG. 5). The blocks B0 and B1 each includes one or more threads that work in parallel to generate one or more CQEs. For example, the block B0 is depicted as including threads Th0, Th1, and Th2, but the block B0 may include any number of threads (e.g., up to 32 threads), including a single thread. By way of other non-limiting examples, the block B1 is depicted as including threads Th0, Th1, and Th2, but the block B1 may include any number of threads (e.g., up to 32 threads), including a single thread. Each of the threads depicted in FIG. 8 is a member of only one of the block(s) 801. In other words, while the threads are numbered identically in the block(s) 801, the threads labeled "Th0" in different ones of the block(s) 801 are different threads. Other similarly labeled threads (e.g., "Th1") in different ones of the block(s) 801 are also different threads. In each of the block(s) 801, the thread identified as "Th0" may be considered a lead thread or an initial thread.

The threads in each of the block(s) 801 generate at least one CQE for each of at least a portion of the WQE(s) processed and stored in one of the GPU backend QP(s). For example, the threads of the block(s) 801 may generate CQE(s) for each ACK received by the first network interface 105, and/or each CQE generated by the first network interface 105 and stored by the first network interface 105 in one of the GPU backend QP(s). For ease of illustration, the CQE(s) posted by the first network interface 105 in the GPU backend QP(s) will be described as being ACK(s) to distinguish them from the CQE(s) created by the threads. This processing includes using an instance of a create CQE operation 802 to generate a CQE with respect to each of the ACK(s) posted in the GPU backend QP(s) by the first network interface 105. For example, each thread in each of the block(s) 801 may perform an instance of the create CQE operation 802 with respect to a different one of the ACK(s) posted in the GPU backend QP(s) by the first network interface 105. The threads (e.g., threads Th0, Th1, Th2, etc.) of each of the block(s) 801 may perform instances of the create CQE operation 802 in parallel. The threads of different ones of the block(s) 801 may perform instances of the create CQE operation 802 in parallel. By way of non-limiting examples, in FIG. 8, three of the threads (e.g., the threads Th0, Th1, and Th2) of the block B0 are depicted performing instances of the create CQE operation 802 in parallel as a create CQE operation 802A (labeled "Th0 create CQE0"), a create CQE operation 802B (labeled "Th1 create CQE1"), and a create CQE operation 802C (labeled "Th2 create CQE2"), but may include one or more additional threads performing one or more additional instances of the create CQE operation 802 in parallel. By way of other non-limiting examples, in FIG. 8, three of the threads (e.g., the threads Th0, Th1, and Th2) of the block B1 are depicted performing instances of the create CQE operation 802 in parallel as a create CQE operation 820A (labeled "Th0 create CQE0"), a create CQE operation 820B (labeled "Th1 create CQE1"), and a create CQE operation 820C (labeled "Th2 create CQE2"), but may include one or more additional threads performing one or more additional instances of the create CQE operation 802 in parallel. The instances of the create CQE operation 802 performed by the block(s) 801 (e.g., the create CQE operations 802A, 802B, 802C, 820A, 820B, and 820C) may be performed in parallel with one another. The create CQE operations 802A, 802B, 802C, 820A, 820B, and 820C may each generate a different CQE. For example, the create CQE operations 802A, 802B, 802C, 820A, 820B, and 820C may generate CQE 804A, CQE 804B, 804C, CQE 822A, CQE 822B, and CQE 822C, respectively.

In at least one embodiment, the CQE(s) generated by the instances of the create CQE operation 802 performed by the threads of the block(s) 801 may be stored in local poster QP memory. For example, the CQE(s) generated by the block(s) B0 and B1 may be stored (e.g., temporarily) in local poster QP memory 804, and local poster QP memory 822, respectively. By way of non-limiting examples, in FIG. 8, the block B0 generated CQEs 804A-804C, and the block B1 generated CQEs 822A-822C. However, the blocks B0 and B1 may each create any number of CQEs, including a single CQE. The CQEs 804A-804C are stored in the local poster QP memory 804 for the block B0, and the CQEs 822A-822C are stored in the local poster QP memory 822 for the block B1. In at least one embodiment, the local poster QP memory 804 and the local poster QP memory 822 may act as buffers before one or more CQEs are posted to GPU poster QP memory 832.

One or more first synchronization barriers or operations 805 (e.g., a first synchronization operation 806, and a first synchronization operation 824 for the blocks B0 and B1, respectively) check(s) to ensure that all of the threads within one of the block(s) 801 have completed one or more processing tasks (e.g., an instance of the create CQE operation 802) before proceeding with one or more next processing tasks, such as posting the CQE(s) to the GPU poster QP 830.

In at least one embodiment, illustrated in FIG. 8, the system 800 includes one or more additional synchronization components, such as a lock poster QP operation 808 and a wait lock poster QP operation 826. In at least one embodiment, the lock poster QP operation 808 and the wait lock poster QP operation 826 manage access to shared resources, such as the GPU poster QP 830 and/or the GPU poster QP memory 832, to ensure that only one of the block(s) 801 can post WQE(s) to the GPU poster QP 830 and/or CQE(s) to the GPU poster QP memory 832 at a time. By way of a non-limiting example, in FIG. 8, an instance of the lock poster QP operation 808 is executed by the block B0 to lock the GPU poster QP 830 and/or gain exclusive access to the GPU poster QP memory 832. The lock poster QP operation 808 performs the lock before the block B0 begins posting one or more WQE(s) to the GPU poster QP 830 and/or storing one or more CQEs in the GPU poster QP memory 832. An instance of the wait lock poster QP operation 826 is performed by any other blocks, such as the block B1, to wait until the GPU poster QP 830 is unlocked. Those of the block(s) 801 performing the wait lock poster QP operation 826 perform the wait lock poster QP operation 826 in response to a particular one of the block(s) 801 performing the lock poster QP operation 808, and continue to perform the wait lock poster QP operation 826 until released (e.g., notified) by the particular block. The wait lock poster QP operation 826 ensures that the block that performs the wait lock poster QP operation 826 does not attempt to post CQEs in the GPU poster QP memory 832 until the GPU poster QP memory 832 is available. For example, FIG. 8 depicts the block B1 waiting for the wait lock to be released (by the block B0) to begin performing one or more processing tasks.

As described herein, a particular one of the block(s) 801 generates CQE(s) and WQE(s) that instruct the first network interface 105 to transmit the CQE(s) to the application CQ 170. After the particular block has locked the GPU poster QP 830 (e.g., by performing the lock poster QP operation 808), the threads of the particular block may each perform an instance of a post operation 809. For each thread of the particular block, the post operation 809 stores new WQE(s) generated by the thread in the GPU poster QP 830 and/or stores new CQE(s) generated by the thread in the GPU poster QP memory 832 associated with the GPU poster QP 830. For example, the post operation 809 may retrieve the CQE(s) for the local poster QP memory 804 and/or the local poster QP memory 822, and post the CQE(s) in the GPU poster QP memory 832. In FIG. 8, the threads Th0, Th1, and Th2 of the block B0 are depicted performing instances of the post operation 809, which are depicted as post operations 810A-810C, respectively.

In FIG. 8, the block B0 performs the lock poster QP operation 808, then the block B0 performs one or more instances of the post operation 809 to post WQE(s) created by the block B0 to the GPU poster QP 830 (e.g., WQEO 830-0A, WQE1 830-0B, and WQE2 830-0C), and to store CQE(s) created by the block B0 (e.g., CQE0 832-0A, CQE1 832-0B, and CQE2 832-0C) in the GPU poster QP memory 832. For example, the post operations 810A-810C may create the WQEO 830-0A, WQE1 830-0B, and WQE2 830-0C, respectively, and post these WQEs in the GPU poster QP 830. The post operations 810A-810C may create the CQE0 832-0A, CQE1 832-0B, and CQE2 832-0C, respectively, and store these CQEs in the GPU poster QP memory 832.

After the block B0 posts the CQE(s) generated by the block B0, a second synchronization operation 812 ensures that all of the WQE(s) generated by the block B0 have been posted to the GPU poster QP 830, and/or all of the CQE(s) have been posted in the GPU poster QP memory 832 before proceeding. In at least one embodiment, the block B0 performs a notification operation 816 (labeled "Th0 Update NIC DBRec + Ring DB") that updates the first network interface 105 by ringing a doorbell of the first network interface 105, signaling that the WQE(s) are waiting in the GPU poster QP 830. The WQE(s) instruct(s) the first network interface 105 to transmit the CQE(s) to the application CQ 170 (see FIG. 1). Then, at least one thread (e.g., the thread Th0) of the block B0 performs an unlock poster QP operation 818 to allow one or more other ones of the block(s) 801 to access the GPU poster QP 830 and/or the GPU poster QP memory 832. By performing the unlock poster QP operation 818, the block B0 releases or ends the wait lock poster QP operation 826 being performed by other ones of the block(s) 801. This release allows another one of the block(s) 801 to perform the lock poster QP operation 808, and subsequent processing.

For example, the threads of the block B1 may perform instances of the post operation 809 to create WQEO 830-1A, WQE1 830-1B, and WQE2 830-1C, respectively, and post these WQEs in the GPU poster QP 830. These instances of the post operation 809 may store the CQE0 822A, CQE1 822B, and CQE2 822C as CQE0 832-1A, CQE1 832-1B, and CQE2 832-1C, respectively, and in the GPU poster QP memory 832. Then, the block B1 may perform the second synchronization operation 812, the notification operation 816, and the unlock poster QP operation 818.

The GPU poster QP 830 and/or GPU poster QP memory 832 store(s) the posted CQEs for transmission. In at least one embodiment, the GPU poster QP 830 stores one or more WQEs created by one or more of the block(s) 801, such as the WQEs 830-0A, 830-0B, 830-0C, 830-1A, 830-1B, and 830-1C, and/or other WQE(s) posted by one or more of the block(s) 801. In at least one embodiment, the GPU poster QP memory 832 stores one or more CQEs created by one or more of the block(s) 801, such as the CQEs 832-0A, 832-0B, 832-0C, 832-1A, 832-1B, and 832-1C, and/or other CQE(s) posted by one or more of the block(s) 801. The GPU poster QP 830 and the GPU poster QP memory 832 may help ensure that the CQE(s) are ready for the first network interface 105 (e.g., a NIC) to transmit to the appropriate application CQ (e.g., the application CQ 170).

In at least one embodiment, the block(s) 801 may lock the GPU poster QP 830 (e.g., using the lock poster QP operation 808), write the WQEs 830-0A, 830-0B, 830-0C, 830-1A, 830-1B, and 830-1C for each of the CQEs 832-0A, 832-0B, 832-0C, 832-1A, 832-1B, and 832-1C, respectively, to the GPU poster QP 830 (e.g., using instances of the post operation 809), ring the doorbell of the first network interface 105 (e.g., using the notification operation 816), and unlock the GPU poster QP 830 (e.g., using the unlock poster QP operation 818), allowing the next block to proceed, such as the block B1. In at least one embodiment, this process is repeated for each of the block(s) 801 launched by different kernels (e.g., the kernel(s) 538 illustrated in FIG. 5), for synchronized communication between the different kernels.

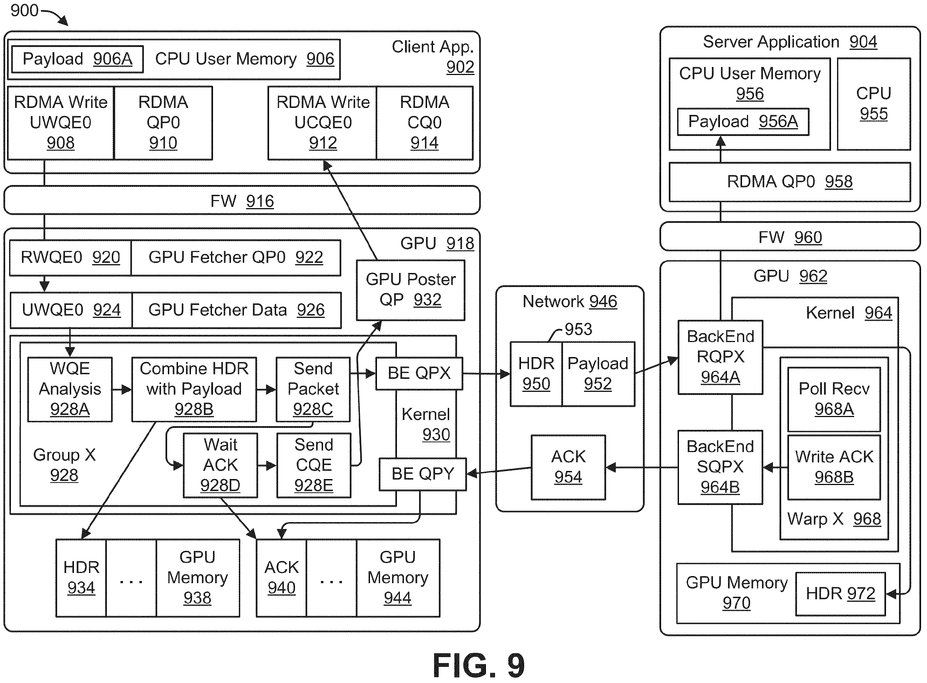

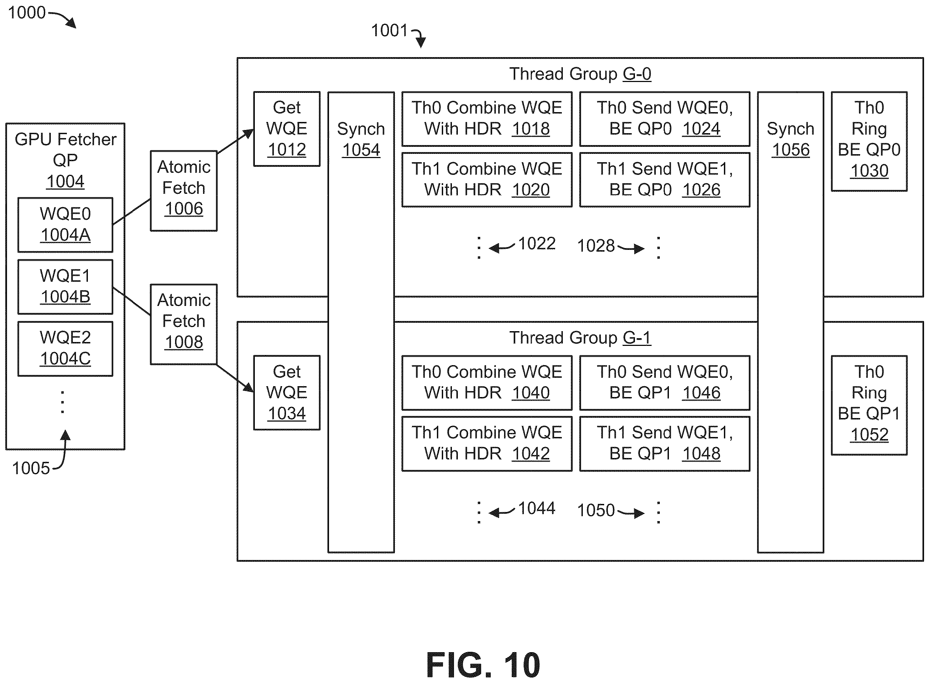

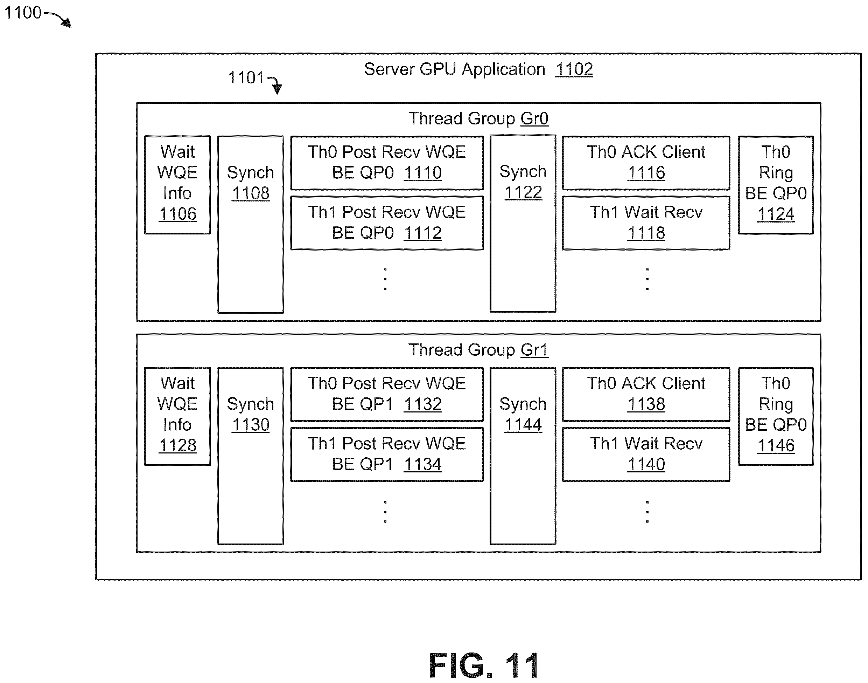

FIG. 9 illustrates a block diagram of an example system 900 to implement one or more network transport protocols to send and/or receive data using WQE(s), in accordance with at least one embodiment. The system 900 may be implemented at least in part using the system 100 (see FIG. 1), the system 200 (see FIG. 2), the system 300 (see FIG. 3), the system 400 (see FIG. 4), the system 500 (see FIG. 5), the GPU 600 (see FIG. 6), the thread block 700 (see FIG. 7), and/or the system 800 (see FIG. 8). The system 900 may implement a network transport protocol 1000 (see FIG. 10) and/or a network transport protocol 1100 (see FIG. 11). In at least one embodiment, illustrated in FIG. 9, the system 900 facilitates communication between a client application 902 and a server application 904 via a network 946, which represents a network transport protocol flow using GPU resources. In at least one embodiment, the client application 902 corresponds to the user application 106 as depicted in FIG. 1, and/or the client application 502 as depicted in FIG. 5. In at least one embodiment, the client application 902 generates one or more application QPs that correspond(s) to the application QP0 202, and/or the application QP1 204. In at least one embodiment, the client application 902 generates an application CQ that corresponds to the application shared CQ 406 as depicted in FIG. 4. In at least one embodiment, the server application 904 corresponds to the data processing application 250 as depicted in FIG. 2, and/or the server application 504 as depicted in FIG. 5.

A client side of the system 900 includes the client application 902, firmware (FW) 916, and a GPU 918. The GPU 918 may be implemented using one or more of the GPU(s) 111 of the system 200 (see FIG. 2), at least one of the GPU 545 or the GPU(s) 556 of the system 500 (see FIG. 5), and/or the GPU 600 (see FIG. 6). In at least one embodiment, the client application 902 accesses CPU user memory 906, which stores payload data 906A. The payload data 906A is associated with one or more unprocessed work queue entries (UWQE(s)) that need to be processed, such as UWQE(s) including instructions to the first network interface 105 identifying information (e.g., the payload data 906A) that needs to be sent or received as part of network operations described by the UWQE(s). In at least one embodiment, the payload data 906A may be generated by the first computing system 202 (see FIG. 2), for example, which performs the client application 902 and generates the payload data 906A in the course of performing the client application 902. The UWQE(s) point to the payload data 906A and/or the payload data 906A is attached to the UWQE(s). In at least one embodiment, the client application 902 generates the UWQE(s) based on one or more operations to be performed with respect to the payload data 906A, such as sending the payload data 906A to a different device. The client application 902 uses a write operation 908 (e.g., an RDMA write operation) to write the UWQE(s) to an RDMA QP0 910, to await processing. For example, FIG. 9 depicts the client application 902 writing UWQEO to the RDMA QP0 910.

The client application 902 notifies a first NIC (e.g., the first network interface 105) including the FW 916 by ringing the doorbell of the first NIC, which the FW 916 intercepts. The FW 916 executes an RDMA send operation to route the UWQE(s) to the GPU 918 for processing. In at least one embodiment, the GPU 918 can execute one or more GPU applications, such as a kernel 930, to process the UWQE(s).

The kernel 930 may be associated with and/or launched by the client application 902. The kernel 930 has and/or establishes (e.g., using software, such as DOCA RDMI) a GPU fetcher QP0 922 to communicate with the FW 916 (e.g., instruct FW 916 where to store the UWQE(s), for example, using one or more instances of a RWQ or RWQE operation), a send queue (labeled "BE QPX" in FIG. 9) of a GPU backend QP to communicate one or more processed WQEs to the first NIC, a receive queue (labeled "BE QPY" in FIG. 9) of the GPU backend QP to receive one or more CQEs and/or one or more WQEs from the first NIC, and/or a GPU poster QP 932 to communicate one or more CQEs with a RDMA CP0 914 (via the first NIC). The kernel 930 may allocate and/or access a GPU fetcher data memory 926 in which the GPU fetcher QP0 922 may instruct the FW 916 to store the UWQE(s) from the RDMA QP0 910 and/or data associated with the UWQE(s). The kernel 930 may allocate and/or use GPU memory, for example, including GPU memory 938 and GPU memory 944. The GPU fetcher data memory 926 may be a portion of the GPU memory.

The FW 916 executes an RDMA send operation to route the UWQE(s) to the GPU 918. The GPU 918 uses the GPU fetcher QP0 922 to fetch the UWQE(s) by reading the UWQE(s) using one or more instances of an RWQE operation (e.g., RWQEO 920) from the client application QP0 910. In at least one embodiment, the RWQEO 920 obtains the UWQEO 908. The kernel 930 post the RWQEO 920 to the GPU fetcher QP0 922 to instruct the FW 916 to store the UWQEO 908, as a UWQEO 924, in the GPU fetcher data memory 926. In at least one embodiment, the FW 916 generates a CQE associated with the RWQEO 920, indicating that the RWQEO 920 has been used and stores the associated CQE in a GPU fetcher CQ, not shown for clarity. The kernel 930 polls the GPU fetcher CQ to detect the UWQE 924 is ready for processing. In at least one embodiment, the GPU fetcher data memory 926 is accessible by the kernel 930.

The kernel 930 processes the UWQE(s), such as the UWQEO 924, using one or more threads, for example, organized into one or more groups or warps. The kernel 930 can schedule the groups(s) for processing the UWQE(s). For example, FIG. 9 depicts the GPU 918 performing an example group X 928. However, the GPU 918 may perform one or more additional groups like the group X 928. The kernel 930 processes the UWQE(s) using one or more operations performed by the group(s) (e.g., the group X 928). The operation(s) may include a WQE analysis operation 928A that analyzes the UWQE(s), a combine HDR with payload operation 928B that at least partially constructs one or more packets by associating a header and/or header information 934 with a packet payload (e.g., at least a portion of the payload data 906A), and/or a send packet operation 928C that sends processed WQE(s) to the GPU backend QP (labeled "BE QPX" in FIG. 9). In at least one embodiment, the processed WQE(s) point to the packet(s) and/or the packet(s) are attached to the processed WQE(s). In at least one embodiment, the first NIC constructs the packet(s) using data pointed to or attached to the processed WQE(s) in accordance with any instructions in the processed WQE(s).

In at least one embodiment, the kernel 930 can schedule as many groups or warps as desired to process (e.g., work) two or more of the fetched WQE(s) in parallel. The kernel 930 launches each of the groups(s) (e.g., the group X 928), which process the WQE(s). In at least one embodiment, the group(s) can process WQEs from different QPs in parallel and, at the same time, a group of threads within a group can process WQEs from the same QP in parallel and/or data associated with a common WQE from the same QP in parallel. Each group launched by the kernel 930 performs the WQE analysis operation 928A, which may include, for example, identifying the size of data associated with the WQE(s) and/or splitting the data associated with the WQE(s) into smaller segments. For example, the WQE analysis operation 928A may identify that a particular WQE is associated with 64 kB of data, split the 64 kB of data into four portions each including 16 kB of data, and associate new WQEs with the four portions of data to be sent over the network 946. The data may be split into sizes suitable for inclusion in a payload 952 of a packet 953.

After the data associated with the WQE(s) is processed by the WQE analysis operation 928A, the combine HDR with payload operation 928B associates header information (e.g., header information 934) with the data. Each group launched by the kernel 930 may perform the combine HDR with payload operation 928B. The header information (e.g., header information 934) may provide transport-specific information used to transmit and/or route the data (e.g., as one or more packets) on the network 946. The combine HDR with payload operation 928B may generate or otherwise obtain the header information (e.g., header information 934), for example from another process and/or storage. A header information (e.g., header information 934) may be stored in the GPU memory 938, and used to add additional header information to one or more packets (e.g., the packet 953). The combine HDR with payload operation 928B may associate the same header information 934 with each of the WQE(s) and/or different header information with at least two of the WQE(s). The transport-specific information may include details about the size of the data associated with each of the WQE(s), a type of operation being performed, and/or any other parameters required for the network protocol being used. In at least one embodiment, the header information 934 can be supplied by a customer to meet specific standards for data transmission, which allows the system 900 to adapt to different network environments and/or protocols.

The kernel 930 performs the send packet operation 928C to post the WQE(s) in the first GPU backend QP (labeled "BE QPX" in FIG. 9). The WQE(s) each identify at least a portion of the payload data 906A, identify the header information (e.g., the header information 934) associated with the portion, and instruct the first NIC to transmit the portion over the network 946 to the server application 904 (e.g., as one or more packets). Then, the kernel 930 notifies the first NIC, which in response reads the WQE(s), and, for each of the WQE(s), obtains the portion of the payload data 906A associated with the WQE, obtains the header information (e.g., the header information 934) associated with the portion, uses the portion and header information to assemble one or more packets (e.g., the packet 953), and transmits the packet(s) over the network 946 to the server application 904. For example, the first NIC may use the header information (e.g., the header information 934) to construct a packet header 950, and the portion of the payload data 906A to construct the payload 952 of the packet 953.

A server side of the system 900 includes the server application 904 which uses a CPU 955 to manage and process data (e.g., payload data 956A) stored in the CPU user memory 956. The CPU 955 implements an RDMA QP0 958 to facilitate direct memory access operations for data transfer between the server application 904 and the client application 902.

On the server side, a second NIC (e.g., the second network interface 244) receives the packet(s) (e.g., the packet 953) transmitted by the first NIC. The second NIC may perform firmware 960. The second NIC stores the payload(s) (e.g., the payload 952) of the packet(s) as payload data 956A in memory accessible to the CPU 955, such as CPU user memory 956. The second NIC stores the packet headers in GPU memory 970, and stores WQE(s) in a receive queue (RQPX) 964A of a GPU backend QP. The second NIC may generate these WQE(s) based at least in part on information contained in the packet(s), such as the protocol used to transport the packet(s).

The GPU 962 on the server side executes a kernel 964, which processes the incoming packet(s) and sends a communication, such as an acknowledgement (ACK) 954 that indicates the packet(s) have been successfully received. However, the kernel 964 may send different messages, such as messages indicating one or more problems has occurred, such as one or more packets not arriving or being corrupted. The kernel 964 may implement the GPU backend QP that includes the receive queue (RQPX) 964A and a send queue (SQPX) 964B. The kernel 964 launches one or more threads organized into one or more groups, one or more blocks, and/or one or more warps (e.g., a warp X 968).

For example, the second NIC may determine that the packet(s) are associated with (e.g., addressed to) the server application 904, use information included in the packet(s) to generate new WQE(s), and store the new WQE(s) in the receive queue (RQPX) 964A. Then, the kernel 964 may perform a polling operation 968A (labeled "poll recv") that polls the receive queue (RQPX) 964A for newly posted WQE(s). For example, one thread in the each of the group(s), block(s), and/or warp(s) (e.g., the warp X 968) may be considered a lead thread that polls the receive queue (RQPX) 964A or its associated receive buffer for new WQE(s). When newly posted WQE(s) are identified, the lead thread may fetch the WQE(s) from the receive queue (RQPX) 964A and/or its associated receive buffer. Then, the threads of the group(s), block(s), and/or warp(s) may process the WQE(s), the packet header(s), and/or data in the payload data 956A. For example, the kernel 964 may implement the WQE processing functionality 280, and the kernel 964 may use the WQE processing functionality 280 to process the WQE(s), the packet header(s), and/or the payload data 956A.

Once the data is received and stored in the CPU user memory 956 (e.g., the payload data 956A), the kernel 964 (e.g., the threads) may verify the integrity and completeness of the received payload data 956A, for example, in response to the WQE(s) posted by the second NIC. The receive queue (RQPX) 964A handles reception of the WQE(s), ensuring that the WQE(s) are correctly queued for processing by the kernel 964. The threads may each process a packet header and/or packet payload received in one of the packets for which the second NIC generated the WQE. The threads may use the WQE(s) and/or header information (e.g., HDR 972) stored in the GPU memory 970 to determine a size of the packet payload of each of the packets, a correct order of the packets, where the packet payload received in each packet is stored in the CPU user memory 956, and/or other information.

After verification, the kernel 964 may perform a write ACK operation 968B that generates an acknowledgement (ACK) 954 to confirm receipt of all expected data, or generates an alternate message if not all of the expected data was received or another issue occurs. Then, the kernel 964 may create an ACK WQE, store the ACK WQE in the send queue (SQPX) 964B (labeled "BackEnd SQPX" in FIG. 9), and ring the doorbell of the second NIC. The ACK WQE instructs the second NIC to transmit the ACK to the first NIC, and the ACK notifies the first NIC that the WQE(s) have been successfully received by the second NIC and/or processed. The second NIC fetches the ACK WQE, and transmits the ACK 954 to the first NIC.

The first NIC receives the ACK 954, creates a CQE, and stores the CQE (as ACK 940) in the GPU memory 944. The first NIC may generate and store a WQE in the receive queue (labeled "BE QPY" in FIG. 9) of the GPU backend QP. This WQE may instruct the kernel 930 to process the CQE and post it to the RDMA CQ0 914. The kernel 930 may poll the receive queue (labeled "BE QPY" in FIG. 9) and/or the GPU memory 944 to determine when the CQE has been stored in the GPU memory 944.

After the kernel 964 performs the send packet operation 928C, the kernel 964 waits for the ACK 940. This waiting may be characterized as being a wait ACK operation 928D, during which the kernel 964 may poll the GPU memory 944 for the ACK 940. After the kernel 964 detects that the ACK 940 has been received, the kernel 964 may perform a send CQE operation 928E (e.g., described with respect to FIG. 8). The send CQE operation 928E may ensure that the ACK 940 is correctly interpreted and any necessary follow-up actions are initiated. Once the ACK 940 is processed, the send CQE operation 928E may post a WQE to the GPU poster QP 932. The WQE instructs the first NIC to obtain the CQE (stored as the ACK 940) from the GPU memory 944, and store the CQE (e.g., UCQE0) in the RDMA CQ0 914, for example, using a RDMA write operation 912. In other words, the kernel 964 may cause the first NIC to write one or more CQEs into the appropriate CQs. For example, the CQE(s) may be stored in the RDMA CQ0 914 of the client application 902. The CQE(s) notify the client application 902 that the UWQE(s) have been successfully completed. In at least one embodiment, the GPU memory 944 stores intermediate data to manage processing of the ACKs and the generation of the CQE(s). The ACK 954 is provided to the client application 902 (e.g., as CQE(s) posted to the RDMA CQ0 914) by the kernel 930 and the first NIC, completing the communication loop and allowing the client application 902 to proceed with subsequent operations. The ACK 940 provides a confirmation to the client application 902 that the data packet(s) have been successfully received and processed by the second NIC of the server computing system (e.g., the second computing system 204).

FIG. 10 illustrates a block diagram illustrating an example network transport protocol 1000 to process WQEs using GPU resources, in accordance with at least one embodiment. The network transport protocol 1000 may be implemented at least in part using the system 100 (see FIG. 1), the system 200 (see FIG. 2), the system 300 (see FIG. 3), the system 400 (see FIG. 4), the system 500 (see FIG. 5), the GPU 600 (see FIG. 6), the thread block 700 (see FIG. 7), the system 800 (see FIG. 8) and/or the system 900 (see FIG. 9). The network transport protocol 1000 may be implemented using the GPU(s) 111 (see FIG. 1, FIG. 2, and FIG. 3), the GPU 545 (see FIG. 5), the GPU 600 (see FIG. 6), the GPU 918 (see FIG. 9) and/or the GPU 962 (see FIG. 9). The network transport protocol 1000 includes using a GPU fetcher QP 1004 for determining where to store incoming WQEs, such as one or more WQEs 1005 (e.g., WQEO 1004A, WQE1 1004B, and WQE2 1004C) from an application, such as the client application 502 (see FIG. 5), and storing the WQE(s) 1005 in GPU memory (e.g., GPU fetcher data memory 534 illustrated in FIG. 5) for processing. By way of non-limiting examples, the GPU fetcher QP 1004 may be implemented using the GPU fetcher QP 124 (see FIGS. 1 and 2), the GPU fetcher QP QP0 418 (see FIG. 4), the GPU fetcher QP QP0 420 (see FIG. 4), the GPU fetcher QP 528 (see FIG. 5), and/or the GPU fetcher QP QP0 922 (see FIG. 9).

In at least one embodiment, a GPU launches a kernel, such as the kernel(s) 538 (see FIG. 5) for processing the fetched WQE(s) 1005. The kernel includes one or more groups 1001 of threads, where each of the group(s) 1001 is responsible for processing a specific WQE of the WQE(s) 1005. In at least one embodiment, illustrated in FIG. 10, the group(s) 1001 include a group G-0 and a group G-1, each responsible for processing at least a portion of the WQE(s) 1005. Each of the group(s) includes one or more threads, such as threads Th0 and Th1. While FIG. 10 illustrates the group(s) 1001 as each including the threads Th0 and Th1, each of the group(s) 1001 may include any number of threads, including a single thread. Each of the threads depicted in FIG. 10 is a member of only one of the groups(s) 1001. In other words, while the threads are numbered identically in the groups(s) 1001, the threads labeled "Th0" in different ones of the groups(s) 1001 are different threads. Other similarly labeled threads (e.g., "Th1") in different ones of the groups(s) 1001 are also different threads. The group(s) 1001 may include the same or different numbers of threads.

In at least one embodiment, each of the group(s) 1001 has a lead thread, such as the initial threads (Th0) 722, 724, and 726 illustrated in FIG. 7 The lead thread(s) (e.g., the thread Th0) of each of the group(s) 1001 performs a retrieval operation to retrieve at least a portion of the WQE(s) 1005. For example, the thread Th0 of the group G-0 may perform a retrieval operation 1012 that includes an atomic fetch operation 1006 to obtain a first one of the WQE(s) 1005, while the thread Th0 of the group G-1 may perform a retrieval operation 1034 that includes an atomic fetch operation 1008 to obtain a second one of the WQE(s) 1005 from the memory associated with the GPU fetcher QP 1004. The WQE analysis operation 928A depicted in FIG. 9 may include the retrieval operation (e.g., the retrieval operations 1012 and 1034). The lead thread fetches a next WQE in the WQE(s) 1005 by incrementing an atomic counter, ensuring orderly access to the WQE(s) 1005.

Referring to FIG. 10, a first synchronization (e.g., synch) barrier 1054 allows the fetched WQE(s) 1005 to pass the first synch barrier 1054 after confirming the atomic fetch operations (e.g., the atomic fetch operations 1006 and 1008) are complete. Then the threads within each of the group(s) 1001 collaboratively process one of the WQE(s) 1005. The WQE analysis operation 928A depicted in FIG. 9 may include the first synch barrier 1054.

Referring to FIG. 10, the processing one of the WQE(s) may include performing a combining operation that combines each WQE with a header and/or header information. For example, the thread Th0 of the group G-0 may perform a combining operation 1018 to combine first data associated with a first WQE with a first header, the thread Th1 of the group G-0 may perform a combining operation 1020 to combine second data associated with the first WQE with a second header, followed by performance of one or more instances of the combining operation by subsequent threads. By way of another non-limiting example, the thread Th0 of the group G-1 may perform a combining operation 1040 to combine third data associated with a second WQE with a third header, the thread Th1 of the group G-1 may perform a combining operation 1042 to combine fourth data associated with the second WQE with a fourth header, followed by performance of one or more instances of the combining operation by subsequent threads. For example, each thread attaches a header to a portion of the data (e.g., a payload) associated with a WQE to prepare the WQE for network transmission. The processing continues through additional threads, as indicated by ellipses 1022 and 1044. This processing may involve splitting data associated with one or more WQEs into smaller segments for parallel processing and then recombining the data, for example, for transmission and/or at the second computing system 204. Examples of processing performed by the group(s) 1001 include data modification (e.g., compression, byte manipulation, etc.) and/or attaching transport-specific headers to forge transport-specific packets. The WQE analysis operation 928A depicted in FIG. 9 may include the combining operation (e.g., the combining operations 1018, 1020, 1040, and 1042).

Once processing is complete, the group(s) 1001 perform send operations that submit the processed WQEs to one or more GPU backend QPs. For example, the thread Th0 of the group G-0 may perform a send operation 1024 that sends a first WQE (labeled "WQEO" in FIG. 10) associated with the first data of the WQEO 1004A to a first GPU backend QP (labeled "BE QP0" in FIG. 10), the thread Th1 of the group G-0 may perform a send operation 1026 that sends a second WQE (labeled "WQE1" in FIG. 10) associated with the second data of the WQEQ 1004A to the first GPU backend QP (labeled "BE QP0" in FIG. 10), followed by performance of one or more instances of the send operation by subsequent threads. By way of another non-limiting example, the thread Th0 of the group G-1 may perform a send operation 1046 that sends a third WQE (labeled "WQE0" in FIG. 10) associated with the third data of the WQE1 1004B to a second GPU backend QP (labeled "BE QP1" in FIG. 10), the thread Th1 of the group G-1 may perform a send operation 1048 that sends a fourth WQE (labeled "WQE1" in FIG. 10) associated with the fourth data of the WQE1 1004B to the second GPU backend QP (labeled "BE QP1" in FIG. 10), followed by performance of one or more instances of the send operation by subsequent threads,. In at least one embodiment, this process continues through additional threads as needed (e.g., as indicated by ellipses 1028 and 1050), depending on a number of segments of data associated with the WQE(s) 1005. In at least one embodiment, the number of segments is determined dynamically based on the size of the data associated with a WQE, and/or processing capabilities of the system (e.g., the first computing system 202). In at least one embodiment, illustrated in FIG. 10, the GPU implements two GPU backend QPs (e.g., QP0 and QP1), however the number of backend QPs is configurable, which allows for flexible resource utilization. The send packet operation 928C depicted in FIG. 9 may include the send operations (e.g., the send operations 1024, 1026, 1046, and 1048).

Referring to FIG. 10, in at least one embodiment, submission of WQE(s) to the GPU backend QP(s) is synchronized using a second synchronization (synch) barrier 1056, to ensure data integrity and/or prevent partial data transmission. The send packet operation 928C depicted in FIG. 9 may include the second synch barrier 1056.

Referring to FIG. 10, after the second synch barrier 1056 confirms the processed WQEs are ready for transmission, the lead thread Th0 of each of the group(s) 1001 performs a notification operation to ring the doorbell of the first network interface 105 to notify the first network interface 105 that the data is ready for transmission. The lead thread (e.g., the thread Th0) of the group G-0 may perform a notification operation 1030 to ring the bell of the first network interface 105, and the lead thread (e.g., the thread Th0) of the group G-1 may perform a notification operation 1052 to notify the first network interface 105. The send packet operation 928C depicted in FIG. 9 may include each of these notifications. Referring to FIG. 10, the first network interface 105 fetches the WQE(s) generated by the group(s) 1001, and transmits data (along with associated header(s)) that is associated with the WQE(s), for example, as one or more packets (e.g., the packet 953).

In at least one embodiment, the group(s) 1001 wait(s) for a communication, such as an acknowledgement (e.g., the ACK 954), from the second computing device (e.g., the second computing system 204) before proceeding with one or more subsequent operations. For example, the group(s) 1001 may perform the wait ACK operation 928D (see FIG. 9). Then, the thread(s) may perform the send CQE operation 928E (see FIG. 9).

In at least one embodiment, FIG. 10 illustrates a generic representation of the processes described in previous figures, such as FIG. 7, which illustrates configurable parallel processing capabilities for a wide range of consumers or client applications due to the ability to attach headers and customize processing, and/or otherwise perform operations described herein. For example, referring to FIG. 10, a WQE may initially be associated with 16kB of data, and one of the group(s) 1001 may divide this data between four smaller WQEs, each containing 4 KB of data. Each thread in one of the group(s) 1001 may process one of these smaller WQEs, attach one or more headers to the data of the smaller WQE, and prepare the smaller WQE for transmission. Once all threads within a group have completed their tasks, the processed WQEs are sent over the network (e.g., the network 946). In at least one embodiment, this example demonstrates how parallel processing capabilities of the GPU(s) and flexible segmentation allows for improved (e.g., optimized) data throughput and adaptability to various network conditions.

FIG. 11 illustrates a block diagram of an example network transport protocol 1100 for receiving and processing data, in accordance with at least one embodiment. The network transport protocol 1100 may be implemented using the system 100 (see FIG. 1), the system 200 (see FIG. 2), the system 300 (see FIG. 3), the system 400 (see FIG. 4), the system 500 (see FIG. 5), the GPU 600 (see FIG. 6), the thread block 700 (see FIG. 7), the system 800 (see FIG. 8) and/or the system 900 (see FIG. 9). In at least one embodiment, illustrated in FIG. 11, the network transport protocol 1100 includes waiting to receive one or more WQEs from an application, such as the client application 502 (see FIG. 5). Similar to the (client side) network transport protocol 1000, which uses the thread group(s) 1001 to manage and process the WQEs in parallel, the (server side) network transport protocol 1100 uses one or more thread groups 1101 (e.g., a thread group Gr0 and a thread group Gr1), each responsible for managing and processing the data received from client side operations, such as those depicted in FIG. 10.

As mentioned herein, the second network interface 244 receives data from the first network interface 105, for example, as packet(s). The second network interface 244 splits the packet(s), stores packet payload(s) in memory (e.g., host CPU memory), stores packet header(s) in GPU memory, and may generate one or more WQEs instructing GPU(s) of the second computing system 204 to process the packet payload(s), for example, using the packet header(s). The second network interface 244 posts these WQE(s) to one or more receive queues of one or more GPU backend QPs (e.g., the receive queue (RQPX) 964A depicted in FIG. 9). By way of non-limiting examples, the second network interface 244 may post a separate WQE for each packet received and/or may post a single WQE for all of the packet(s) associated with data transmitted in one or more packets. For example, referring to FIG. 1, the first computing system 202 (see FIG. 2) may have divided the original WQE 104 created by the user application 106 into multiple processed WQEs each associated with a portion of the data 117. Then, the first network interface 105 may have transmitted the data 117 in multiple packets that correspond to the multiple processed WQEs. When the second network interface 244 (see FIG. 2) receives the packets, the second network interface 244 may store their packet payloads in the CPU memory, and their packet headers in the GPU memory. Then, the second network interface 244 may generate a WQE identifying the location of the packet payloads and/or the packet headers, and post the WQE in one of the GPU backend QP(s) of the GPU(s) of the second computing system 204. The WQE instructs the GPU(s) of the second computing system 204 (see FIG. 2) to process the packet payloads and/or the packet headers. The GPU(s) of the second computing system 204 may use information stored in the packet headers (e.g., a packet number, payload size, etc.) to determine a size of the data transmitted in each packet, a correct order for the packets, and/or whether all of the packets were received.

The GPU(s) of the second computing system 204 perform(s) a sever GPU application 1102 (e.g., implemented using one or more CUDA kernels), such as the kernel(s) 558 (see FIG. 5) or the kernel 964 (see FIG. 9), that launches threads that are organized into the thread group(s) 1101. Each of the thread group(s) 1101 includes a lead thread (e.g., the thread Th0) that polls at least one of the GPU backend QP(s) to determine whether any WQEs have been posted. For example, FIG. 11 depicts the lead threads of the thread groups Gr0 and Gr1 polling while they wait for WQEs at first synch barriers 1108 and 1130, respectively. For example, the thread group(s) 1101 may perform the polling operation 968A (see FIG. 9). Each of the thread group(s) 1101 may begin processing once a first synchronization (e.g., synch) barrier (e.g., the first synch barriers 1108 and 1130 with respect to thread groups Gr0 and Gr1, respectively) confirms that a WQE has been received and fetched by the lead thread of the thread group from one of the receive queues of one of the GPU backend QP(s). A WQE may be fetched by the lead thread performing a fetch operation, such as fetch operations 1106 and 1128 performed by the lead threads of the groups Gr0 and Gr1, respectively. In each of the group(s) 1101, threads other than the lead thread perform a wait operation until the first synch barrier is crossed. The first synch barrier ensures that the processing proceeds only after the WQE is fetched and ready for processing.

Next, the threads (e.g., Th0, Th1, Th2, etc.) of each of the group(s) 1101 each perform one or more processing operations (depicted as blocks 1110 and 1112 for threads Th0 and Th1 of the group Gr0, and blocks 1132 and 1134 for threads Th0 and Th1 of the group Gr1) on the packet headers and/or packet payloads associated with the WQE fetched by the lead thread of the group. Ellipses indicate that additional threads may perform the processing operation(s) as appropriate. The processing operation(s) may include interpreting packet headers associated with the WQE, determining whether all of the packet payloads associated with the WQE have been received, identifying one or more issues with the packet payloads, ordering packet payloads if, for example, one or more packets were received out of order, performing decompression on the packet payloads associated with the WQE, performing decryption on the packet payloads associated with the WQE, validating the packet headers associated with the WQE, validating the packet payloads associated with the WQE, and/or performing one or more other operations, such as those described herein. For example, a different one of the threads of one of the thread group(s) 1101 may process one of the packet headers and/or one of the packet payloads associated with the WQE fetched by the lead thread of the thread group.

Next, a second synchronization (e.g., synch) barrier causes the threads of each of the thread group(s) 1101 to wait until all of the threads within the thread group have completed performing the processing operations. For example, the threads of the thread group GR0 wait at a second synch barrier 1122 until they have all completed the processing operation(s), which are depicted by blocks 1110 and 1112 for the threads Th0 and Th1, respectively, in FIG. 11 but may include processing operation(s) performed by one or more additional threads. By way of another non-limiting example, the threads of the thread group GR1 wait at a second synch barrier 1144 until they have all completed the processing operation(s), which are depicted by blocks 1132 and 1134 for the threads Th0 and Th1, respectively, in FIG. 11 but may include processing operation(s) performed by one or more additional threads.

After the second synch barrier is crossed by one of the group(s) 1101, the lead thread (e.g., thread Th0) of the group performs a write ACK operation that generates an communication, such as an ACK (e.g., the ACK 954) to confirm receipt of all expected data, or an alternate message if not all of the expected data was received or another issue occurs. The write ACK operation may be implemented using the write ACK operation 968B (see FIG. 9). In FIG. 11, the lead thread (e.g., thread Th0) of the group Gr0 is depicted performing a write ACK operation 1116, and the lead thread (e.g., thread Th0) of the group Gr1 is depicted performing a write ACK operation 1138. After the second synch barrier, threads other than the lead threads in each of the thread group(s) 1101 perform the wait operation until another WQE is fetched by the lead thread of the thread group. In FIG. 11, threads other than the lead thread (e.g., thread Th0) of the group Gr0 are depicted performing a wait operation 1118, and threads other than the lead thread (e.g., thread Th0) of the group Gr1 are depicted performing a wait operation 1140.

After the lead thread of a thread group has performed the write ACK operation, the lead thread may create an ACK WQE, store the ACK WQE in a send queue of one of the GPU backend QP(s) (e.g., the send queue (SQPX) 964B), and ring the doorbell of the second network interface 244 (illustrated as blocks 1124 and 1146 with respect to the thread groups Gr0 and Gr1, respectively). The ACK WQE instructs the second network interface 244 to transmit the communication (e.g., ACK) to the first network interface 105. The second network interface 244 fetches the ACK WQE (e.g., from the send queue (SQPX) 964B), and transmits the communication (e.g., ACK) to the first network interface 105.

In at least one embodiment, FIG. 11 illustrates a generic representation of the processes described in previous figures, such as FIG. 9 with respect to the server side operations, which illustrates receiving a WQE, analyzing the WQE, packet header(s), and/or packet payload(s), and performing further processing. In at least one embodiment, the network transport protocol 1100 is designed to efficiently handle incoming WQEs by leveraging the parallel processing capabilities of threads, organized into distinct groups.

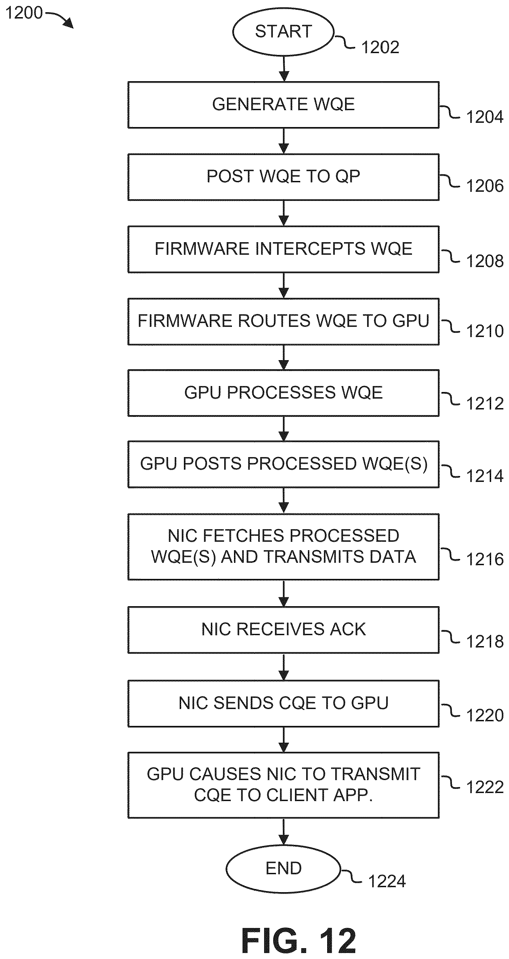

FIG. 12 is a flowchart illustrating a method 1200 to be performed, for example, by the system 200 (see FIG. 2), in accordance with at least one embodiment. The method 1200 may be performed at least in part by the processor(s) 210 of the first computing system 202 and/or the processor(s) 248 of the second computing system 204. At a start 1202, a processor (e.g., one of the processor(s) 210) of a client computing device (e.g., the first computing system 202) performs a client application associated with a QP (e.g., the application QP 114). In block 1204, the client application causes the processor of the client computing device to generate a WQE.

In block 1206, the client application causes the processor of the client computing device to post the WQE generated in block 1204 to the application QP (e.g., the application QP 114) associated with the client application for processing. In at least one embodiment, the posting includes sending a notification (e.g., ringing the doorbell) to a NIC, such as the first network interface 105.

In block 1208, firmware (e.g., performed by the processor(s) 236) within the client computing device intercepts the notification before the NIC can respond to the notification. The interception prevents the NIC from prematurely processing the WQE, ensuring that GPU(s), such as the GPU(s) 111, processes the WQE instead.

In block 1210, the intercepted WQE is routed to the GPU (e.g., by the firmware executing a send operation 122). The GPU, which may be equipped with greater processing power and memory than traditional DPAs, is now responsible for processing the WQE. In block 1212, the GPU processes the WQE using its parallel processing capabilities. This includes executing one or more GPU applications, such as kernels, to manage processing multiple WQEs simultaneously. The GPU may associate header information with data associated with the WQE. The GPU may divide the data associated with the WQE into smaller segments, associate header information with each data segment, and generate one or more WQEs associated with the smaller segments of data. The GPU may compress, encrypt, perform bit operations, and/or perform one or more other operations, such as those mentioned herein, with respect to the data associated with the WQE.

Once the GPU has processed the WQE (e.g., ,performed operation(s) with respect to data associated with the WQE), in block 1214, the GPU posts the processed WQE(s), for example, in one or more GPU backend QPs (e.g., the GPU backend QP 134). In at least one embodiment, the posting includes sending a notification to the NIC, such as the first network interface 105.

At block 1216, the NIC responds to the second notification by fetching the posted WQE(s) in block 1214, and transmitting the data associated with the posted WQE(s) to a server computing device (e.g., the second computing system 204). The transmission is performed through the GPU backend QP(s), which may help ensure that the NIC receives fully processed data associated with the WQE generated in block 1204 that is ready for network operations.

At block 1218, the NIC receives an ACK (e.g., the ACK 152) from the server computing device in response to transmitting the data (e.g., the data 117). The ACK indicates that all of the data was received and/or processed.

At block 1220, after receiving the ACK, the NIC generates one or more CQEs (e.g., the CQE(s) 162) and sends the CQE(s) to the GPU(s) indicating that the data associated with the processed WQE(s) has been successfully transmitted. The CQE(s) may be stored in a receive buffer of the GPU backend QP(s), and/or in GPU memory.

At block 1222, the GPU(s) process(es) the CQE(s) and generates one or more new WQEs to instruct the NIC to transmit the CQE(s) to the client computing device. The NIC transmits the CQE(s) by reading the CQE(s) from the GPU memory, writing the CQE(s) (e.g., using one or more RDMA write operations) to a CQ (e.g., CQ 170) associated with the client application.

The method 1200 may conclude at block 1224 where processing the WQE is complete.

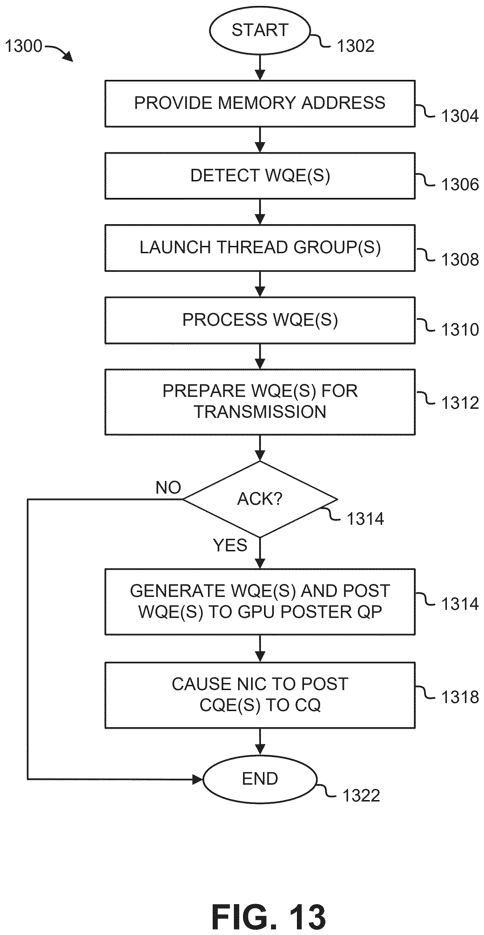

FIG. 13 is a flowchart illustrating a method 1300 to be performed by a GPU, in accordance with at least one embodiment. The method 1300 may be performed by at least a portion of the GPU core(s) 260 of at least one of the GPU(s) 111. At a start 1302, a client application, such as the user application 106, causes a processor (e.g., one of the processor(s) 210) of a client computing device (e.g., the first computing system 202) to send a notification to a NIC (e.g., the first network interface 105) that one or more WQEs awaits processing. In block 1304, the GPU(s) 111 receive(s) an RDMA send from firmware on the NIC that the firmware is sending a WQE(s) for processing. The GPU fetcher QP 124 provides a memory address to the firmware, instructing the firmware to store the WQE(s) at the memory address. In block 1306, the GPU(s) 111 detects the WQE(s) are available in GPU(s) 111 memory for processing (e.g., by polling a GPU fetcher CQ associated with the GPU fetcher QP 124).

In block 1308, the GPU(s) 111 (e.g., performing the GPU application 102) launch(es) one or more thread groups to handle processing the WQE(s). In block 1310, the thread group launched by the GPU(s) 111 process(es) the WQEs by performing one or more GPU instructions, such as the WQE processing functionality 280. In at least one embodiment, this processing includes data manipulation, modification, and/or splitting data associated with the WQEs into smaller segments for processing.

In block 1312, the thread group launched by the GPU(s) 111 prepare(s) the processed WQEs for transmission. In at least one embodiment, this preparation includes attaching necessary headers and/or formatting the data according to network protocols to facilitate communication with and/or by the NIC. At this point, the NIC transmits the data, for example, as packets to a second computing system (e.g., the second computing system 204). By way of a non-limiting example, the method 1300 may be performed by a server (e.g., the first computing system 202) in a data center, and the second computing system may be another server in the data center. The NIC may or may not receive an ACK (e.g., the ACK 152) from the second computing system. As explained herein, when the NIC receives an ACK, the NIC generates one or more CQEs, stores them in memory, such as the GPU memory, accessible by the GPU(s) 111, and may post one or more WQEs in one a receive queue of one of the GPU backend QP(s). The thread group launched by the GPU(s) 111 (e.g., a lead thread of the thread group) polls the receive queue to determine when new WQE(s) are posted. The thread group launched by the GPU(s) 111 (e.g., a lead thread of the thread group) may fetch the new WQE(s) and process the new WQE(s).

At decision block 1314, the thread group launched by the GPU(s) 111 determines whether an ACK associated with one of the WQE(s) fetched in block 1308 has been received. The thread group may determine that an ACK has been received by polling the receive queue for new WQE(s) and determining if the new WQE(s) indicate that the NIC has stored one or more CQEs associated with a WQE fetched in block 1308 in memory accessible by the GPU(s) 111 (e.g., the GPU memory 944). The decision is "YES" at decision block 1314 when the thread group determines an ACK associated with a WQE fetched in block 1308 has been received. Otherwise, the decision is "NO" at decision block 1314. When the decision is "NO" at decision block 1314, the method 1300 may conclude at block 1322.

On the other hand, when the decision at decision block 1314 is "YES," at block 1316, the thread group launched by the GPU(s) 111 may generate one or more new WQEs, and post the new WQE(s) in a send buffer of a GPU poster QP (e.g., the GPU poster QP 154). The new WQE(s) instruct(s) the NIC to post the CQE(s) stored in the memory accessible by the GPU(s) 111 (e.g., the GPU memory 944) to a CQ (e.g., the CQ 170) associated with the client application (e.g., the user application 106).

In block 1318, the thread group launched by the GPU(s) 111 cause the NIC to post the CQE(s) to the CQ associated with the client application. In block 1318, the GPU(s) 111 may notify the NIC that the new WQE(s) is/are in the GPU poster QP and is/are ready for transmission. The CQEs notify the user application 106 that one or more operations identified by the WQEs have been successfully performed.

The method 1300 concludes at block 1322, where the GPU's role in processing and preparing the WQEs and/or associated data for network transmission is complete.

FIG. 14A illustrates an example of a system 1400 that includes one or more drivers and/or one or more runtimes (illustrated as reference numeral 1404) including one or more libraries 1406 to provide one or more application programming interfaces ("API(s)") 1410, in accordance with at least one embodiment. In at least one embodiment, the system 1400 includes the driver(s) 1404 and/or the runtime(s) 1404 including the library(ies) 1406 to provide to the API(s) 1410. In at least one embodiment, the API(s) 1410 is/are sets of software instructions that, if executed, cause one or more processors (e.g., processor(s) 1422 illustrated in FIG. 14B) to perform one or more computational operations. In at least one embodiment, one or more of the API(s) 1410 is/are distributed or otherwise provided as a part of one or more of the library(ies) 1406, one or more of the runtime(s) 1404, one or more of the driver(s) 1404, and/or one or more component of any other grouping of software and/or executable code further described herein. In at least one embodiment, one or more of the API(s) 1410 perform one or more computational operations in response to invocation by one or more software programs 1402.

In at least one embodiment, one or more of the software program(s) 1402 is/are a software module and/or include(s) one or more software modules. In at least one embodiment, a software module is as further illustrated non-exclusively in FIG. 14B as one or more modules 1424 and described with respect thereto. In at least one embodiment, one or more of the software program(s) 1402 is/are a collection of software code, commands, instructions, and/or other sequences of text to instruct a computing device (e.g., the GPU(s) 111) to perform one or more computational operations and/or invoke one or more other sets of instructions, such as the API(s) 1410 or API function(s) 1412, to be executed by the computing device. In at least one embodiment, functionality provided by one or more of the API(s) 1410 includes the API function(s) 1412, such as those usable to accelerate one or more portions of the software program(s) 1402 using one or more parallel processing units (PPUs), such as graphics processing units (GPUs).

In at least one embodiment, one or more of the API(s) 1410 is/are one or more hardware interfaces to one or more circuits to perform one or more computational operations. In at least one embodiment, one or more of the API(s) 1410 described herein are implemented as one or more circuits to perform one or more techniques described in connection with FIGS. 1-13. In at least one embodiment, one or more of the software program(s) 1402 include instructions that, if executed, cause one or more hardware devices and/or circuits to perform one or more techniques further described in connection with FIGS. 1-13. In at least one embodiment, the system 1400 includes one or more or all components of the system 200 described in relation to FIG. 2, the system 400 described in relation to FIG. 4, the system 500 described in relation to FIG. 5, the GPU 600 described in relation to FIG. 6, the system 800 described in relation to FIG. 8, and/or the system 900 described in relation to FIG. 9, respectively, and the system 1400 may perform one or more or all of the processes and/or operations that the systems and components of the system 200, the system 400, the system 500, the GPU 600, the system 800, and/or the system 900 perform.

In at least one embodiment, the software program(s) 1402, such as user-implemented software programs, utilize one or more of the API(s) 1410 to perform various computing operations, such as memory reservation, matrix multiplication, arithmetic operations, and/or any computing operation performed by PPUs, such as GPUs, as further described herein. In at least one embodiment, the function(s) 1412 include a set of callable functions provided by one or more of the API(s) 1410 that are referred to herein as APIs, API functions, software functions, and/or functions, that individually perform one or more computing operations, such as computing operations related to parallel computing. In at least one embodiment, one or more of the API(s) 1410 perform WQE processing by the GPU instructions 264, and/or perform other operations described herein (e.g., in connection with FIGS. 1-13).

In at least one embodiment, one or more of the software program(s) 1402 interact or otherwise communicate with one or more of the API(s) 1410 to perform one or more computing operations using one or more processors (e.g., processor(s) 1422 illustrated in FIG. 14B), such as one or more PPUs, such as GPUs. In at least one embodiment, one or more computing operations using one or more PPUs include at least one or more groups of computing operations to be accelerated by execution at least in part by said one or more PPUs. In at least one embodiment, one or more of the software program(s) 1402 interact with one or more of the API(s) 1410 to perform WQE processing by the GPU instructions 264, and/or perform other operations described herein (e.g., in connection with FIGS. 1-13).

In at least one embodiment, an interface is software instructions that, if executed, provide access to one or more of the function(s) 1412 provided by one or more of the API(s) 1410. In at least one embodiment, one or more of the software program(s) 1402 use(s) a local interface when a software developer compiles one or more of the software program(s) 1402 in conjunction with one or more of the library(ies) 1406 including or otherwise providing access to one or more of the API(s) 1410. In at least one embodiment, one or more of the software program(s) 1402 is/are compiled statically in conjunction with one or more pre-compiled ones of the library(ies) 1406 and/or uncompiled source code including instructions to perform one or more of the API(s) 1410. In at least one embodiment, one or more of the software program(s) 1402 are compiled dynamically and the dynamically compiled software program(s) utilize a linker to link to one or more pre-compiled ones of the library(ies) 1406, including one or more of the API(s) 1410.

In at least one embodiment, one or more of the software program(s) 1402 use(s) a remote interface when a software developer executes a software program that utilizes or otherwise communicates with at least one of the library(ies) 1406 including one or more of the API(s) 1410 over a network or other remote communication medium. In at least one embodiment, one or more of the library(ies) 1406 including one or more of the API(s) 1410 are to be performed by a remote computing service, such as a computing resource services provider. In at least one embodiment, one or more of the library(ies) 1406 including one or more particular APIs (of the API(s) 1410) is/are to be performed by any other computing host providing the particular API(s) to one or more of the software program(s) 1402.

In at least one embodiment, a processor (e.g., processor(s) 1422 illustrated in FIG. 14B) performing or using one or more particular ones of the software program(s) 1402 calls, uses, performs, and/or otherwise implements one or more of the API(s) 1410 to allocate and otherwise manage memory 1414 to be used by the particular software program(s). In at least one embodiment, one or more particular ones of the software program(s) 1402 utilize one or more of the API(s) 1410 to allocate and otherwise manage the memory 1414 to be used by one or more portions of the particular software program(s) to be accelerated using one or more PPUs, such as GPUs, or any other accelerator or processor further described herein. In at least one embodiment, one or more of the software program(s) 1402 request one or more neural networks to perform signal processing using one or more of the function(s) 1412 provided by one or more of the API(s) 1410. In at least one embodiment, the memory 212, the memory 238, the memory 246, the GPU memory 262, the GPU fetcher memory 274, the GPU backend QP memory 270, the GPU poster QP memory 272, the GPU fetcher memory 426, the GPU fetcher memory 428, the GPU fetcher data memory 534, the GPU fetcher data memory 622, the GPU fetcher QP memory 704, the local poster QP memory 804, the local poster QP memory 822, the GPU poster QP memory 832, the GPU memory 944, the GPU memory 938, the GPU memory 970, the CPU memory 906, and/or the CPU user memory 956, implements memory 1414.

In at least one embodiment, one or more of the API(s) 1410 is an API to facilitate parallel computing. In at least one embodiment, one or more of the API(s) 1410 is any other API further described herein. In at least one embodiment, one or more of the API(s) 1410 is/are provided by one or more of the driver(s) 1404 and/or one or more of the runtime(s) 1404. In at least one embodiment, one or more of the API(s) 1410 is/are provided by a CUDA user-mode driver. In at least one embodiment, one or more of the API(s) 1410 is/are provided by a CUDA runtime. In at least one embodiment, one or more of the driver(s) 1404 is/are data values and software instructions that, if executed, perform and/or otherwise facilitate operation of one or more of the function(s) 1412 of one or more of the API(s) 1410 during load and execution of one or more portions of at least one of the software program(s) 1402. In at least one embodiment, one or more of the runtime(s) 1404 is/are data values and/or software instructions that, if executed, perform or otherwise facilitate operation of one or more of the function(s) 1412 of one or more of the API(s) 1410 during execution of at least one of the software program(s) 1402. In at least one embodiment, one or more particular ones of the software program(s) 1402 utilize one or more of the API(s) 1410 implemented and/or otherwise provided by one or more of the driver(s) 1404 and/or one or more of the runtime(s) 1404 to perform combined arithmetic operations by the particular software program(s) during execution by one or more PPUs, such as GPUs.

In at least one embodiment, one or more of the software program(s) 1402 utilize one or more of the API(s) 1410 provided by one or more of the driver(s) 1404 and/or one or more of the runtime(s) 1404 to perform combined arithmetic operations of one or more PPUs, such as GPUs. In at least one embodiment, one or more of the API(s) 1410 provide combined arithmetic operations through one or more of the driver(s) 1404 and/or one or more of the runtime(s) 1404, as described above. In at least one embodiment, one or more of the software program(s) 1402 utilize one or more of the API(s) 1410 provided by one or more of the driver(s) 1404 and/or one or more of the runtime(s) 1404 to allocate or otherwise reserve one or more blocks of the memory 1414 of one or more PPUs, such as GPUs. In at least one embodiment, one or more of the software program(s) 1402 utilize one or more of the API(s) 1410 provided by one or more of the driver(s) 1404 and/or one or more of the runtime(s) 1404 to allocate or otherwise reserve blocks of the memory 1414.

In at least one embodiment, to improve usability of one or more particular ones of the software program(s) 1402 and/or improve performance, one or more portions of the particular software programs are to be accelerated by one or more PPUs (such as GPUs). In at least one embodiment, one or more of the function(s) 1412 receive one or more input parameters indicating one or more inputs to one or more neural networks and/or other data to be utilized by the neural network(s), such as one or more hyperparameters of the neural network(s). In at least one embodiment, the input parameter(s) include the one or more inputs and/or the other data. In at least one embodiment, the input parameter(s) include one or more pointers to one or more memory locations where the input(s) and/or the other data is/are stored.

In at least one embodiment, the system 1400 includes at least one processor (e.g., processor(s) 1422 illustrated in FIG. 14B) including one or more circuits to perform one or more software programs to combine two or more of the API(s) 1410 into a single API. In at least one embodiment, the system 1400 includes at least one processor (e.g., processor(s) 1422 illustrated in FIG. 14B) that uses one or more of the API(s) 1410 to perform WQE processing by the GPU instructions 264 of FIG. 2, and/or otherwise perform operations described herein (e.g., in connection with FIGS. 1-13).

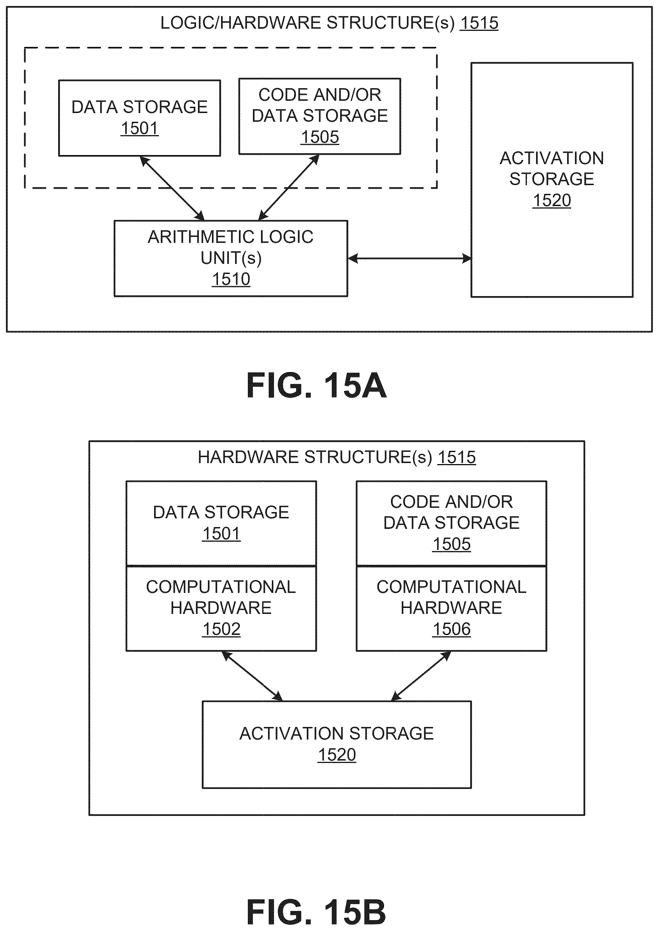

In at least one embodiment, the system 1400 includes at least one processor (e.g., processor(s) 1422 illustrated in FIG. 14B) that uses one or more of the API(s) 1410 to perform one or more operations illustrated in and/or described with respect to one or more of FIGS. 1-13, such as one or more processes or methods illustrated in FIGS. 12 and 13 or portion(s) thereof. In at least one embodiment, the system 1400 includes at least one processor (e.g., processor(s) 1422 illustrated in FIG. 14B) to perform one or more of the function(s) 1412, such as those described in connection with 1-9. In at least one embodiment, one or more of the API(s) 1410 is to be performed by hardware described in connection with FIGS. 15-17.

FIG. 14B is block diagram 1420 illustrating example processor(s) 1422 and the module(s) 1424, according to at least one embodiment. Referring to FIG. 14B, in at least one embodiment, the processor(s) 1422 may be implemented by the processor(s) 210, the processor(s) 236, and/or the processor(s) 248 in FIG. 2. In at least one embodiment, the processor(s) 1422 may perform one or more processes such as those described herein with respect to perform WQE processing by the GPU instructions 264 of FIG. 2, and/or may otherwise perform operations described herein (e.g., in connection with FIGS. 1-13). In at least one embodiment, the processor(s) 1422 perform(s) one or more processes or methods such as those described in connection with FIGS. 12 and 13.

In at least one embodiment, the processor(s) 1422 include one or more processors such as those described in connection with FIGS. 15-17. In at least one embodiment, processor(s) 1422 may be any suitable processing unit and/or combination of processing units, such as one or more CPUs, GPUs, DPUs, GPGPUs, PPUs, and/or variations thereof. The processor(s) 1422 includes the module(s) 1424, which may include a WQE addressing module 1426 to determine where to store one or more WQEs from an application QP, such as the user application QP 114. A WQE processing module 1428 to process the one or more WQEs by the GPU(s) 111. A CQE generation module 1430 to create the one or more CQEs (e.g., the CQE(s) 162) indicating the completion of the one or more WQEs. The module(s) 1424 may be distributed among multiple processors that communicate over a bus, network, by writing to shared memory, and/or any suitable communication process such as those described herein. In at least one embodiment, the module(s) 1424 may include processor executable instructions that implement the processing of a WQE using GPU resources.

As used in any implementation described herein, unless otherwise clear from context or stated explicitly to contrary, a module refers to any combination of software logic, firmware logic, hardware logic, and/or circuitry configured to provide functionality described herein. Software may be embodied as a software package, code and/or instruction set or instructions, and "hardware," as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. Modules may, collectively or individually, be embodied as circuitry that forms part of a larger system, for example, an integrated circuit (IC), system on-chip (SoC), and so forth. a module performs one or more processes in connection with any suitable processing unit and/or combination of processing units, such as one or more CPUs, GPUs, GPGPUs, DPUs, PPUs, and/or variations thereof.

In at least one embodiment, as used in any implementation described herein, unless otherwise clear from context or stated explicitly to contrary, terms such as "module" and nominalized verbs (e.g., image manager, image analyzer, analytics engine, controller, and/or other terms) each refers to any combination of software logic, firmware logic, hardware logic, and/or circuitry configured to provide functionality described herein. In at least one embodiment, software may be embodied as a software package, code and/or instruction set or instructions, and "hardware," as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. In at least one embodiment, modules may, collectively or individually, be embodied as circuitry that forms part of a larger system, for example, an integrated circuit (IC), system on-chip (SoC), and so forth.

### LOGIC

FIG. 15A illustrates logic 1515 which, as described elsewhere herein, can be used in one or more devices to perform operations such as those discussed herein in accordance with at least one embodiment. In at least one embodiment, logic 1515 is used to perform inferencing and/or training operations associated with one or more embodiments. In at least one embodiment, logic 1515 is inference and/or training logic. Details regarding logic 1515 are provided below in conjunction with FIGS. 15A and/or 15B. In at least one embodiment, logic refers to any combination of software logic, hardware logic, and/or firmware logic to provide functionality or operations described herein, wherein logic may be, collectively or individually, embodied as circuitry that forms part of a larger system, for example, an integrated circuit (IC), system-on-chip (SoC), or one or processors (e.g., CPU, GPU).

In at least one embodiment, logic 1515 may include, without limitation, code and/or data storage 1501 to store forward and/or output weight and/or input/output data, and/or other parameters to configure neurons or layers of a neural network trained and/or used for inferencing in aspects of one or more embodiments. In at least one embodiment, logic 1515 may include, or be coupled to code and/or data storage 1501 to store graph code or other software to control timing and/or order, in which weight and/or other parameter information is to be loaded to configure, logic, including integer and/or floating point units (collectively, arithmetic logic units (ALUs)). In at least one embodiment, code, such as graph code, loads weight or other parameter information into processor ALUs based on an architecture of a neural network to which such code corresponds. In at least one embodiment, code and/or data storage 1501 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 1501 may be included with other on-chip or off-chip data storage, including a processor's L1, L2, or L3 cache or system memory.

In at least one embodiment, any portion of code and/or data storage 1501 may be internal or external to one or more processors or other hardware logic devices or circuits. In at least one embodiment, code and/or code and/or data storage 1501 may be cache memory, dynamic randomly addressable memory ("DRAM"), static randomly addressable memory ("SRAM"), non-volatile memory (e.g., flash memory), or other storage. In at least one embodiment, a choice of whether code and/or code and/or data storage 1501 is internal or external to a processor, for example, or including DRAM, SRAM, flash or some other storage type may depend on available storage on-chip versus off-chip, latency requirements of training and/or inferencing functions being performed, batch size of data used in inferencing and/or training of a neural network, or some combination of these factors.

In at least one embodiment, logic 1515 may include, without limitation, a code and/or data storage 1505 to store backward and/or output weight and/or input/output data corresponding to neurons or layers of a neural network trained and/or used for inferencing in aspects of one or more embodiments. In at least one embodiment, code and/or data storage 1505 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, logic 1515 may include, or be coupled to code and/or data storage 1505 to store graph code or other software to control timing and/or order, in which weight and/or other parameter information is to be loaded to configure, logic, including integer and/or floating point units (collectively, arithmetic logic units (ALUs)).

In at least one embodiment, code, such as graph code, causes the loading of weight or other parameter information into processor ALUs based on an architecture of a neural network to which such code corresponds. In at least one embodiment, any portion of code and/or data storage 1505 may be included with other on-chip or off-chip data storage, including a processor's L1, L2, or L3 cache or system memory. In at least one embodiment, any portion of code and/or data storage 1505 may be internal or external to one or more processors or other hardware logic devices or circuits. In at least one embodiment, code and/or data storage 1505 may be cache memory, DRAM, SRAM, non-volatile memory (e.g., flash memory), or other storage. In at least one embodiment, a choice of whether code and/or data storage 1505 is internal or external to a processor, for example, or including DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 1501 and code and/or data storage 1505 may be separate storage structures. In at least one embodiment, code and/or data storage 1501 and code and/or data storage 1505 may be a combined storage structure. In at least one embodiment, code and/or data storage 1501 and code and/or data storage 1505 may be partially combined and partially separate. In at least one embodiment, any portion of code and/or data storage 1501 and code and/or data storage 1505 may be included with other on-chip or off-chip data storage, including a processor's L1, L2, or L3 cache or system memory.

In at least one embodiment, logic 1515 may include, without limitation, one or more arithmetic logic unit(s) ("ALU(s)") 1510, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 1520 that are functions of input/output and/or weight parameter data stored in code and/or data storage 1501 and/or code and/or data storage 1505. In at least one embodiment, activations stored in activation storage 1520 are generated according to linear algebraic and or matrix-based mathematics performed by ALU(s) 1510 in response to performing instructions or other code, wherein weight values stored in code and/or data storage 1505 and/or data storage 1501 are used as operands along with other values, such as bias values, gradient information, momentum values, or other parameters or hyperparameters, any or all of which may be stored in code and/or data storage 1505 or code and/or data storage 1501 or another storage on or off-chip.

In at least one embodiment, ALU(s) 1510 are included within one or more processors or other hardware logic devices or circuits, whereas in another embodiment, ALU(s) 1510 may be external to a processor or other hardware logic device or circuit that uses them (e.g., a coprocessor). In at least one embodiment, ALUs 1510 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 1501, code and/or data storage 1505, and activation storage 1520 may share a processor or other hardware logic device or circuit, whereas in another embodiment, they may be in different processors or other hardware logic devices or circuits, or some combination of same and different processors or other hardware logic devices or circuits. In at least one embodiment, any portion of activation storage 1520 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 1520 may be cache memory, DRAM, SRAM, non-volatile memory (e.g., flash memory), or other storage. In at least one embodiment, activation storage 1520 may be completely or partially within or external to one or more processors or other logical circuits. In at least one embodiment, a choice of whether activation storage 1520 is internal or external to a processor, for example, or including DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, logic 1515 illustrated in FIG. 15A may be used in conjunction with an application-specific integrated circuit ("ASIC"), such as a TensorFlow^{®} Processing Unit from Google, an inference processing unit (IPU) from Graphcore^{™}, or a Nervana^{®} (e.g., "Lake Crest") processor from Intel Corp. In at least one embodiment, logic 1515 illustrated in FIG. 15A may be used in conjunction with central processing unit ("CPU") hardware, graphics processing unit ("GPU") hardware or other hardware, such as field programmable gate arrays ("FPGAs").

FIG. 15B illustrates logic 1515, according to at least one embodiment. In at least one embodiment, logic 1515 is inference and/or training logic. In at least one embodiment, logic 1515 may include, without limitation, hardware logic in which computational resources are dedicated or otherwise exclusively used in conjunction with weight values or other information corresponding to one or more layers of neurons within a neural network. In at least one embodiment, logic 1515 illustrated in FIG. 15B may be used in conjunction with an application-specific integrated circuit (ASIC), such as TensorFlow^{®} Processing Unit from Google, an inference processing unit (IPU) from Graphcore^{™}, or a Nervana^{®} (e.g., "Lake Crest") processor from Intel Corp. In at least one embodiment, logic 1515 illustrated in FIG. 15B may be used in conjunction with central processing unit (CPU) hardware, graphics processing unit (GPU) hardware or other hardware, such as field programmable gate arrays (FPGAs). In at least one embodiment, logic 1515 includes, without limitation, code and/or data storage 1501 and code and/or data storage 1505, which may be used to store code (e.g., graph code), weight values and/or other information, including bias values, gradient information, momentum values, and/or other parameter or hyperparameter information. In at least one embodiment illustrated in FIG. 15B, each of code and/or data storage 1501 and code and/or data storage 1505 is associated with a dedicated computational resource, such as computational hardware 1502 and computational hardware 1506, respectively. In at least one embodiment, each of computational hardware 1502 and computational hardware 1506 includes one or more ALUs that perform mathematical functions, such as linear algebraic functions, only on information stored in code and/or data storage 1501 and code and/or data storage 1505, respectively, result of which is stored in activation storage 1520.

In at least one embodiment, each of code and/or data storage 1501 and 1505 and corresponding computational hardware 1502 and 1506, respectively, correspond to different layers of a neural network, such that resulting activation from one storage/computational pair 1501/1502 of code and/or data storage 1501 and computational hardware 1502 is provided as an input to a next storage/computational pair 1505/1506 of code and/or data storage 1505 and computational hardware 1506, in order to mirror a conceptual organization of a neural network. In at least one embodiment, each of storage/computational pairs 1501/1502 and 1505/1506 may correspond to more than one neural network layer. In at least one embodiment, additional storage/computation pairs (not shown) subsequent to or in parallel with storage/computation pairs 1501/1502 and 1505/1506 may be included in logic 1515.

The GPU(s) 111, the first network interface 105, a PPU, the GPU 545, the GPU 556, the first network interface 105 (e.g., NIC), the second network interface 244 (e.g., NIC), the GPU 918, and/or the GPU 962 may implement the logic/hardware structures 1515 of FIG. 15A. The memory 246, the GPU memory 262, the GPU fetcher memory 274, the GPU fetcher memory 426, the GPU fetcher memory 428, the GPU fetcher data memory 534, the GPU fetcher data memory 622, the GPU fetcher QP memory 704, and/or the GPU fetcher data memory 926 may implement the data storage 1501 and/or the code/data storage 1505.

### DATA CENTER

FIG. 16 illustrates an example data center 1600, in which at least one embodiment may be used. In at least one embodiment, data center 1600 includes a data center infrastructure layer 1610, a framework layer 1620, a software layer 1630 and an application layer 1640.

In at least one embodiment, as shown in FIG. 16, data center infrastructure layer 1610 may include a resource orchestrator 1612, grouped computing resources 1614, and node computing resources ("node C.R.s") 1616(1)-1616(N), where "N" represents a positive integer (which may be a different integer "N" than used in other figures). In at least one embodiment, node C.R.s 1616(1)-1616(N) may include, but are not limited to, any number of central processing units ("CPUs") or other processors (including accelerators, field programmable gate arrays (FPGAs), graphics processors, etc.), memory storage devices 1618(1)-1618(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 1616(1)-1616(N) may be a server having one or more of above-mentioned computing resources.

In at least one embodiment, grouped computing resources 1614 may include separate groupings of node C.R.s housed within one or more racks (not shown), or many racks housed in data centers at various geographical locations (also not shown). In at least one embodiment, separate groupings of node C.R.s within grouped computing resources 1614 may include grouped compute, network, memory or storage resources that may be configured or allocated to support one or more workloads. In at least one embodiment, several node C.R.s including CPUs or processors may be grouped within one or more racks to provide compute resources to support one or more workloads. In at least one embodiment, one or more racks may also include any number of power modules, cooling modules, and network switches, in any combination.

In at least one embodiment, resource orchestrator 1612 may configure or otherwise control one or more node C.R.s 1616(1)-1616(N) and/or grouped computing resources 1614. In at least one embodiment, resource orchestrator 1612 may include a software design infrastructure ("SDI") management entity for data center 1600. In at least one embodiment, resource orchestrator 1612 may include hardware, software or some combination thereof.

In at least one embodiment, as shown in FIG. 16, framework layer 1620 includes a job scheduler 1622, a configuration manager 1624, a resource manager 1626 and a distributed file system 1628. In at least one embodiment, framework layer 1620 may include a framework to support software 1632 of software layer 1630 and/or one or more application(s) 1642 of application layer 1640. In at least one embodiment, software 1632 or application(s) 1642 may respectively include web-based service software or applications, such as those provided by Amazon Web Services, Google Cloud and Microsoft Azure. In at least one embodiment, framework layer 1620 may be, but is not limited to, a type of free and open-source software web application framework such as Apache Spark^{™} (hereinafter "Spark") that may utilize distributed file system 1628 for large-scale data processing (e.g., "big data"). In at least one embodiment, job scheduler 1622 may include a Spark driver to facilitate scheduling of workloads supported by various layers of data center 1600. In at least one embodiment, configuration manager 1624 may be capable of configuring different layers such as software layer 1630 and framework layer 1620 including Spark and distributed file system 1628 for supporting large-scale data processing. In at least one embodiment, resource manager 1626 may be capable of managing clustered or grouped computing resources mapped to or allocated for support of distributed file system 1628 and job scheduler 1622. In at least one embodiment, clustered or grouped computing resources may include grouped computing resources 1614 at data center infrastructure layer 1610. In at least one embodiment, resource manager 1626 may coordinate with resource orchestrator 1612 to manage these mapped or allocated computing resources.

In at least one embodiment, software 1632 included in software layer 1630 may include software used by at least portions of node C.R.s 1616(1)-1616(N), grouped computing resources 1614, and/or distributed file system 1628 of framework layer 1620. In at least one embodiment, one or more types of software may include, but are not limited to, Internet web page search software, e-mail virus scan software, database software, and streaming video content software.

In at least one embodiment, application(s) 1642 included in application layer 1640 may include one or more types of applications used by at least portions of node C.R.s 1616(1)-1616(N), grouped computing resources 1614, and/or distributed file system 1628 of framework layer 1620. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 1624, resource manager 1626, and resource orchestrator 1612 may implement any number and type of self-modifying actions based on any amount and type of data acquired in any technically feasible fashion. In at least one embodiment, self-modifying actions may relieve a data center operator of data center 1600 from making possibly bad configuration decisions and possibly avoiding underutilized and/or poor performing portions of a data center.

In at least one embodiment, data center 1600 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 1600. In at least one embodiment, trained machine learning models corresponding to one or more neural networks may be used to infer or predict information using resources described above with respect to data center 1600 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Logic 1515 are used to perform inferencing and/or training operations associated with one or more embodiments. Details regarding logic 1515 are provided herein in conjunction with FIGS. 15A and/or 15B. In at least one embodiment, logic 1515 may be used in data center 1600 for inferencing or predicting operations based, at least in part, on weight parameters calculated using neural network training operations, neural network functions and/or architectures, or neural network use cases described herein.

Data center operations, such as occur in the data center 1400 involve frequent network communications between processors, such as the first computing system 202, and the second computing system 204. WQE processing may be processed more efficiently using GPU resources, such as GPU(s) 111 in place of DPA resources.

### COMPUTER SYSTEMS

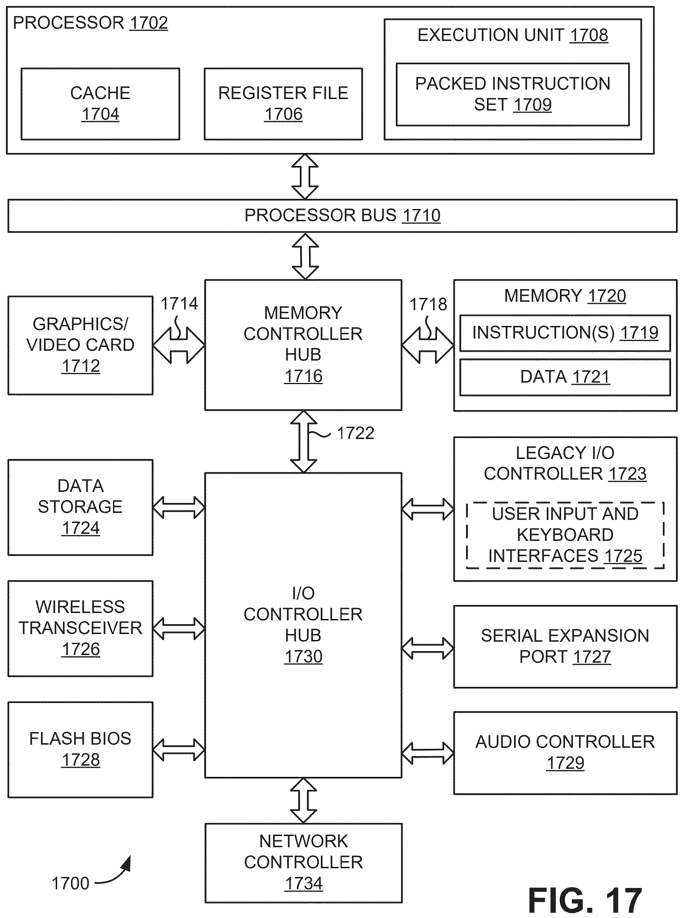

FIG. 17 is a block diagram illustrating an exemplary computer system, which may be a system with interconnected devices and components, a system-on-a-chip (SOC) or some combination thereof formed with a processor that may include execution units to execute an instruction, according to at least one embodiment. In at least one embodiment, a computer system 1700 may include, without limitation, a component, such as a processor 1702 to employ execution units including logic to perform algorithms for process data, in accordance with present disclosure, such as in embodiment described herein. In at least one embodiment, computer system 1700 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 1700 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 1700 may include, without limitation, processor 1702 that may include, without limitation, one or more execution units 1708 to perform machine learning model training and/or inferencing according to techniques described herein. In at least one embodiment, computer system 1700 is a single processor desktop or server system, but in another embodiment, computer system 1700 may be a multiprocessor system. In at least one embodiment, processor 1702 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 1702 may be coupled to a processor bus 1710 that may transmit data signals between processor 1702 and other components in computer system 1700.

In at least one embodiment, processor 1702 may include, without limitation, a Level 1 ("L1") internal cache memory ("cache") 1704. In at least one embodiment, processor 1702 may have a single internal cache or multiple levels of internal cache. In at least one embodiment, cache memory may reside external to processor 1702. Other embodiments may also include a combination of both internal and external caches depending on particular implementation and needs. In at least one embodiment, a register file 1706 may store different types of data in various registers including, without limitation, integer registers, floating point registers, status registers, and an instruction pointer register.

In at least one embodiment, execution unit 1708, including, without limitation, logic to perform integer and floating point operations, also resides in processor 1702. In at least one embodiment, processor 1702 may also include a microcode ("ucode") read only memory ("ROM") that stores microcode for certain macro instructions. In at least one embodiment, execution unit 1708 may include logic to handle a packed instruction set 1709. In at least one embodiment, by including packed instruction set 1709 in an instruction set of a general-purpose processor, along with associated circuitry to execute instructions, operations used by many multimedia applications may be performed using packed data in processor 1702. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, execution unit 1708 may also be used in microcontrollers, embedded processors, graphics devices, DSPs, and other types of logic circuits. In at least one embodiment, computer system 1700 may include, without limitation, a memory 1720. In at least one embodiment, memory 1720 may be a Dynamic Random Access Memory ("DRAM") device, a Static Random Access Memory ("SRAM") device, a flash memory device, or another memory device. In at least one embodiment, memory 1720 may store instruction(s) 1719 and/or data 1721 represented by data signals that may be executed by processor 1702.

In at least one embodiment, a system logic chip may be coupled to processor bus 1710 and memory 1720. In at least one embodiment, a system logic chip may include, without limitation, a memory controller hub ("MCH") 1716, and processor 1702 may communicate with MCH 1716 via processor bus 1710. In at least one embodiment, MCH 1716 may provide a high bandwidth memory path 1718 to memory 1720 for instruction and data storage and for storage of graphics commands, data and textures. In at least one embodiment, MCH 1716 may direct data signals between processor 1702, memory 1720, and other components in computer system 1700 and to bridge data signals between processor bus 1710, memory 1720, and a system I/O interface 1722. In at least one embodiment, a system logic chip may provide a graphics port for coupling to a graphics controller. In at least one embodiment, MCH 1716 may be coupled to memory 1720 through high bandwidth memory path 1718 and a graphics/video card 1712 may be coupled to MCH 1716 through an Accelerated Graphics Port ("AGP") interconnect 1714.

In at least one embodiment, computer system 1700 may use system I/O interface 1722 as a proprietary hub interface bus to couple MCH 1716 to an I/O controller hub ("ICH") 1730. In at least one embodiment, ICH 1730 may provide direct connections to some I/O devices via a local I/O bus. In at least one embodiment, a local I/O bus may include, without limitation, a high-speed I/O bus for connecting peripherals to memory 1720, a chipset, and processor 1702. Examples may include, without limitation, an audio controller 1729, a firmware hub ("flash BIOS") 1728, a wireless transceiver 1726, a data storage 1724, a legacy I/O controller 1723 containing user input and keyboard interfaces 1725, a serial expansion port 1727, such as a Universal Serial Bus ("USB") port, and a network controller 1734. In at least one embodiment, data storage 1724 may include a hard disk drive, a floppy disk drive, a CD-ROM device, a flash memory device, or other mass storage device.

In at least one embodiment, FIG. 17 illustrates a system, which includes interconnected hardware devices or "chips", whereas in other embodiments, FIG. 17 may illustrate an exemplary SoC. In at least one embodiment, devices illustrated in FIG. 17 may be interconnected with proprietary interconnects, standardized interconnects (e.g., PCIe) or some combination thereof. In at least one embodiment, one or more components of computer system 1700 are interconnected using compute express link (CXL) interconnects.

Logic 1515 are used to perform inferencing and/or training operations associated with one or more embodiments. Details regarding logic 1515 are provided herein in conjunction with FIGS. 15A and/or 15B. In at least one embodiment, logic 1515 may be used in computer system 1700 for inferencing or predicting operations based, at least in part, on weight parameters calculated using neural network training operations, neural network functions and/or architectures, or neural network use cases described herein.

Network communications between processors, such as the GPU(s) 111, and one or more other ones of the processor(s) 210 often involve network communications that are initiated by a GPU. WQE processing may be processed more efficiently using GPU resources, such as GPU(s) 111 in place of DPA resources, because of the GPUs parallel processing capabilities. In at least on embodiment, the hardware in the first computing system 202 and/or hardware in the second computing system 204 may implement the computer system 1500.

At least one embodiment of the disclosure can be described in view of the following clauses:
Clause 1. A graphics processing unit (GPU) comprising, one or more circuits to, obtain a Work Queue Element (WQE) associated with data to be processed by a network interface that is separate from the GPU; use the WQE to generate a plurality of WQEs in parallel, each of the plurality of WQEs to be associated with a portion of the data; post the plurality of WQEs to at least one queue pair (QP) accessible by the network interface; and notify the network interface that the plurality of WQEs are available, the plurality of WQEs to instruct the network interface to transmit the data.
Clause 2. The GPU of clause 1, wherein the one or more circuits are to cause at least one completion queue entry (CQE) to be sent to an application associated with the WQE to notify the application that the WQE has been processed.
Clause 3. The GPU of clause 2, wherein the one or more circuits are to receive at least one notification from the network interface indicating that packets transmitting the data were successfully sent; and cause the at least one CQE to be sent in response to receive the at least one notification.
Clause 4. The GPU of any of clauses 1 to 3, wherein the one or more circuits are to generate a plurality of threads to be performed in parallel and to each use the WQE to generate a different one of the plurality of WQEs.
Clause 5. The GPU of any of clauses 1 to 4, wherein using the WQE to generate the plurality of WQEs comprises using GPU threads performed in parallel to modify the data associated with the WQE.
Clause 6. The GPU of any of clauses 1 to 5, wherein the one or more circuits are to receive the WQE from a firmware performed by one or more processors of the network interface, wherein the firmware is to perform a send operation to send the WQE to a memory address indicated by a Receive Work Queue Element (RWQE).
Clause 7. The GPU of any of clauses 1 to 7, wherein the one or more circuits are to receive at least one completion queue entry (CQE) from the network interface indicating that the data was transmitted; and cause the network interface to post the CQE in a completion queue associated with an application that generated the WQE.
Clause 8. A method comprising receiving, by at least one graphics processing unit (GPU), a plurality of Work Queue Elements (WQE) routed by firmware performed by one or more processors of a network interface; using, by the at least one GPU, a plurality of GPU threads to generate new WQEs associated with portions of data associated with the plurality of WQEs in parallel; and sending, by the at least one GPU, a notification to the network interface indicating that the portions of the data associated with the new WQEs are ready for transfer by the network interface.
Clause 9. The method of clause 8, receiving, by the at least one GPU, at least one first CQE from the network interface indicating that the portions of the data associated with the new WQEs have been transferred; and causing, by the at least one GPU, the network interface to transfer at least one second CQE to an application that generated the plurality of WQEs indicating that the data associated with the plurality of WQEs have been transferred.
Clause 10. The method of clause 9, further comprising associating, by the at least one GPU, header information with the portions of the data.
Clause 11. The method of any of clauses 8 to 10, further comprising modifying, by the at least one GPU, one or more of the portions of the data before sending the notification.
Clause 12. The method of any of clauses 8 to 11, wherein modifying the one or more portions of the data comprises at least one of compressing the one or more portions of the data, or manipulating one or more bytes of the one or more portions of the data.
Clause 13. The method of any of clauses 8 to 12, further comprising receiving, by the at least one GPU, the plurality of WQEs from a plurality of queue pairs (QP), the plurality GPU threads to be organized into groups of threads each comprising a portion of the plurality of GPU threads; and using, by the at least one GPU, each of the groups to generate, in parallel, a portion of the new WQEs for a different one of the plurality of WQEs received from one of the QPs.
Clause 14. The method of any of clauses 8 to 13, wherein sending the notification to the network interface comprises updating at least one value stored in at least one register of the network interface.
Clause 15. A system comprising a network interface; and one or more processors separate from the network interface to, obtain a plurality of work requests generated by an application to be processed by the network interface; use the plurality of work requests to generate a plurality of new work requests in parallel; and provide the plurality of new work requests to at least one send queue accessible by the network interface.
Clause 16. The system of clause 15, wherein the one or more processors are to cause at least one completion queue entry (CQE) to be posted to a completion queue (CQ) associated with the application to notify the application that the plurality of work requests have been processed.
Clause 17. The system of clause 16, wherein the one or more processors are to receive at least one notification from the network interface indicating that packets communicating data associated with the plurality of new work requests was successfully sent; and cause the at least one CQE to be posted in response to receiving the at least one notification.
Clause 18. The system of any of clauses 15 to 17, wherein the one or more processors are to use at least one compute unified device architecture (CUDA) kernel to generate the plurality of new work requests.
Clause 19. The system of any of clauses 15 to 18, wherein the one or more processors are to use a group of GPU threads to generate a portion of the plurality of new work requests for each of the plurality of work requests in parallel.
Clause 20. The system of any of clauses 15 to 19, wherein the one or more processors are to obtain the plurality of work requests from a plurality of queue pairs (QPs) associated with the application; and use a different group of GPU threads associated with each of the plurality of QPs to generate a portion of the plurality of new work requests for any of the plurality of work requests obtained from the QP.

In at least one embodiment, a single semiconductor platform may refer to a sole unitary semiconductor-based integrated circuit or chip. In at least one embodiment, multi-chip modules may be used with increased connectivity which simulate on-chip operation, and make substantial improvements over utilizing a conventional central processing unit ("CPU") and bus implementation. In at least one embodiment, various modules may also be situated separately or in various combinations of semiconductor platforms per desires of user.

In at least one embodiment, computer programs in form of machine-readable executable code or computer control logic algorithms are stored in main memory and/or secondary storage such as those described herein. Computer programs, if executed by one or more processors, enable at least one system described herein to perform various functions in accordance with at least one embodiment. In at least one embodiment, memory, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of a CPU such as those described herein, a parallel processing system such as those described herein, an integrated circuit capable of at least a portion of capabilities of both the CPU, the parallel processing system, a chipset (e.g., a group of integrated circuits designed to work and sold as a unit for performing related functions, etc.), and/or any suitable combination of integrated circuit(s).

In at least one embodiment, architecture and/or functionality of various previous figures are implemented in context of a general computer system, a circuit board system, a game console system dedicated for entertainment purposes, an application-specific system, and more. In at least one embodiment, a computer system described herein may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic. In at least one embodiment, a computer system includes or refers to any devices illustrated in any of the drawings and/or described herein.

In at least one embodiment, a parallel processing system includes, without limitation, a plurality of parallel processing units ("PPUs") and associated memories. In at least one embodiment, PPUs are connected to a host processor or other peripheral devices via an interconnect and a switch or multiplexer. In at least one embodiment, a parallel processing system distributes computational tasks across the PPUs, which can be parallelizable - for example, as part of distribution of computational tasks across multiple graphics processing unit ("GPU") thread blocks. In at least one embodiment, memory is shared and accessible (e.g., for read and/or write access) across some or all of the PPUs, although such shared memory may incur performance penalties relative to use of local memory and registers resident to a PPU. In at least one embodiment, operation of the PPUs is synchronized through use of a command such as _syncthreads(), wherein all threads in a block (e.g., executed across multiple PPUs) to reach a certain point of execution of code before proceeding.

In at least one embodiment, one or more techniques described herein utilize a oneAPI programming model. In at least one embodiment, a oneAPI programming model refers to a programming model for interacting with various compute accelerator architectures. In at least one embodiment, oneAPI refers to an application programming interface (API) designed to interact with various compute accelerator architectures. In at least one embodiment, a oneAPI programming model utilizes a DPC++ programming language. In at least one embodiment, a DPC++ programming language refers to a high-level language for data parallel programming productivity. In at least one embodiment, a DPC++ programming language is based at least in part on C and/or C++ programming languages. In at least one embodiment, a oneAPI programming model is a programming model such as those developed by Intel Corporation of Santa Clara, CA.

In at least one embodiment, oneAPI and/or oneAPI programming model is utilized to interact with various accelerator, GPU, processor, and/or variations thereof, architectures. In at least one embodiment, oneAPI includes a set of libraries that implement various functionalities. In at least one embodiment, oneAPI includes at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

In at least one embodiment, a oneAPI DPC++ library, also referred to as oneDPL, is a library that implements algorithms and functions to accelerate DPC++ kernel programming. In at least one embodiment, oneDPL implements one or more standard template library (STL) functions. In at least one embodiment, oneDPL implements one or more parallel STL functions. In at least one embodiment, oneDPL provides a set of library classes and functions such as parallel algorithms, iterators, function object classes, range-based API, and/or variations thereof. In at least one embodiment, oneDPL implements one or more classes and/or functions of a C++ standard library. In at least one embodiment, oneDPL implements one or more random number generator functions.

In at least one embodiment, a oneAPI math kernel library, also referred to as oneMKL, is a library that implements various optimized and parallelized routines for various mathematical functions and/or operations. In at least one embodiment, oneMKL implements one or more basic linear algebra subprograms (BLAS) and/or linear algebra package (LAPACK) dense linear algebra routines. In at least one embodiment, oneMKL implements one or more sparse BLAS linear algebra routines. In at least one embodiment, oneMKL implements one or more random number generators (RNGs). In at least one embodiment, oneMKL implements one or more vector mathematics (VM) routines for mathematical operations on vectors. In at least one embodiment, oneMKL implements one or more Fast Fourier Transform (FFT) functions.

In at least one embodiment, a oneAPI data analytics library, also referred to as oneDAL, is a library that implements various data analysis applications and distributed computations. In at least one embodiment, oneDAL implements various algorithms for preprocessing, transformation, analysis, modeling, validation, and decision making for data analytics, in batch, online, and distributed processing modes of computation. In at least one embodiment, oneDAL implements various C++ and/or Java APIs and various connectors to one or more data sources. In at least one embodiment, oneDAL implements DPC++ API extensions to a traditional C++ interface and enables GPU usage for various algorithms.

In at least one embodiment, a oneAPI deep neural network library, also referred to as oneDNN, is a library that implements various deep learning functions. In at least one embodiment, oneDNN implements various neural network, machine learning, and deep learning functions, algorithms, and/or variations thereof.

In at least one embodiment, a oneAPI collective communications library, also referred to as oneCCL, is a library that implements various applications for deep learning and machine learning workloads. In at least one embodiment, oneCCL is built upon lower-level communication middleware, such as message passing interface (MPI) and libfabrics. In at least one embodiment, oneCCL enables a set of deep learning specific optimizations, such as prioritization, persistent operations, out of order executions, and/or variations thereof. In at least one embodiment, oneCCL implements various CPU and GPU functions.

In at least one embodiment, a oneAPI threading building blocks library, also referred to as oneTBB, is a library that implements various parallelized processes for various applications. In at least one embodiment, oneTBB is utilized for task-based, shared parallel programming on a host. In at least one embodiment, oneTBB implements generic parallel algorithms. In at least one embodiment, oneTBB implements concurrent containers. In at least one embodiment, oneTBB implements a scalable memory allocator. In at least one embodiment, oneTBB implements a work-stealing task scheduler. In at least one embodiment, oneTBB implements low-level synchronization primitives. In at least one embodiment, oneTBB is compiler-independent and usable on various processors, such as GPUs, PPUs, CPUs, and/or variations thereof.

In at least one embodiment, a oneAPI video processing library, also referred to as oneVPL, is a library that is utilized for accelerating video processing in one or more applications. In at least one embodiment, oneVPL implements various video decoding, encoding, and processing functions. In at least one embodiment, oneVPL implements various functions for media pipelines on CPUs, GPUs, and other accelerators. In at least one embodiment, oneVPL implements device discovery and selection in media centric and video analytics workloads. In at least one embodiment, oneVPL implements API primitives for zero-copy buffer sharing.

In at least one embodiment, a oneAPI programming model utilizes a DPC++ programming language. In at least one embodiment, a DPC++ programming language is a programming language that includes, without limitation, functionally similar versions of CUDA mechanisms to define device code and distinguish between device code and host code. In at least one embodiment, a DPC++ programming language may include a subset of functionality of a CUDA programming language. In at least one embodiment, one or more CUDA programming model operations are performed using a oneAPI programming model using a DPC++ programming language.

In at least one embodiment, any application programming interface (API) described herein is compiled into one or more instructions, operations, or any other signal by a compiler, interpreter, or other software tool. In at least one embodiment, compilation includes generating one or more machine-executable instructions, operations, or other signals from source code. In at least one embodiment, an API compiled into one or more instructions, operations, or other signals, when performed, causes one or more processors, such as graphics processors, graphics cores, parallel processor, a CPU, or any other logic circuit further described herein to perform one or more computing operations.

It should be noted that, while example embodiments described herein may relate to a CUDA programming model, techniques described herein can be utilized with any suitable programming model, such HIP, oneAPI, and/or variations thereof.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

In at least one embodiment, one or more components of systems and/or processors disclosed above can communicate with one or more CPUs, ASICs, GPUs, FPGAs, or other hardware, circuitry, or integrated circuit components that include, e.g., an upscaler or upsampler to upscale an image, an image blender or image blender component to blend, mix, or add images together, a sampler to sample an image (e.g., as part of a DSP), a neural network circuit that is configured to perform an upscaler to upscale an image (e.g., from a low resolution image to a high resolution image), or other hardware to modify or generate an image, frame, or video to adjust its resolution, size, or pixels; one or more components of systems and/or processors disclosed above can use components described in this disclosure to perform methods, operations, or instructions that generate or modify an image.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A graphics processing unit (GPU) comprising:
one or more circuits to:
obtain a Work Queue Element (WQE) associated with data to be processed by a network interface that is separate from the GPU;
use the WQE to generate a plurality of WQEs in parallel, each of the plurality of WQEs to be associated with a portion of the data;
post the plurality of WQEs to at least one queue pair (QP) accessible by the network interface; and
notify the network interface that the plurality of WQEs are available, the plurality of WQEs to instruct the network interface to transmit the data.

2. The GPU of claim 1, wherein the one or more circuits are to:
cause at least one completion queue entry (CQE) to be sent to an application associated with the WQE to notify the application that the WQE has been processed, wherein the one or more circuits are to:
receive at least one notification from the network interface indicating that packets transmitting the data were successfully sent; and
cause the at least one CQE to be sent in response to receive the at least one notification.

3. The GPU of claim 1 or 2, wherein the one or more circuits are to:
generate a plurality of threads to be performed in parallel and to each use the WQE to generate a different one of the plurality of WQEs.

4. The GPU of claim 1, 2, or 3, wherein using the WQE to generate the plurality of WQEs comprises using GPU threads performed in parallel to modify the data associated with the WQE.

5. The GPU of claim 1-4, wherein the one or more circuits are to:
receive the WQE from a firmware performed by one or more processors of the network interface, wherein the firmware is to perform a send operation to send the WQE to a memory address indicated by a Receive Work Queue Element (RWQE).

6. The GPU of claim 1-5, wherein the one or more circuits are to:
receive at least one completion queue entry (CQE) from the network interface indicating that the data was transmitted; and
cause the network interface to post the CQE in a completion queue associated with an application that generated the WQE.

7. A method comprising:
receiving, by at least one graphics processing unit (GPU), a plurality of Work Queue Elements (WQE) routed by firmware performed by one or more processors of a network interface;
using, by the at least one GPU, a plurality of GPU threads to generate new WQEs associated with portions of data associated with the plurality of WQEs in parallel; and
sending, by the at least one GPU, a notification to the network interface indicating that the portions of the data associated with the new WQEs are ready for transfer by the network interface.

8. The method of claim 7, further comprising:
receiving, by the at least one GPU, at least one first CQE from the network interface indicating that the portions of the data associated with the new WQEs have been transferred; and
causing, by the at least one GPU, the network interface to transfer at least one second CQE to an application that generated the plurality of WQEs indicating that the data associated with the plurality of WQEs have been transferred, further comprising:
associating, by the at least one GPU, header information with the portions of the data.

9. The method of claim 7 or 8, further comprising:
modifying, by the at least one GPU, one or more of the portions of the data before sending the notification, wherein modifying the one or more portions of the data comprises at least one of compressing the one or more portions of the data, or manipulating one or more bytes of the one or more portions of the data.

10. The method of claim 7, 8, or 9, further comprising:
receiving, by the at least one GPU, the plurality of WQEs from a plurality of queue pairs (QP), the plurality GPU threads to be organized into groups of threads each comprising a portion of the plurality of GPU threads; and
using, by the at least one GPU, each of the groups to generate, in parallel, a portion of the new WQEs for a different one of the plurality of WQEs received from one of the QPs.

11. The method of any of claims 7-10, wherein sending the notification to the network interface comprises updating at least one value stored in at least one register of the network interface.

12. A system comprising:
a network interface; and
one or more processors separate from the network interface to:
obtain a plurality of work requests generated by an application to be processed by the network interface;
use the plurality of work requests to generate a plurality of new work requests in parallel; and
provide the plurality of new work requests to at least one send queue accessible by the network interface.

13. The system of claim 12, wherein the one or more processors are to:
cause at least one completion queue entry (CQE) to be posted to a completion queue (CQ) associated with the application to notify the application that the plurality of work requests have been processed, wherein the one or more processors are to:
receive at least one notification from the network interface indicating that packets communicating data associated with the plurality of new work requests was successfully sent; and
cause the at least one CQE to be posted in response to receiving the at least one notification.

14. The system of claim 12 or 13, wherein the one or more processors are to:
use at least one compute unified device architecture (CUDA) kernel to generate the plurality of new work requests; and
use a group of GPU threads to generate a portion of the plurality of new work requests for each of the plurality of work requests in parallel.

15. The system of claim 12, 13, or 14, wherein the one or more processors are to:
obtain the plurality of work requests from a plurality of queue pairs (QPs) associated with the application; and
use a different group of GPU threads associated with each of the plurality of QPs to generate a portion of the plurality of new work requests for any of the plurality of work requests obtained from the QP.
